# EUROPEAN PATENT SPECIFICATION

(11) **EP 3 557 898 B1**
(45) Date of publication and mention of the grant of the patent: **25.11.2020**
(21) Application number: 17890818.2
(22) Date of filing: 20.03.2017
(51) Int. Cl.: H04W 12/06, H04W 88/00, H04W 8/26, H04W 40/22, H04W 84/04, H04W 88/04, H04W 12/04, H04W 48/04, H04L 29/12, H04W 36/00, H04W 8/00, H04W 76/14

(54) **AUTHORISATION VERIFICATION METHOD AND APPARATUS**
AUTORISIERUNGSPRÜFVERFAHREN UND -VORRICHTUNG
PROCÉDÉ ET APPAREIL DE VÉRIFICATION D'AUTORISATION

(30) Priority: 06.01.2017 WO PCT/CN2017/070477
(43) Date of publication of application: 23.10.2019
(73) Proprietor: Huawei Technologies Co., Ltd., Longgang District Shenzhen, Guangdong 518129 (CN)
(72) Inventor: YING, Jiangwei, Shenzhen Guangdong 518129 (CN); DENG, Qiang, Shenzhen Guangdong 518129 (CN); HUANG, Zhenglei, Shenzhen Guangdong 518129 (CN)
(74) Representative: Isarpatent
(86) International application number: PCT/CN2017/077271
(87) International publication number: WO 2018/126534

(56) References cited:
- WO-A1-2016/155298
- WO-A1-2016/184347
- CN-A- 101 902 835
- CN-A- 102 595 395
- CN-A- 103 460 743
- US-A1- 2014 241 236
- US-A1- 2014 241 237
- US-A1- 2016 262 068
- HUAWEI ET AL: "The ProSe UE-to-network relay with the network authorization", 3GPP DRAFT; S2-133843_3786_PROSE UE-TO-NETWORK REALY_V2.3, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Xiamen, China; 20130923 - 20130927 27 September 2013 (2013-09-27), XP050727137, Retrieved from the Internet: URL:http://www.3gpp.org/ftp/tsg_sa/WG2_Arc h/TSGS2_99_Xiamen/Docs/ [retrieved on 2013-09-27]
- ZTE: "Discussion on layer 2 ProSe UE-to-network relay for feD2D", 3GPP DRAFT; R2-168147 DISCUSSION ON LAYER 2 PROSE UE-TO-NETWORK RELAY FOR FED2D, 3RD GENERATION PARTNERSHIP PROJECT (3GPP), MOBILE COMPETENCE CENTRE ; 650, ROUTE DES LUCIOLES ; F-06921 SOPHIA-ANTIPOLI , vol. RAN WG2, no. Reno, USA; 20161114 - 20161118 13 November 2016 (2016-11-13), XP051177834, Retrieved from the Internet: URL:http://www.3gpp.org/ftp/Meetings_3GPP_ SYNC/RAN2/Docs/ [retrieved on 2016-11-13]
- "Digital cellular telecommunications system (Phase 2+); Universal Mobile Telecommunications System (UMTS); 3G security; Security architecture (3GPP TS 33.102 version 13.0.0 Release 13)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP SA 3, no. V13.0.0, January 2016 (2016-01), XP014266309,

## Description

### TECHNICAL FIELD

This application relates to the field of wireless communications technologies, and in particular, to an authorization and verification method and apparatus.

### BACKGROUND

In an evolved packet system (Evolved Packet System, EPS for short), a remote device such as a wearable device is connected to a network by using a relay device, so as to reduce power consumption of the remote device. When the remote device is connected to the network by using the relay device, the remote device needs to use a radio bearer of the relay device. Therefore, mapping of a data bearer relationship between the remote device and the relay device needs to be completed on the network. In this case, the network needs to verify validity of the remote device and the relay device and verify an association relationship between the remote device and the relay device.

In the prior art, when the relay device is a layer 3 relay, the network does not store a context relationship of the remote device, and a data channel of the remote device does not exist between a base station and the network. In this case, the base station and the network transmit data of the remote device through a data channel of the relay device. In this case, the network verifies the association relationship between the remote device and the relay device in the following manner. Specifically, first, the remote device obtains a relay discovery parameter and an address of a key management function entity (ProSe key Management Function, PKMF for short) from a proximity-based services function, also as ProSe function (Proximity Service Function, PF for short), then obtains a discovery security parameter from the PKMF according to the address of the PKMF, and sends a key request to the PKMF to obtain a root key used for relay communication. Second, the relay device obtains the relay discovery parameter and the address of the PKMF from the PF, and obtains the discovery security parameter from the PKMF. Further, if the remote device needs to access the network by using the relay device, the remote device and the relay device perform a discovery process based on the parameter obtained from the PF. Then, after the discovery process is successfully completed, the remote device sends a communication request to the relay device, so as to trigger the relay device to send an authorization and key request to the PKMF. The PKMF checks whether the remote device is allowed to access the network by using the relay device, generates a short-range communication key, and feeds back, to the relay device, a key response that includes content such as the communication key and a key generation parameter. The relay device forwards the key generation parameter to the remote device, and the remote device generates a communication key based on the key generation parameter. If the communication key generated on the remote device side is consistent with the communication key received by the relay device, it indicates that authentication and authorization check succeeds, so that the remote device can connect to the network by using the relay device.

However, the remote device may also be connected to the network by using a layer 2 relay. Because a protocol stack structure of the layer 2 relay is different from that of the layer 3 relay, when the layer 2 relay is selected as the relay device, corresponding context information and a data channel of the remote device are established for the remote device on the base station and a core network. In this case, if an authorization and verification method corresponding to the layer 3 relay is still used to verify the association relationship between the remote device and the relay device, a complex and tedious parameter configuration procedure and authorization check procedure of the layer 3 solution are required. As a result, in an entire authentication and authorization process, network configuration requirements are high, network overheads are large, and verification efficiency is low.

WO 2016/184347 A1 discloses a method and an apparatus for providing a relay service. A second message sent by an MME is received by a P-GW, where the second message includes a first identifier of remote UE; an uplink packet filter of the remote UE is determined according to the first identifier of the remote UE; and an uplink TFT of relay UE is determined, where the uplink TFT includes the uplink packet filter of the remote UE, and the uplink packet filter of the remote UE is used by the relay UE to map an uplink data packet of the remote UE to an EPS bearer of the relay UE.

Document "The ProSe UE-to-network relay with the network authorization" from Huawei and Hisilicon discloses a solution for ProSe UE-to-network Relay in order to address the requirements on UE-to-network relay specified in TS 22.278 and TS 22.468.

WO 2016/155298 A1 discloses a relay UE access control method and an apparatus.

Document "Discussion on layer 2 ProSe UE-to-network relay for feD2D" from ZTE discloses an analysis of the detailed design of radio protocol stack for Layer 2 UE to network relay.

### SUMMARY

Embodiments of this application provide an authorization and verification method and apparatus, to resolve a problem of high network configuration requirements, large network overheads, and low verification efficiency in an authentication and authorization process for an association relationship between a remote device and a relay device.

A first aspect of the embodiments of this application provides an authorization and verification method, where the method is described from a perspective of a mobility management entity of a relay device, and the method includes: receiving, by the mobility management entity of the relay device, a first request message that includes an identifier of a remote device and that is sent by the relay device, triggering verification on an association relationship between the remote device and the relay device based on the first request message, generating a first response message after determining that the association relationship is verified, and sending the first response message to the relay device, where the triggering verification on an association relationship between the remote device and the relay device based on the first request message includes: sending a second request message that includes the identifier of the remote device to a mobility management entity of the remote device, and receiving a second response message sent by the mobility management entity of the remote device after the mobility management entity of the remote device performs security processing on the remote device based on the second request message.

In this method, for a layer 2 relay device, a verification solution for the association relationship between the remote device and the relay device is designed. On the mobility management entity side of the relay device, verification on the association relationship between the remote device and the relay device is triggered based on the first request message sent from the relay device. Optionally, verification on the association relationship may be implemented on the mobility management entity side of the relay device, or verification on the association relationship may be implemented on the mobility management entity side of the remote device. In this way, a complex and tedious parameter configuration procedure and authorization check procedure that need to be performed in an existing layer 3 relay solution can be avoided, so that compared with the existing layer 3 solution, a layer 2 solution of this application reduces network configuration requirements, reduces network overheads, and improves verification efficiency.

Optionally, the triggering, by the mobility management entity of the relay device, verification on an association relationship between the remote device and the relay device based on the first request message further includes: obtaining, by the mobility management entity of the relay device, first authorization information based on the first request message, and verifying, based on the identifier of the remote device, an identifier of the relay device, and the first authorization information, whether the remote device is allowed to access a network by using the relay device. Optionally, when the mobility management entity of the relay device verifies the association relationship between the remote device and the relay device by itself, the mobility management entity of the relay device needs to first obtain a context of the relay device, and obtain, from the context, a list of remote devices that have an authorization relationship with the relay device, namely, the first authorization information, so as to verify the association relationship. After the mobility management entity of the relay device learns of the identifier of the remote device, the identifier of the relay device, and the first authorization information, the mobility management entity of the relay device determines whether the first authorization information includes the association relationship between the relay device and the remote device. When the first authorization information includes the association relationship between the relay device and the remote device, it indicates that the remote device is allowed to access the network by using the relay device; otherwise, the remote device is not allowed to access the network by using the relay device.

Optionally, the obtaining, by the mobility management entity of the relay device, first authorization information based on the first request message includes: after the relay device successfully registers with the network, obtaining the first authorization information from a user data management entity and/or a ProSe function based on the identifier of the relay device. That is, after the relay device successfully registers with the network, both the user data management entity and/or the ProSe function in the network store the first authorization information of the relay device that is related to the remote device. For the first authorization information of the relay device that is related to the remote device in the user data management entity, the mobility management entity of the relay device directly obtains the first authorization information from the user data management entity. A manner in which the mobility management entity of the relay device obtains the first authorization information from the ProSe function may be as follows: When the mobility management entity of the relay device may directly communicate with the ProSe function, that is, there is a direct interface between the two, the mobility management entity of the relay device directly obtains the first authorization information from the ProSe function. When the mobility management entity of the relay device cannot directly communicate with the ProSe function, that is, there is no direct interface between the two, the ProSe function sends the first authorization information to the mobility management entity of the relay device by using an HSS.

Optionally, if the first request message further includes a relay service code, the triggering, by the mobility management entity of the relay device, verification on an association relationship between the remote device and the relay device based on the first request message includes: verifying, by the mobility management entity of the relay device based on the identifier of the remote device, the identifier of the relay device, the relay service code, and the first authorization information, whether the remote device is allowed to access the network by using the relay device.

When a communication request sent by the remote device to the relay device further includes the relay service code, the first request message generated by the relay device through integration also includes the relay service code. The relay service code is used to represent a service type to be requested by the remote device, and different relay service codes are corresponding to different service types. Therefore, when the mobility management entity of the relay device verifies the association relationship between the remote device and the relay device, the relay service code is further used. In this case, the first authorization information is a relationship list among a relay device, a remote device that has an authorization relationship with the relay device, and a corresponding relay service code.

Optionally, the authorization and verification method in this application further includes: sending, by the mobility management entity of the relay device, a third request message that includes the identifier of the remote device and the identifier of the relay device to the ProSe function, so that the ProSe function verifies, based on the third request message, whether the remote device is allowed to access the network by using the relay device. In an example, in an implementation in which the mobility management entity of the terminal device triggers verification on the association relationship between the remote device and the relay device, the mobility management entity of the relay device may perform verification by itself, or the mobility management entity of the relay device may send the second request message to the mobility management entity of the remote device, so that the mobility management entity of the remote device performs verification. In addition, the mobility management entity of the relay device may send the third request message to the ProSe function, so that the ProSe function performs verification.

Optionally, the authorization and verification method in this application further includes: receiving, by the mobility management entity of the relay device, a key and a security parameter required for generating the key that are sent by the mobility management entity of the remote device, and sending the key and the security parameter required for generating the key to the relay device.

If the remote device wants to access the network by using the relay device, the remote device and the relay device need to have a key for protecting communication between the remote device and the relay device. Therefore, the mobility management entity of the relay device further needs to receive the key and the security parameter required for generating the key that are sent by the mobility management entity of the remote device, and send the key and the security parameter required for generating the key to the relay device, so that the relay device holds the key and the security parameter required for generating the key.

Optionally, when the association relationship between the remote device and the relay device is verified by the mobility management entity of the relay device, the mobility management entity of the remote device, or the ProSe function, but the second response message received by the mobility management entity of the relay device does not carry the key used to protect communication security between the remote device and the relay device and the security parameter required for generating the key, the mobility management entity of the relay device sends a key request message to a security function entity. Based on the identifier of the remote device in the key request message, the security function entity searches for and obtains the key used to protect communication security between the remote device and the relay device, and the security parameter required for generating the key, and feeds back the key and the security parameter required for generating the key to the mobility management entity of the relay device. Finally, the mobility management entity of the relay device feeds back the key and the security parameter required for generating the key to the relay device, so that the relay device performs corresponding processing on the key and the security parameter.

In this way, even if the first response message generated by the mobility management entity of the relay device does not carry the key used to protect communication security between the remote device and the relay device, and the security parameter required for generating the key, the relay device can still obtain the key used to protect communication security between the remote device and the relay device, and the security parameter required for generating the key, thereby ensuring that the remote device can access the network by using the relay device.

Optionally, when the first request message further includes a non-access stratum message of the remote device and a check code of the non-access stratum message, the second request message further includes the non-access stratum message of the remote device and the check code of the non-access stratum message. In this case, the mobility management entity of the remote device may further verify the non-access stratum message of the remote device, and specifically, verify the check code of the non-access stratum message of the remote device based on non-access stratum context information of the remote device.

A second aspect of the embodiments of this application provides an authorization and verification method, where the method is described from a perspective of a mobility management entity of a remote device, and the method includes: receiving, by the mobility management entity of the remote device, a second request message that is sent by a mobility management entity of a relay device and that includes an identifier of the remote device, performing security processing on the remote device based on the second request message, and sending a second response message to the mobility management entity of the relay device after performing security processing on the remote device.

In an example, when the mobility management entity of the relay device triggers verification on an association relationship between the remote device and the relay device, the mobility management entity of the remote device may receive the second request message sent by the mobility management entity of the relay device, perform security processing on the remote device based on the second request message or further verify the association relationship between the remote device and the relay device, generate the second response message based on a result of security processing, and feed back the second response message to the mobility management entity of the relay device. Verification on an authorization relationship is performed by the mobility management entity of the remote device, thereby reducing network configuration requirements, reducing network overheads, and improving verification efficiency.

Optionally, the performing, by the mobility management entity of the remote device, security processing on the remote device based on the second request message includes: obtaining, by the mobility management entity of the remote device, second authorization information based on the second request message, and verifying, based on the identifier of the remote device, an identifier of the relay device, and the second authorization information, whether the remote device is allowed to access a network by using the relay device. Optionally, the obtaining, by the mobility management entity of the remote device, second authorization information based on the second request message includes: after the remote device successfully registers with the network, obtaining, by the mobility management entity of the remote device, the second authorization information from a user data management entity and/or a ProSe function based on the identifier of the remote device. Then the remote device searches for and obtains the second authorization information in context information of the remote device based on the identifier of the remote device in the second request message.

After the remote device successfully registers with the network, the second authorization information of the remote device that is related to the relay device is stored in the user data management entity and/or the ProSe function in the network. Therefore, the mobility management entity of the remote device may obtain the second authorization information from the user data management entity and/or the ProSe function based on the identifier of the remote device, and further determine, based on the identifier of the remote device, the identifier of the relay device, and the obtained second authorization information, whether the second authorization information includes the association relationship between the remote device and the relay device. When the second authorization information includes the association relationship between the remote device and the relay device, it indicates that the remote device is allowed to access the network by using the relay device; otherwise, the remote device is not allowed to access the network by using the relay device. Optionally, the second authorization information is a list of relay devices that have an authorization relationship with the remote device.

Optionally, if the second request message further includes a relay service code, the performing, by the mobility management entity of the remote device, security processing on the remote device based on the second request message includes: verifying, by the mobility management entity of the remote device based on the identifier of the remote device, the identifier of the relay device, the relay service code, and the second authorization information, whether the remote device is allowed to access the network by using the relay device. In this case, the second authorization information is a relationship list between a relay device that has an authorization relationship with the remote device and a corresponding relay service code. In this way, when the mobility management entity of the remote device determines the association relationship between the remote device and the relay device, the relay service code is added to a determining condition, that is, a service type of a service requested by the remote device is added, and a determining result is more accurate.

Optionally, the performing, by the mobility management entity of the remote device, security processing on the remote device based on the second request message includes: obtaining, by the mobility management entity of the remote device, non-access stratum context information of the remote device based on the identifier of the remote device in the second request message, and verifying a check code of a non-access stratum message of the remote device based on the non-access stratum context information. In this case, the second request message includes the non-access stratum message of the remote device, the check code of the non-access stratum message, and the identifier of the remote device.

In this embodiment, when the first request message further includes the non-access stratum message of the remote device and the check code of the non-access stratum message, the second request message also includes the non-access stratum message of the remote device and the check code of the non-access stratum message. In this case, the mobility management entity of the remote device may further verify the non-access stratum message of the remote device, and specifically, verify the check code of the non-access stratum message of the remote device based on the non-access stratum context information of the remote device. In this way, integrity of the non-access stratum message is checked, so as to complete security authentication between the remote device and the relay device.

Optionally, the authorization and verification method further includes: obtaining, by the mobility management entity of the remote device, the non-access stratum context information of the remote device based on the identifier of the remote device in the second request message, generating, based on the non-access stratum context information, a key used to protect communication security between the remote device and the relay device, and sending the key and a security parameter required for generating the key to the mobility management entity of the relay device.

In this embodiment, to ensure communication security between the remote device and the relay device, the mobility management entity of the remote device obtains the non-access stratum context message of the remote device based on the identifier of the remote device that needs to communicate, where the non-access stratum context message stores the security parameter required for generating the key. In addition, because the mobility management entity of the remote device generally does not directly communicate with the relay device, after the mobility management entity of the remote device generates the key used to protect communication security between the remote device and the relay device, the mobility management entity of the remote device needs to send the key and the security parameter required for generating the key to the mobility management entity of the relay device, so that the mobility management entity of the relay device sends the key and the security parameter required for generating the key to the relay device.

Optionally, the authorization and verification method further includes: sending, by the mobility management entity of the remote device, a key request message including the identifier of the remote device to a security function entity, so that the security function entity obtains, based on the key request message, the key used to protect communication security between the remote device and the relay device and the security parameter required for generating the key, and feeds back the key and the security parameter required for generating the key to the mobility management entity of the remote device, so as to send the key and the security parameter required for generating the key to the relay device by using the mobility management entity of the relay device.

Optionally, when the association relationship between the remote device and the relay device is verified by the mobility management entity of the relay device, the mobility management entity of the remote device, or the ProSe function, but integrity check on the NAS message of the remote device fails, or the NAS message of the remote device does not have integrity protection, or the first request message and the second request message do not carry the NAS message of the remote device, the security function entity may obtain the key used to protect communication security between the remote device and the relay device, and the security parameter required for generating the key, so as to ensure normal communication between the remote device and the relay device.

A third aspect of the embodiments of this application provides an authorization and verification method, where the method is described from a perspective of a relay device, and the method includes: receiving, by the relay device, a communication request that is sent by a remote device and that includes an identifier of the remote device, generating a first request message based on the communication request, sending the first request message to a mobility management entity of the relay device, receiving a first response message sent by the mobility management entity of the relay device after the mobility management entity of the relay device determines that an association relationship is verified, and sending a communication response to the remote device based on the first response message.

In this method, when the communication response is used to represent that the relationship is verified, and the remote device generates a key used to protect communication security between the remote device and the relay device, the remote device may be connected to a network by using the relay device. An implementation solution is simple, network overheads are low, and verification efficiency is high.

Optionally, the authorization and verification method further includes: receiving, by the relay device, a key that is sent by the mobility management entity of the relay device and that is used to protect communication security between the remote device and the relay device, and a security parameter required for generating the key, where the sending a communication response to the remote device based on the first response message includes: sending, by the relay device, the security parameter to the remote device by using the communication response, so that the remote device generates, based on the security parameter, the key used to protect communication security between the remote device and the relay device.

After receiving the key and the security parameter required for generating the key, the relay device saves the key by itself, and sends, by using the communication response, the security parameter required for generating the key to the remote device. In this way, the remote device may generate by itself, based on the security parameter, the key used to protect communication security between the remote device and the relay device. If the key on the remote device side is consistent with the key on the relay device side, it indicates that authentication and authorization check between the remote device and the relay device succeeds, and the remote device can send data to the network by using the relay device.

A fourth aspect of the embodiments of this application provides an authorization and verification method. The method is described from a perspective of a network-side device. The network-side device may be a mobility management entity of a relay device, may be a mobility management entity of a remote device, or may be a ProSe function. The method includes: receiving, by the network-side device, a first request message that is sent by the relay device and that includes an identifier of the remote device, triggering verification on an association relationship between the remote device and the relay device based on the first request message, and sending a first response message to the relay device after determining that the association relationship is verified.

When the mobility management entity of the remote device and the mobility management entity of the relay device are a same mobility management entity, the mobility management entity of the remote device and the mobility management entity of the relay device may be referred to as a network-side device. That is, the network-side device in this embodiment may be implemented by any one of the mobility management entity of the remote device and the mobility management entity of the relay device. Certainly, in an embodiment, the network-side device may alternatively be implemented by the ProSe function.

Optionally, the triggering, by the network-side device, verification on an association relationship between the remote device and the relay device based on the first request message includes: obtaining, by the network-side device, first authorization information based on the first request message, and verifying, based on the identifier of the remote device, an identifier of the relay device, and the first authorization information, whether the remote device is allowed to access a network by using the relay device. The obtaining, by the network-side device, first authorization information based on the first request message includes: after the relay device and the remote device successfully register with the network, obtaining, by the network-side device, the first authorization information from a user data management entity and/or the ProSe function, and storing the first authorization information in context information of the remote device and/or context information of the relay device; and searching for and obtaining, by the network-side device, the first authorization information based on the identifier of the remote device and/or the identifier of the relay device in the first request message.

In an embodiment, when the network-side device is the mobility management entity of the relay device, after the relay device successfully registers with the network, the network-side device obtains the first authorization information from the user data management entity and/or the ProSe function based on the identifier of the relay device. In this case, the first authorization information refers to authorization information of the relay device.

In another embodiment, when the network-side device is the mobility management entity of the remote device, after the remote device successfully registers with the network, the network-side device obtains the first authorization information from the user data management entity and/or the ProSe function based on the identifier of the remote device. In this case, the first authorization information refers to authorization information of the remote device.

In still another embodiment, when the network-side device is the ProSe function, after the remote device and the relay device successfully register with the network, the network-side device separately obtains the first authorization information from the user data management entity and/or the ProSe function based on the identifier of the relay device and the identifier of the remote device. In this case, the first authorization information includes both the authorization information of the remote device and the authorization information of the relay device.

Optionally, if the first request message further includes a relay service code, the triggering, by the network-side device, verification on an association relationship between the remote device and the relay device based on the first request message includes: verifying, by the network-side device based on the identifier of the remote device, the identifier of the relay device, the relay service code, and the first authorization information, whether the remote device is allowed to access the network by using the relay device.

Optionally, the triggering, by the network-side device, verification on an association relationship between the remote device and the relay device based on the first request message includes: sending, by the network-side device, a second request message to a first mobility management entity, so that the first mobility management entity verifies, based on the second request message, whether the remote device is allowed to access the network by using the relay device. In this case, when the network-side device is the mobility management entity of the relay device, the first mobility management entity is the ProSe function or the mobility management entity of the remote device; or when the network-side device is the mobility management entity of the remote device, the first mobility management entity is the ProSe function or the mobility management entity of the relay device; or when the network-side device is the ProSe function, the first mobility management entity is the mobility management entity of the remote device or the mobility management entity of the relay device.

Optionally, when the first request message includes a non-access stratum message of the remote device and a check code of the non-access stratum message, the second request message includes the non-access stratum message of the remote device, the check code of the non-access stratum message, and the identifier of the remote device. The triggering, by the network-side device, verification on an association relationship between the remote device and the relay device based on the first request message includes: sending, by the network-side device, a second request message to the mobility management entity of the remote device, so that the mobility management entity of the remote device performs security processing on the remote device based on the second request message. In this case, the network-side device is the mobility management entity of the relay device, or the network-side device is the ProSe function.

Optionally, when the network-side device is the mobility management entity of the remote device, the receiving, by the network-side device, a first request message that is sent by the relay device includes: receiving, by the network-side device, the first request message forwarded from the relay device by using a base station, where the first request message further includes the identifier of the relay device.

Optionally, when the first request message includes the non-access stratum message of the remote device and the check code of the non-access stratum message, the triggering, by the network-side device, verification on an association relationship between the remote device and the relay device based on the first request message includes: obtaining, by the network-side device, non-access stratum context information of the remote device based on the identifier of the remote device, and verifying the check code of the non-access stratum message based on the non-access stratum context information.

Optionally, the authorization and verification method further includes: sending, by the network-side device, a second request message to the first mobility management entity, so that the first mobility management entity obtains the non-access stratum context information of the remote device based on the identifier of the remote device, generates, based on the non-access stratum context information, a key used to protect communication security between the remote device and the relay device, and feeds back the key and a security parameter required for generating the key to the network-side device; and sending, by the network-side device, the key and the security parameter required for generating the key to the relay device, so that the relay device returns the security parameter to the remote device, and the remote device generates, based on the security parameter, the key used to protect communication security between the remote device and the relay device. In this case, the network-side device is the mobility management entity of the relay device, and the first mobility management entity is the ProSe function or the mobility management entity of the remote device.

Optionally, the authorization and verification method further includes: obtaining, by the network-side device, the non-access stratum context information of the remote device based on the identifier of the remote device, generating, based on the non-access stratum context information, the key used to protect communication security between the remote device and the relay device, and feeding back the key and the security parameter required for generating the key to the mobility management entity of the relay device, so that the mobility management entity of the relay device forwards the key and the security parameter required for generating the key to the relay device, the relay device returns the security parameter to the remote device, and the remote device generates, based on the security parameter, the key used to protect communication security between the remote device and the relay device. In this case, the network-side device is the mobility management entity of the remote device or the ProSe function.

Optionally, the key is generated by the mobility management entity of the remote device based on a basic security key of the remote device.

Optionally, the mobility management entity of the relay device stores context information of the relay device, the mobility management entity of the remote device stores context information of the remote device, and the ProSe function stores the context information of the relay device and the context information of the remote device.

Optionally, the authorization and verification method further includes: sending, by the network-side device, a key request message including the identifier of the remote device to a security function entity, so that the security function entity obtains, based on the key request message, the key used to protect communication security between the remote device and the relay device and the security parameter required for generating the key, and feeds back the key and the security parameter required for generating the key to the network-side device, where the key request message includes the identifier of the remote device.

A fifth aspect of the embodiments of this application provides an authorization and verification apparatus, where the apparatus includes a module or a means (means) for performing the method provided in the first aspect and the various implementations of the first aspect.

A sixth aspect of the embodiments of this application provides an authorization and verification apparatus, where the apparatus includes a module or a means (means) for performing the method provided in the second aspect and the various implementations of the second aspect.

A seventh aspect of the embodiments of this application provides an authorization and verification apparatus, where the apparatus includes a module or a means (means) for performing the method provided in the third aspect and the various implementations of the third aspect.

An eighth aspect of the embodiments of this application provides an authorization and verification apparatus, where the apparatus includes a module or a means (means) for performing the method provided in the fourth aspect and the various implementations of the fourth aspect.

A ninth aspect of the embodiments of this application provides an authorization and verification apparatus, and the apparatus includes a processor and a memory. The memory is configured to store a program. The processor invokes the program stored in the memory, to perform the method provided in the first aspect of this application.

A tenth aspect of the embodiments of this application provides an authorization and verification apparatus, and the apparatus includes a processor and a memory. The memory is configured to store a program. The processor invokes the program stored in the memory, to perform the method provided in the second aspect of this application.

An eleventh aspect of the embodiments of this application provides an authorization and verification apparatus, and the apparatus includes a processor and a memory. The memory is configured to store a program. The processor invokes the program stored in the memory, to perform the method provided in the third aspect of this application.

A twelfth aspect of the embodiments of this application provides an authorization and verification apparatus, and the apparatus includes a processor and a memory. The memory is configured to store a program. The processor invokes the program stored in the memory, to perform the method provided in the fourth aspect of this application.

A thirteenth aspect of the embodiments of this application provides an authorization and verification apparatus, including at least one processing element (or chip) configured to perform the method in the first aspect.

A fourteenth aspect of the embodiments of this application provides an authorization and verification apparatus, including at least one processing element (or chip) configured to perform the method in the second aspect.

A fifteenth aspect of the embodiments of this application provides an authorization and verification apparatus, including at least one processing element (or chip) configured to perform the method in the third aspect.

A sixteenth aspect of the embodiments of this application provides an authorization and verification apparatus, including at least one processing element (or chip) configured to perform the method in the fourth aspect.

A seventeenth aspect of the embodiments of this application provides a program. The program is used to perform the method in the first aspect when being executed by a processor.

An eighteenth aspect of the embodiments of this application provides a program product, for example, a computer readable storage medium, including the program in the seventeenth aspect.

A nineteenth aspect of the embodiments of this application provides a program. The program is used to perform the method in the second aspect when being executed by a processor.

A twentieth aspect of the embodiments of this application provides a program product, for example, a computer readable storage medium, including the program in the nineteenth aspect.

A twenty-first aspect of the embodiments of this application provides a program. The program is used to perform the method in the third aspect when being executed by a processor.

A twenty-second aspect of the embodiments of this application provides a program product, for example, a computer readable storage medium, including the program in the twenty-first aspect.

A twenty-third aspect of the embodiments of this application provides a program. The program is used to perform the method in the fourth aspect when being executed by a processor.

A twenty-fourth aspect of the embodiments of this application provides a program product, for example, a computer readable storage medium, including the program in the twenty-third aspect.

A twenty-fifth aspect of the embodiments of this application provides an authorization and verification method, where the method is described from a perspective of a mobility management entity of a remote device, and the method includes:
receiving, by the mobility management entity of the remote device, an initial device message sent by a base station, where the initial device message includes a non-access stratum message of the remote device and an identifier of a relay device;
triggering, by the mobility management entity of the remote device based on the initial device message, verification on an association relationship between the remote device and the relay device; and
after determining that the association relationship is verified, sending, by the mobility management entity of the remote device, an initial context setup request message to the base station.

Optionally, the triggering, by the mobility management entity of the remote device based on the initial device message, verification on an association relationship between the remote device and the relay device includes:
obtaining, by the mobility management entity of the remote device, authorization relationship information based on an identifier of the remote device; and
verifying, by the mobility management entity of the remote device based on the identifier of the remote device, the identifier of the relay device, and the authorization relationship information, whether the remote device is allowed to access a network by using the relay device; where
the identifier of the remote device is included in the non-access stratum message of the remote device, and/or the identifier of the remote device is included in the initial device message.

Optionally, before the receiving, by the mobility management entity of the remote device, an initial device message sent by a base station, the mobility management entity of the remote device obtains the authorization relationship information from a user data management entity and/or a ProSe function based on the identifier of the remote device; and stores the authorization relationship information on the mobility management entity of the remote device.

Optionally, the triggering, by the mobility management entity of the remote device based on the initial device message, verification on an association relationship between the remote device and the relay device includes:
obtaining, by the mobility management entity of the remote device, non-access stratum context information of the remote device based on the identifier of the remote device, and performing integrity check on the non-access stratum message of the remote device.

Optionally, the method further includes:
obtaining, by the mobility management entity of the remote device, the non-access stratum context information of the remote device based on the identifier of the remote device;
generating, by the mobility management entity of the remote device based on the non-access stratum context information, a key used to protect communication security between the remote device and the relay device; and
sending, by the mobility management entity of the remote device to the base station by using the initial context setup request message, the key and a security parameter required for generating the key.

Optionally, the method further includes:
sending, by the mobility management entity of the remote device, a first verification request message to a mobility management entity of the relay device, so that the mobility management entity of the relay device verifies the association relationship between the remote device and the relay device based on the first verification request message, where the first verification request message includes the identifier of the remote device and the identifier of the relay device.

Optionally, the method further includes:
sending, by the mobility management entity of the remote device, a key request message to a security function entity, so that the security function entity obtains, based on the key request message, the key used to protect communication security between the remote device and the relay device and the security parameter required for generating the key; and feeds back the key and the security parameter required for generating the key to the mobility management entity of the remote device, where the key request message includes the identifier of the remote device.

A twenty-sixth aspect of the embodiments of this application provides an authorization and verification method, where the method is described from a perspective of a base station, and the method includes:
receiving, by the base station, a first radio resource control message sent by a relay device, where the first radio resource control message includes a non-access stratum message of a remote device;
identifying, by the base station based on the first radio resource control message, that the remote device requests to access a network by using the relay device, obtaining an identifier of the relay device, and sending the identifier of the relay device and the non-access stratum message of the remote device to a mobility management entity of the remote device by using an initial device message;
receiving, by the base station, an initial context setup request message sent by the mobility management entity of the remote device after the mobility management entity of the remote device determines that an association relationship between the remote device and the relay device is verified; and
setting up, by the base station, context information for the remote device based on the initial context setup request message, and sending a second radio resource control message to the relay device.

Optionally, the obtaining, by the base station, an identifier of the relay device includes:
obtaining, by the base station, the identifier of the relay device from context information of the relay device that is stored by the base station, or obtaining, by the base station, the identifier of the relay device from the first radio resource control message.

Optionally, an identifier of the remote device is included in the non-access stratum message of the remote device, and/or an identifier of the remote device is included in the initial device message.

Optionally, the method further includes:
setting up, by the base station, a mapping relationship between the remote device and the relay device based on the initial context setup request message.

Optionally, when the mobility management entity of the remote device generates a key used to protect communication security between the remote device and the relay device, the method further includes:
receiving, by the base station, the key used to protect communication security between the remote device and the relay device and a security parameter required for generating the key that are sent by a mobility management entity of the relay device.

Optionally, the method further includes:
sending, by the base station, a third radio resource control message to the remote device, so that the remote device generates, based on the third radio resource control message, the key used to protect communication security between the remote device and the relay device, where the third radio resource control message includes the security parameter required for generating the key.

A twenty-seventh aspect of the embodiments of this application provides an authorization and verification method, where the method is described from a perspective of a relay device, and the method includes:
receiving, by the relay device, a communication request sent by a remote device;
generating, by the relay device, a first radio resource control message based on the communication request, and sending the first radio resource control message to a base station; and
receiving, by the relay device, a second radio resource control message sent by the base station after the base station sets up context information for the remote device, so as to determine, based on the second radio resource control message, to allow the remote device to access a network by using the relay device.

Optionally, the method further includes:
sending, by the relay device, an identifier of the relay device to the base station by using the first radio resource control message, so that the base station identifies that the remote device requests to access the network by using the relay device.

Optionally, the method further includes:
setting up, by the relay device, a mapping relationship between the remote device and the relay device based on the second radio resource control message sent by the base station.

Optionally, the second radio resource control message includes a key used to protect communication security between the remote device and the relay device.

A twenty-eighth aspect of the embodiments of this application provides an authorization and verification apparatus, where the apparatus includes a module or a means (means) for performing the method provided in the twenty-fifth aspect and the various implementations of the twenty-fifth aspect.

A twenty-ninth aspect of the embodiments of this application provides an authorization and verification apparatus, where the apparatus includes a module or a means (means) for performing the method provided in the twenty-sixth aspect and the various implementations of the twenty-sixth aspect.

A thirtieth aspect of the embodiments of this application provides an authorization and verification apparatus, where the apparatus includes a module or a means (means) for performing the method provided in the twenty-seventh aspect and the various implementations of the twenty-seventh aspect.

A thirty-first aspect of the embodiments of this application provides an authorization and verification apparatus, and the apparatus includes a processor and a memory. The memory is configured to store a program. The processor invokes the program stored in the memory, to perform the method provided in the twenty-fifth aspect of this application.

A thirty-second aspect of the embodiments of this application provides an authorization and verification apparatus, and the apparatus includes a processor and a memory. The memory is configured to store a program. The processor invokes the program stored in the memory, to perform the method provided in the twenty-sixth aspect of this application.

A thirty-third aspect of the embodiments of this application provides an authorization and verification apparatus, and the apparatus includes a processor and a memory. The memory is configured to store a program. The processor invokes the program stored in the memory, to perform the method provided in the twenty-seventh aspect of this application.

A thirty-fourth aspect of the embodiments of this application provides an authorization and verification apparatus, including at least one processing element (or chip) configured to perform the method in the twenty-fifth aspect.

A thirty-fifth aspect of the embodiments of this application provides an authorization and verification apparatus, including at least one processing element (or chip) configured to perform the method in the twenty-sixth aspect.

A thirty-sixth aspect of the embodiments of this application provides an authorization and verification apparatus, including at least one processing element (or chip) configured to perform the method in the twenty-seventh aspect.

A thirty-seventh aspect of the embodiments of this application provides a program. The program is used to perform the method in the twenty-fifth aspect when being executed by a processor.

A thirty-eighth aspect of the embodiments of this application provides a program product, for example, a computer readable storage medium, including the program in the thirty-seventh aspect.

A thirty-ninth aspect of the embodiments of this application provides a program. The program is used to perform the method in the twenty-sixth aspect when being executed by a processor.

A fortieth aspect of the embodiments of this application provides a program product, for example, a computer readable storage medium, including the program in the thirty-ninth aspect.

A forty-first aspect of the embodiments of this application provides a program. The program is used to perform the method in the twenty-seventh aspect when being executed by a processor.

A forty-second aspect of the embodiments of this application provides a program product, for example, a computer readable storage medium, including the program in the forty-first aspect.

In the foregoing aspects, the relay device receives the communication request sent by the remote device, generates the first radio resource control message based on the communication request, and sends the first radio resource control message to the base station. The base station receives the first radio resource control message, where the first radio resource control message includes the non-access stratum message of the remote device, identifies, based on the first radio resource control message, that the remote device requests to access the network by using the relay device, obtains the identifier of the relay device, and sends the identifier of the relay device and the non-access stratum message of the remote device to the mobility management entity of the remote device by using the initial device message. In this way, the mobility management entity of the remote device receives the initial device message and triggers verification on the association relationship between the remote device and the relay device based on the initial device message. After determining that the association relationship is verified, the mobility management entity of the remote device sends the initial context setup request message to the base station, so that the base station sets up the context information for the remote device based on the initial context setup request message, and sends the second radio resource control message to the relay device. Finally, the relay device determines, based on the second radio resource control message, to allow the remote device to access the network by using the relay device. In the technical solution of this application, for a layer 2 relay device, a verification solution of an association relationship between a remote device and a relay device is designed. A complex and tedious parameter configuration procedure and authorization check procedure that need to be performed in an existing layer 3 relay solution are avoided. Therefore, compared with the existing layer 3 solution, the layer 2 solution in this application reduces network configuration requirements, reduces network overheads, and improves verification efficiency.

### DESCRIPTION OF DRAWINGS

FIG. 1A and FIG. 1B are an interaction diagram of Embodiment 1 of an authorization and verification method according to an embodiment of this application;
FIG. 2 is a flowchart of Embodiment 2 of an authorization and verification method according to an embodiment of this application;
FIG. 3 is a flowchart of Embodiment 3 of an authorization and verification method according to an embodiment of this application;
FIG. 4 is a flowchart of Embodiment 4 of an authorization and verification method according to an embodiment of this application;
FIG. 5 is a flowchart of Embodiment 5 of an authorization and verification method according to an embodiment of this application;
FIG. 6A and FIG. 6B are an interaction diagram of Embodiment 6 of an authorization and verification method according to an embodiment of this application;
FIG. 7A and FIG. 7B are an interaction diagram of Embodiment 7 of an authorization and verification method according to an embodiment of this application;
FIG. 8 is a flowchart of Embodiment 8 of an authorization and verification method according to an embodiment of this application;
FIG. 9 is a flowchart of Embodiment 9 of an authorization and verification method according to an embodiment of this application;
FIG. 10 is a flowchart of Embodiment 10 of an authorization and verification method according to an embodiment of this application;
FIG. 11A and FIG. 11B are an interaction diagram of Embodiment 11 of an authorization and verification method according to an embodiment of this application;
FIG. 12A and FIG. 12B are an interaction diagram of Embodiment 12 of an authorization and verification method according to an embodiment of this application;
FIG. 13A and FIG. 13B are an interaction diagram of Embodiment 13 of an authorization and verification method according to an embodiment of this application;
FIG. 14A and FIG. 14B are an interaction diagram of Embodiment 14 of an authorization and verification method according to an embodiment of this application;
FIG. 15A, FIG. 15B, and FIG. 15C are an interaction diagram of Embodiment 15 of an authorization and verification method according to an embodiment of this application;
FIG. 16 is a schematic structural diagram of an authorization and verification apparatus according to an embodiment of this application;
FIG. 17 is a schematic structural diagram of another authorization and verification apparatus according to an embodiment of this application;
FIG. 18 is a schematic structural diagram of still another authorization and verification apparatus according to an embodiment of this application;
FIG. 19 is a schematic structural diagram of yet another authorization and verification apparatus according to an embodiment of this application;
FIG. 20 is a schematic structural diagram of yet another authorization and verification apparatus according to an embodiment of this application;
FIG. 21 is a schematic structural diagram of yet another authorization and verification apparatus according to an embodiment of this application;
FIG. 22 is a schematic structural diagram of yet another authorization and verification apparatus according to an embodiment of this application;
FIG. 23 is a schematic structural diagram of yet another authorization and verification apparatus according to an embodiment of this application;
FIG. 24A, FIG. 24B, and FIG. 24C are an interaction diagram of Embodiment 16 of an authorization and verification method according to an embodiment of this application;
FIG. 25 is a schematic flowchart of Embodiment 17 of an authorization and verification method according to an embodiment of this application;
FIG. 26 is a schematic structural diagram of yet another authorization and verification apparatus according to an embodiment of this application;
FIG. 27 is a schematic structural diagram of yet another authorization and verification apparatus according to an embodiment of this application; and
FIG. 28 is a schematic structural diagram of yet another authorization and verification apparatus according to an embodiment of this application.

### DESCRIPTION OF EMBODIMENTS

In the following, some terms of the embodiments of this application are described, so as to help persons skilled in the art have a better understanding.

Remote device: may be a wireless terminal that may refer to a device that provides a user with voice and/or other service data connectivity, a handheld device with a wireless connection function, or another processing device connected to a wireless modem. To reduce power consumption, the remote device is usually connected to a network by using a relay device. The remote device may also be referred to as a system, a subscriber unit (Subscriber Unit), a subscriber station (Subscriber Station), a mobile station (Mobile Station), a mobile console (Mobile), a remote station (Remote Station), a remote terminal (Remote Terminal), an access terminal (Access Terminal), a user terminal (User Terminal), a user agent (User Agent), or a user device (User Device or User Equipment). The present invention is not limited thereto.

Relay device: is also referred to as a network repeater or an instrument device connected between a remote device and a network, may be a device that provides a relay for a network connection of the remote device at a wireless network layer (for example, a PDCP layer). Alternatively, the relay device may be an instrument device connected between the remote device and the network. The relay device may amplify and retransmit a transmitted signal, thereby avoiding attenuation of the signal in a transmission process and effectively improving transmission reliability. The relay device may alternatively be understood as a device that constructively implements network interconnection at a physical layer, and a specific expression form of the relay device is not limited in the embodiments of this application.

Mobility management entity (Mobility Management Entity, MME for short): A primary function is to support non-access stratum (Non-Access stratum, NAS for short) signaling and security of the signaling, management of a tracking area list, selection of a packet data network gateway (Packet Data Network Gateway, P-GW for short) and a serving gateway (Serving Gateway, S-GW for short), selection of an MME during inter-MME handover; selection of a serving GPRS support node (Serving GPRS Support Node, SGSN for short) during a process of handover to a 2G/3G access system, authentication on a user, roaming control, bearer management, mobility management between core network nodes of different 3GPP access networks, and reachability management of UE in an idle state. The MME in the embodiments of this application may include an MME of a relay device and an MME of a remote device. The MME of the relay device refers to an MME that currently serves the relay device, and the MME of the remote device refers to an MME that currently serves the remote device. Functionally, there is no difference between the two MMEs. Therefore, the MME that currently serves the relay device and the MME that currently serves the remote device may be the same. The MME in all embodiments of this application generally refers to such an MME. Another type of MME is not excluded in this application. That is, the MME of the relay device refers to an MME that is specially used to serve the relay device, and the MME of the remote device refers to an MME that is specially used to serve the remote device. In this case, functionally, the two MMEs may be different. Certainly, an MME that integrates a function of the MME of the relay device and a function of the MME of the remote device may alternatively be included. These MMEs may be used to verify whether the remote device is allowed to access a network by using the relay device. The MME may alternatively be a mobility management function entity in a future 5G network, such as an access and mobility management function entity (access and mobility management function, AMF for short).

Base station: also is referred to as a radio access network (Radio Access Network, RAN) device and is a device connecting a terminal to a wireless network. The base station may be a base transceiver station (Base Transceiver Station, BTS for short) in global system for mobile communications (Global System for Mobile communications, GSM for short) or code division multiple access (Code Division Multiple Access, CDMA for short); or may be a NodeB (NodeB, NB for short) in wideband code division multiple access (Wideband Code Division Multiple Access, WCDMA for short); or may be an evolved NodeB (Evolved NodeB, eNB or eNodeB for short) in long term evolution (Long Term Evolution, LTE for short), a relay station or an access point, a base station in a future 5G network, or the like, and is not specifically limited herein.

In the embodiments of this application, "a plurality of' refers to two or more than two. The term "and/or" describes an association relationship for describing associated objects and represents that three relationships may exist. For example, A and/or B may represent the following three cases: Only A exists, both A and B exist, and only B exists. The character "/" generally indicates an "or" relationship between the associated objects.

In all embodiments of this application, if an MME that currently serves a relay device is the same as an MME that currently serves a remote device, interaction between the two MMEs may be omitted or belongs to intra-MME interaction.

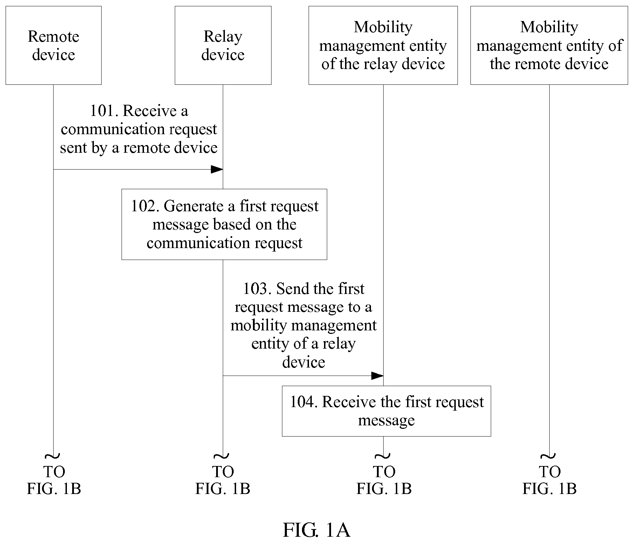

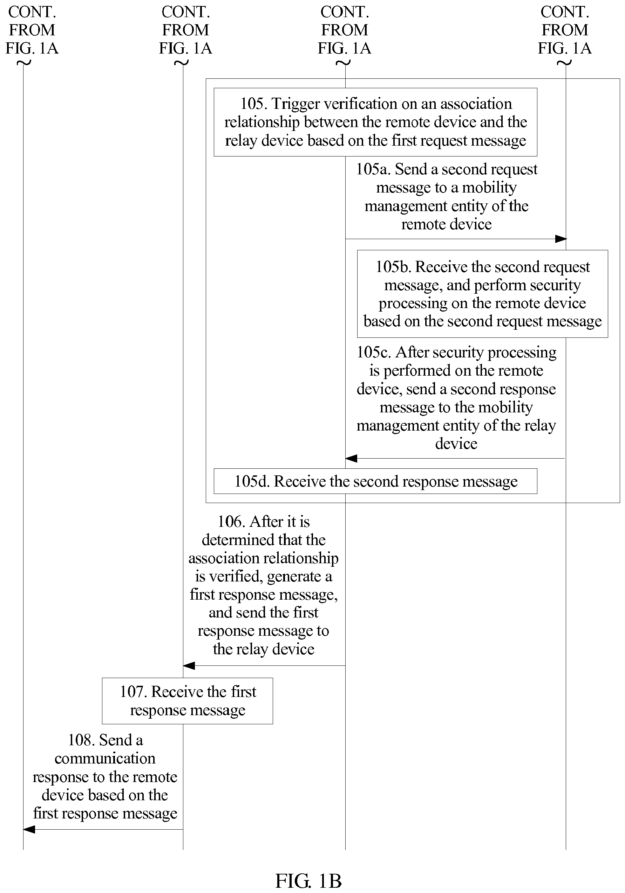

FIG. 1A and FIG. 1B are an interaction diagram of Embodiment 1 of an authorization and verification method according to an embodiment of this application. In this embodiment of this application, interaction among a mobility management entity of a relay device, a mobility management entity of a terminal device, and the relay device is used for description. As shown in FIG. 1A and FIG. 1B, the authorization and verification method provided in this embodiment of this application may include the following steps.

Step 101: The relay device receives a communication request sent by the remote device.

In an example, the communication request includes an identifier of the remote device.

Optionally, the communication request further includes one or more of the following content: a non-access stratum message of the remote device, a relay service code (Relay service code), and a first random number. Optionally, the first random number is generated by the remote device, and may be directly carried in the communication request. Optionally, if the first random number exists, the first random number may alternatively be included in the non-access stratum message of the remote device, but not be directly carried in the communication request.

In this embodiment of this application, optionally, the remote device may be a wearable device (wearable device, WD for short), and the remote device (WD) wants to access a network by using the relay device (relay). Therefore, before the remote device is allowed to access the network by using the relay device, an association relationship between the relay device and the remote device needs to be verified.

Optionally, before the relay device receives the communication request sent by the remote device, the relay device and the remote device need to complete the following discovery process. Specifically, both the relay device and the remote device need to access the network to obtain configuration parameters used for the discovery process, so as to implement a mutual discovery process between the remote device and the relay device based on the configuration parameters.

Optionally, the remote device sends the communication request to the relay device, where the communication request needs to carry at least the identifier of the remote device.

In an example, the identifier of the remote device may be directly included in the communication request. In another example, if the communication request further includes the NAS message of the remote device, the identifier of the remote device may alternatively be encapsulated into the NAS message of the remote device by the remote device. In this case, the NAS message of the remote device that is included in the communication request includes the identifier of the remote device. In still another example, the identifier of the remote device may alternatively be included in both the communication request and the NAS message of the remote device in the communication request. Therefore, there may be a plurality of implementations in which the communication request includes the identifier of the remote device. This is not limited in this embodiment of this application.

In this embodiment of this application, optionally, the NAS message of the remote device carries a MAC-I check value that is used by the MME of the remote device to perform integrity protection based on a NAS security context of the remote device. The MME of the remote device may authenticate the remote device by verifying the MAC-I in the NAS message.

It should be noted that the identifier of the remote device in this embodiment of this application may include at least two different forms, where one form is applicable to authorization and verification, and the other form is applicable to searching by the mobility management entity of the relay device for the mobility management entity of the remote device and obtaining context information of the remote device. For example, optionally, the identifier of the remote device in the communication request includes an identifier 1, and the identifier 1 is used by the mobility management entity of the relay device to search for the mobility management entity of the remote device. The identifier of the remote device in the communication request includes an identifier 2, and the identifier 2 is used by the mobility management entity of the relay device or the mobility management entity of the remote device to perform authorization and verification on the association relationship between the relay device and the remote device. The identifier of the remote device that is included in the NAS message of the remote device includes an identifier 3, and the identifier 3 is used to obtain the context information of the remote device. Optionally, the identifier 1 and the identifier 3 may be a same identifier. A specific form of the identifier of the remote device is not distinguished in this embodiment.

Optionally, the identifier 1 and the identifier 3 may be a globally unique temporary UE identity (Globally Unique Temporary UE Identity, GUTI for short), an international mobile subscriber identity (International Mobile Subscriber Identity, IMSI for short), a temporary mobile subscriber identity (Temporary Mobile Subscriber Identity, TMSI for short), or the like. Optionally, the identifier 2 may be an identifier allocated by a ProSe function.

Step 102: The relay device generates a first request message based on the communication request.

The first request message includes the identifier of the remote device. Optionally, the first request message is a non-access stratum (NAS) message between the relay device (relay) and the mobility management entity (MME).

In an example, after receiving the communication request from the remote device, the relay device may encapsulate related content of the communication request into the first request message of the relay device.

In another example, the relay device may alternatively encapsulate the related content of the communication request into the first request message of the relay device, and integrate another related parameter required for verifying the association relationship between the remote device and the relay device into the first request message. For example, optionally, the first request message may further include an identifier of the relay device.

Specifically, the related content encapsulated into the first request message includes the identifier of the remote device in step 101, and may further include the NAS message of the remote device in step 101. Optionally, when the communication request in step 101 further includes the relay service code (Relay service code) or the first random number, the related content encapsulated into the first request message further includes the relay service code or the first random number. The relay service code is used to represent a service type to be requested by the remote device, and is used for verifying the association relationship between the remote device and the relay device. The first random number is generated by the remote device, and is used for subsequent key generation. For a specific key generation manner, refer to record in subsequent step 502. For a manner of carrying the first random number, refer to the manner in step 101.

Step 103: The relay device sends the first request message to the mobility management entity of the relay device.

After generating the first request message based on the communication request, the relay device sends the first request message to the mobility management entity of the relay device, and the mobility management entity of the relay device triggers verification on the association relationship between the remote device and the relay device based on content in the first request message.

Step 104: The mobility management entity of the relay device receives the first request message.

For the content in the first request message, refer to record in step 102.

Step 105: The mobility management entity of the relay device triggers verification on an association relationship between the remote device and the relay device based on the first request message.

Optionally, in an embodiment of this application, after receiving the first request message sent by the relay device, the mobility management entity of the relay device may perform any one of the following plurality of operations. A first operation is as follows: The mobility management entity of the relay device triggers, based on the content in the first request message, verification on the association relationship between the remote device and the relay device performed by the mobility management entity of the relay device. A second operation is as follows: The mobility management entity of the relay device sends the content in the first request message to the mobility management entity of the remote device or a ProSe function, so that the mobility management entity of the remote device or the ProSe function performs further security processing. A third operation is performing content corresponding to the first operation and the second operation.

Optionally, when the mobility management entity of the relay device performs the third operation, an execution sequence of the first operation and the second operation is not limited in this embodiment of this application. For example, the first operation that the mobility management entity of relay device triggers, based on the content in the first request message, verification on the association relationship between the remote device and the relay device performed by the mobility management entity of the relay device may be performed in the following step 105d. Optionally, information returned in the following step 105c, such as the identifier IMSI of the remote device may be used during verification on the association relationship between the remote device and the relay device.

Step 106: After determining that the association relationship is verified, the mobility management entity of the relay device generates a first response message and sends the first response message to the relay device.

Optionally, in this embodiment of this application, that the mobility management entity of the relay device determines that the association relationship is verified may specifically include at least one of the following: The mobility management entity of the relay device determines by itself that the association relationship between the remote device and the relay device is verified; or the mobility management entity of the remote device determines that the association relationship between the remote device and the relay device is verified; or the ProSe function determines that the association relationship between the remote device and the relay device is verified.

In an example, when the association relationship between the remote device and the relay device needs to be verified only by any one of the mobility management entity of the relay device, the mobility management entity of the remote device, or the ProSe function, and when the association relationship is verified, the first response message is generated, and the first response message is fed back to the relay device.

In another example, when verification on the association relationship between the remote device and the relay device needs to be performed by any two or three of the mobility management entity of the relay device, the mobility management entity of the remote device, or the ProSe function, it indicates that the association relationship is verified only when the association relationship is verified by the corresponding two or three of the mobility management entity of the relay device, the mobility management entity of the remote device, or the ProSe function. In this case, the mobility management entity of the relay device generates the first response message, and feeds back the first response message to the relay device.

Step 107: The relay device receives the first response message.

In an example, when the association relationship between the remote device and the relay device is verified, the first response message may carry a key used to protect communication security between the remote device and the relay device, and a security parameter required for generating the key.

In another example, when the association relationship between the remote device and the relay device is verified, but integrity check on the NAS message of the remote device fails, or the NAS message of the remote device does not have integrity protection, or the first request message and a second request message do not carry the NAS message of the remote device, the MME (the MME of the relay device or the MME of the remote device) sends a key request message to a security function entity, so as to obtain the key used to protect communication security between the remote device and the relay device, and the security parameter required for generating the key.

In still another example, when verification on the association relationship between the remote device and the relay device fails, the first response message may include a parameter such as a failure cause.

It should be noted that specific content included in the first response message is not limited in this embodiment of this application.

Step 108: The relay device sends a communication response to the remote device based on the first response message.

Optionally, the relay device generates the communication response by using a result of verification on the association relationship between the remote device and the relay device based on the received first response message, and sends the communication response to the terminal device, where the communication response is used as a representation form of a result of the communication request. Optionally, if the first response message carries the key used to protect communication security between the remote device and the relay device, and the security parameter required for generating the key, the communication response includes the security parameter required for generating the key, so that the remote device also generates the key used to protect communication security between the remote device and the relay device.

When the communication response represents that the relationship is verified, and the remote device generates the key used to protect communication security between the remote device and the relay device, the remote device may access the network by using the relay device.

Optionally, in an embodiment of this application, step 105 may be implemented by using step 105a. Correspondingly, the authorization and verification method in this embodiment of this application further includes step 105b to step 105d.

Step 105a: The mobility management entity of the relay device sends a second request message to the mobility management entity of the remote device.

The second request message includes the identifier of the remote device.

In an example, when the mobility management entity of the relay device triggers verification on the association relationship between the remote device and the relay device, the mobility management entity of the relay device may further send the second request message to the mobility management entity of the remote device based on the identifier of the remote device in the first request message, so that the mobility management entity of the remote device performs security processing on the remote device based on the second request message, or further verifies the association relationship between the remote device and the relay device.

Optionally, the second request message further includes the identifier of the relay device. The identifier of the relay device and the identifier of the remote device are used by the MME of the remote device to implement authorization and verification on the association relationship between the relay device and the remote device.

Optionally, the identifier of the relay device in the second request message may be obtained in any one of the following manners: 1. The mobility management entity of the relay device may obtain the identifier of the relay device from context information of the relay device stored in the relay device, and further encapsulate the identifier of the relay device into the second request message. 2. When the first request message includes the identifier of the relay device, the mobility management entity of the relay device may alternatively obtain the identifier of the relay device from the reported first request message. A specific obtaining manner of the identifier of the relay device is not specifically limited in this embodiment of this application.

Optionally, the second request message further includes the NAS message of the remote device that is obtained from the first request message. Optionally, the second request message further includes the first random number generated by the remote device. For content of the NAS message and the manner of carrying the first random number, refer to the method in step 101.

Optionally, the first request message includes the identifier of the remote device, and the identifier of the remote device is used by the MME of the relay device to search for the MME of the remote device. Specifically, the MME of the relay device determines the MME of the remote device based on the identifier of the remote device, and further sends the second request message to the MME of the remote device. Herein, for a specific representation form of the identifier of the remote device, refer to record in step 101, and details are not described herein again.

Step 105b: The mobility management entity of the remote device receives the second request message, and performs security processing on the remote device based on the second request message.

Optionally, if the second request message includes the non-access stratum (NAS) message of the remote device that is obtained from the first request message, the security processing may include integrity verification on the NAS message of the remote device.

Optionally, the security processing may alternatively include verification on the association relationship between the remote device and the relay device based on the identifier of the relay device and/or the identifier of the remote device that are/is in the second request message.

Optionally, the MME of the remote device may further obtain non-access stratum context information of the remote device based on the identifier of the remote device in the second request message, and generate, based on the non-access stratum context information, the key used to protect communication security between the remote device and the relay device. Optionally, the identifier may be a GUTI, a TMSI, an IMSI, or the like. For details, refer to record in step 101, and details are not described herein again. The MME of the remote device may directly obtain the identifier of the remote device from the second request message, or obtain the identifier of the remote device from the NAS message of the remote device that is carried in the second request message.

Optionally, when the association relationship between the remote device and the relay device is verified, but integrity check on the NAS message of the remote device fails, or the NAS message of the remote device does not have integrity protection, or the first request message and the second request message do not carry the NAS message of the remote device, the MME of the remote device sends a key request message to the security function entity, so as to obtain the key used to protect communication security between the remote device and the relay device, and the security parameter required for generating the key.

Optionally, in step 105b, a (first) key generated by the MME of the remote device may be directly used as a PC5 interface communication key for communication protection of a PC5 interface, that is, the relay directly performs security protection (for example, integrity protection) on the communication response based on the received (first) key. Correspondingly, the WD also generates the (first) key, namely, the PC5 interface communication key, based on the received security parameter required for generating the key, and then performs security verification (for example, integrity verification) on the communication response message. Optionally, the PC5 interface communication key may alternatively be a (second) key that is further generated by the relay based on the (first) key generated by the MME of the remote device in step 105c. That is, the relay generates the (second) key based on the received (first) key as the PC5 interface communication key to perform security protection (for example, integrity protection) on the communication response. Correspondingly, after the WD generates the (first) key based on the received security parameter required for generating the key, the WD further generates the (second) key based on the (first) key, where the (second) key is the PC5 interface communication key; and then performs security verification (for example, integrity verification) on the communication response message.

Step 105c: After performing security processing on the remote device, the mobility management entity of the remote device sends a second response message to the mobility management entity of the relay device.

After performing security processing on the remote device based on content of the second request message, the mobility management entity of the remote device generates the second response message based on a result of the security processing, and feeds back the second response message to the mobility management entity of the relay device.

Optionally, when the MME of the remote device generates the key used to protect communication security between the remote device and the relay device, the second response message includes the key and the security parameter required for generating the key.

Optionally, the key and the security parameter required for generating the key that are received by the mobility management entity of the relay device are equivalent to a representation form of content of the second response message. Optionally, the second response message may include the non-access stratum message generated by the mobility management entity of the remote device. Optionally, integrity protection is performed on the non-access stratum message in the second response message by using a NAS security context of the remote device, and the non-access stratum message is sent to the relay device by using the mobility management entity of the relay device and then sent to the remote device, so that the remote device performs authentication on the network by performing integrity verification on the non-access stratum message. Optionally, the key generation parameter may be included in the non-access stratum message.

Step 105d: The mobility management entity of the relay device receives the second response message.

According to the authorization and verification method provided in this embodiment of this application, the relay device receives the communication request sent by the remote device, where the communication request includes the identifier of the terminal device; and generates the first request message based on the communication request and sends the first request message to the mobility management entity of the relay device. The mobility management entity of the relay device receives the first request message, triggers verification on the association relationship between the remote device and the relay device, and sends the second request message to the mobility management entity of the remote device. The mobility management entity of the remote device receives the second request message, performs security processing on the remote device based on the second request message, and after performing security processing on the remote device, sends the second response message to the mobility management entity of the relay device. The mobility management entity of the relay device receives the second response message, generates the first response message after determining that the association relationship is verified, and sends the first response message to the relay device. The relay device sends the communication response to the remote device based on the first response message. In the technical solution of this application, for a layer 2 relay device, a verification solution of an association relationship between a remote device and a relay device is designed. A complex and tedious parameter configuration procedure and authorization check procedure that need to be performed in an existing layer 3 relay solution are avoided. Therefore, compared with the existing layer 3 solution, the layer 2 solution in this application reduces network configuration requirements, reduces network overheads, and improves verification efficiency.

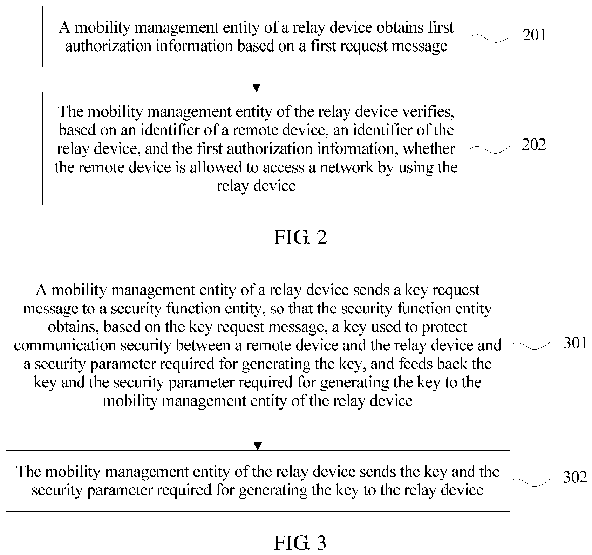

Based on the embodiment shown in FIG. 1A and FIG. 1B, FIG. 2 is a flowchart of Embodiment 2 of an authorization and verification method according to an embodiment of this application. As shown in FIG. 2, in the authorization and verification method provided in this embodiment of this application, step 105 (the mobility management entity of the relay device triggers verification on an association relationship between the remote device and the relay device based on the first request message) may further include the following steps.

Step 201: The mobility management entity of the relay device obtains first authorization information based on the first request message.

Specifically, when the mobility management entity of the relay device verifies the association relationship between the remote device and the relay device by itself, the mobility management entity of the relay device needs to first obtain a context of the relay device, and obtain, from the context, a list of remote devices that have an authorization relationship with the relay device, namely, the first authorization information.

Optionally, in an example, after the relay device successfully registers with the network, the mobility management entity of the relay device obtains the first authorization information from a user data management entity and/or the ProSe function based on the identifier of the relay device.

In this embodiment, after the relay device successfully registers with the network, both the user data management entity and/or the ProSe function in the network store the first authorization information of the relay device that is related to the remote device. For the first authorization information of the relay device that is related to the remote device and in the user data management entity, the mobility management entity of the relay device directly obtains the first authorization information from the user data management entity (for example, a home subscriber server (Home Subscriber Server, HSS for short)), or from a user data management entity (User data management, UDM for short) in a 5G system. A manner in which the mobility management entity of the relay device obtains the first authorization information from the ProSe function may be as follows: When the mobility management entity of the relay device may directly communicate with the ProSe function, that is, there is a direct interface between the two, the mobility management entity of the relay device directly obtains the first authorization information from the ProSe function. When the mobility management entity of the relay device cannot directly communicate with the ProSe function, that is, there is no direct interface between the two, the ProSe function sends the first authorization information to the mobility management entity of the relay device by using the HSS.

Step 202: The mobility management entity of the relay device verifies, based on the identifier of the remote device, the identifier of the relay device, and the first authorization information, whether the remote device is allowed to access the network by using the relay device.

Before the association relationship is verified, the mobility management entity of the relay device first obtains the identifier of the relay device. For a manner of obtaining the identifier of the relay device, refer to record in step 105a for details. That is, optionally, the mobility management entity of the relay device may obtain the identifier of the relay device from an internal storage list of the mobility management entity of the relay device, or the mobility management entity of the relay device may obtain the identifier of the relay device from the reported first request message. Details are not described herein again.

After the mobility management entity of the relay device learns of the identifier of the remote device, the identifier of the relay device, and the first authorization information, the mobility management entity of the relay device determines whether the first authorization information includes the association relationship between the relay device and the remote device. When the first authorization information includes the association relationship between the relay device and the remote device, it indicates that the remote device is allowed to access the network by using the relay device; otherwise, the remote device is not allowed to access the network by using the relay device.

According to the authorization and verification method provided in this embodiment of this application, when the mobility management entity of the relay device triggers verification on the association relationship between the remote device and the relay device based on the first request message, the mobility management entity of the relay device may obtain the first authorization information based on the first request message, and further verify, based on the identifier of the remote device, the identifier of the relay device, and the first authorization information, whether the remote device is allowed to access the network by using the relay device. In this way, a method for verifying the association relationship is simple and easy to implement.

Optionally, based on the embodiment shown in FIG. 1A and FIG. 1B, in an example, when the first request message further includes the relay service code, step 105 may be implemented in the following possible implementation. Details are as follows:
The mobility management entity of the relay device obtains first authorization information based on the first request message, and verifies, based on the identifier of the remote device, the identifier of the relay device, the relay service code, and the first authorization information, whether the remote device is allowed to access the network by using the relay device. In this case, the first authorization information is a relationship list between a remote device that has an authorization relationship with the relay device and a corresponding relay service code.

When the communication request sent by the remote device to the relay device further includes the relay service code, the first request message generated by the relay device through integration also includes the relay service code, and the relay service code is used to represent a service type to be requested by the remote device. Different relay service codes are corresponding to different service types. Therefore, in this embodiment, when the mobility management entity of the relay device verifies the association relationship between the remote device and the relay device, the relay service code is further used. Specifically, the mobility management entity of the relay device verifies, based on the identifier of the remote device, the identifier of the relay device, the relay service code, and the first authorization information, whether the remote device is allowed to access the network by using the relay device.

Actually, this step is a further limitation on the embodiment shown in FIG. 2, and the relay service code is added to a determining condition. For a manner of obtaining the first authorization information, refer to record in step 201. For a manner of obtaining the identifier of the relay device, refer to record in step 105a. Details are not described herein again.

Optionally, based on the foregoing embodiment, the authorization and verification method provided in this embodiment of this application further includes the following steps:
The mobility management entity of the relay device sends a third request message to the ProSe function, so that the ProSe function verifies, based on the third request message, whether the remote device is allowed to access the network by using the relay device.

The third request message includes the identifier of the remote device and the identifier of the relay device.

In an example, in an implementation in which the mobility management entity of the terminal device triggers verification on the association relationship between the remote device and the relay device, the mobility management entity of the relay device may perform verification by itself, or the mobility management entity of the relay device may send the second request message to the mobility management entity of the remote device, so that the mobility management entity of the remote device performs verification. In addition, the mobility management entity of the relay device may send the third request message to the ProSe function, so that the ProSe function performs verification.

It should be noted that the third request message includes at least the identifier of the remote device and the identifier of the relay device. Optionally, the identifier of the remote device and the identifier of the relay device in the third request message may be obtained from the reported first request message. Optionally, when the communication request includes the relay service code, all of the first request message, the second request message, and the third request message may include the relay service code. Optionally, the relay service code is used to represent a service type to be requested by the remote device, and participates in verification on the association relationship between the remote device and the relay device.

Further, based on any one of the foregoing embodiments, FIG. 3 is a flowchart of Embodiment 3 of an authorization and verification method according to an embodiment of this application. As shown in FIG. 3, the authorization and verification method provided in this embodiment of this application further includes the following steps:
Step 301: The mobility management entity of the relay device sends a key request message to a security function entity, so that the security function entity obtains, based on the key request message, a key used to protect communication security between the remote device and the relay device and a security parameter required for generating the key, and feeds back the key and the security parameter required for generating the key to the mobility management entity of the relay device.

The key request message includes the identifier of the remote device.

Step 302: The mobility management entity of the relay device sends the key and the security parameter required for generating the key to the relay device.

In an example, when the association relationship between the remote device and the relay device is verified by the mobility management entity of the relay device, the mobility management entity of the remote device, or the ProSe function, but the second response message received by the mobility management entity of the relay device does not carry the key used to protect communication security between the remote device and the relay device and the security parameter required for generating the key, the mobility management entity of the relay device sends the key request message to the security function entity. Based on the identifier of the remote device in the key request message, the security function entity searches for and obtains the key used to protect communication security between the remote device and the relay device, and the security parameter required for generating the key, and feeds back the key and the security parameter required for generating the key to the mobility management entity of the relay device. Finally, the mobility management entity of the relay device feeds back the key and the security parameter required for generating the key to the relay device, so that the relay device performs corresponding processing on the key and the security parameter.

In this way, even if the second response message received by the mobility management entity of the relay device does not carry the key used to protect communication security between the remote device and the relay device, and the security parameter required for generating the key, the relay device can still obtain the key used to protect communication security between the remote device and the relay device, and the security parameter required for generating the key, thereby ensuring that the remote device can access the network by using the relay device.

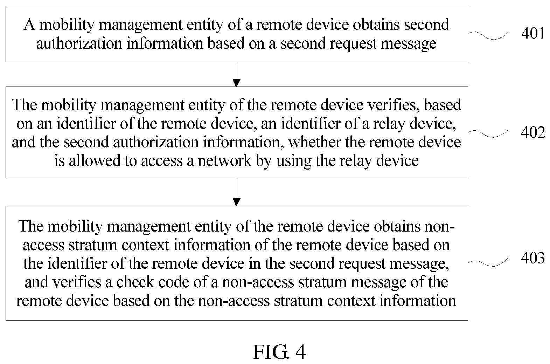

Based on the embodiment shown in FIG. 1A and FIG. 1B, FIG. 4 is a flowchart of Embodiment 4 of an authorization and verification method according to an embodiment of this application. As shown in FIG. 4, in the authorization and verification method provided in this embodiment of this application, step 105b (the mobility management entity of the remote device receives the second request message, and performs security processing on the remote device based on the second request message) may specifically include the following steps.

Step 401: The mobility management entity of the remote device obtains second authorization information based on the second request message.

Specifically, after the remote device successfully registers with the network, the mobility management entity of the remote device obtains the second authorization information from the user data management entity and/or the ProSe function based on the identifier of the remote device.

This step is similar to step 201, and a difference lies in that step 201 is used to obtain the list of remote devices that have an authorization relationship with the relay device, namely, the first authorization information, and this step is used to obtain a list of relay devices that have an authorization relationship with the remote device, namely, the second authorization information. Similarly, after the remote device successfully registers with the network, both the user data management entity and/or the ProSe function in the network store the second authorization information of the remote device that is related to the relay device. For the second authorization information of the relay device that is related to the remote device in the user data management entity, the mobility management entity of the remote device directly obtains the second authorization information from the user data management entity. A manner in which the mobility management entity of the remote device obtains the second authorization information from the ProSe function may be as follows: When there is a direct interface between the mobility management entity of the remote device and the ProSe function, the mobility management entity of the remote device directly obtains the second authorization information from the ProSe function. However, when there is no direct interface between the mobility management entity of the remote device and the ProSe function, the mobility management entity of the remote device obtains the second authorization information from the ProSe function by using the HSS.

Step 402: The mobility management entity of the remote device verifies, based on the identifier of the remote device, the identifier of the relay device, and the second authorization information, whether the remote device is allowed to access the network by using the relay device.

Similar to step 202, when the mobility management entity of the remote device verifies the association relationship between the remote device and the relay device, the mobility management entity of the remote device determines, based on the identifier of the remote device, the identifier of the relay device, and the obtained second authorization information, whether the second authorization information includes the association relationship between the remote device and the relay device. When the second authorization information includes the association relationship between the remote device and the relay device, it indicates that the remote device is allowed to access the network by using the relay device; otherwise, the remote device is not allowed to access the network by using the relay device.

In an example, when the second request message further includes the relay service code, a specific implementation of step 105b (the mobility management entity of the remote device receives the second request message, and performs security processing on the remote device based on the second request message) is as follows:
The mobility management entity of the remote device verifies, based on the identifier of the remote device, the identifier of the relay device, the relay service code, and the second authorization information, whether the remote device is allowed to access the network by using the relay device. In this case, the second authorization information is a relationship list between a relay device that has an authorization relationship with the remote device and a corresponding relay service code.

This step is a further description of step 402. The relay service code is added to a determining condition, that is, a service type of a service requested by the remote device is added. A specific determining manner is similar to a manner in which the mobility management entity of the relay device verifies the association relationship between the remote device and the relay device based on the identifier of the remote device, the identifier of the relay device, the relay service code, and the first authorization information. Details are not described herein again.

Optionally, as shown in FIG. 4, in the authorization and verification method provided in this embodiment of this application, step 105b further includes the following step:
Step 403: The mobility management entity of the remote device obtains non-access stratum context information of the remote device based on the identifier of the remote device in the second request message, and verifies a check code of a non-access stratum message of the remote device based on the non-access stratum context information.

The second request message includes the non-access stratum message of the remote device and the check code of the non-access stratum message.

In this embodiment, when the first request message further includes the non-access stratum message of the remote device and the check code of the non-access stratum message, the second request message also includes the non-access stratum message of the remote device and the check code of the non-access stratum message. In this case, the mobility management entity of the remote device may further verify the non-access stratum message of the remote device, and specifically, verify the check code of the non-access stratum message of the remote device based on the non-access stratum context information of the remote device.

It should be noted that each of step 401, step 402, and step 403 is one optional manner in which the mobility management entity of the remote device performs security processing on the remote device, that is, in an embodiment, the mobility management entity of the remote device may perform one or more of step 401, step 402, and step 403. In addition, when a plurality of steps are performed, an execution sequence of the steps is not limited in this embodiment of this application.

According to the authorization and verification method provided in this embodiment of this application, the mobility management entity of the remote device obtains the second authorization information based on the second request message, and when the second request message further includes the relay service code, verifies, based on the identifier of the remote device, the identifier of the relay device, the relay service code, and the second authorization information, whether the remote device is allowed to access the network by using the relay device. In addition, the mobility management entity of the remote device further obtains the non-access stratum context information of the remote device based on the identifier of the remote device in the second request message, and verifies the check code of the non-access stratum message of the remote device based on the non-access stratum context information, so as to complete security authentication on the remote device and the relay device by checking integrity of the non-access stratum message.

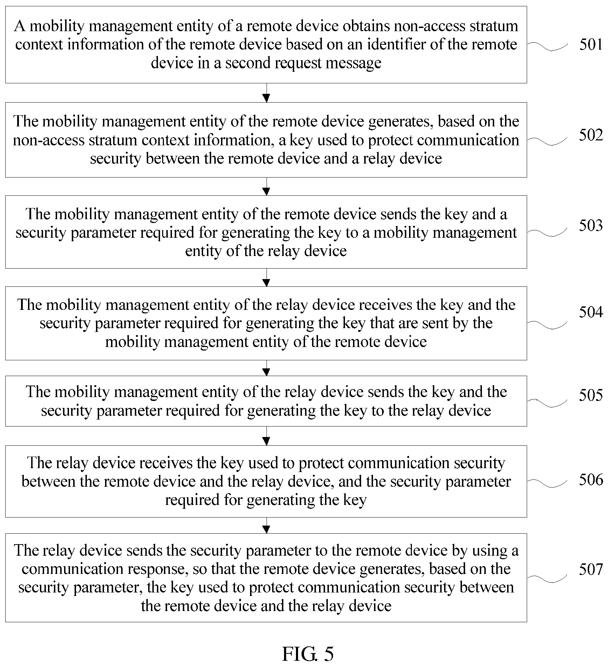

Further, based on the foregoing embodiment, FIG. 5 is a flowchart of Embodiment 5 of an authorization and verification method according to an embodiment of this application. As shown in FIG. 5, in the authorization and verification method provided in this embodiment of this application, the method further includes the following steps:
Step 501: A mobility management entity of a remote device obtains non-access stratum context information of the remote device based on an identifier of the remote device in a second request message.

In this embodiment, to ensure communication security between the remote device and a relay device, the mobility management entity of the remote device obtains the non-access stratum context message of the remote device based on the identifier of the remote device that needs to communicate, where the non-access stratum context message stores a security parameter required for generating a key.

Step 502: The mobility management entity of the remote device generates, based on the non-access stratum context information, a key used to protect communication security between the remote device and a relay device.

To implement communication security between the remote device and the relay device, the mobility management entity of the remote device may generate, based on the non-access stratum context information, the key used to protect communication security between the remote device and the relay device. Optionally, when a first random number is carried in a communication request sent by the remote device, the mobility management entity of the remote device uses the first random number as an input parameter for generating the key. The first random number is generated by the remote device. Optionally, when the mobility management entity of the remote device generates a second random number, the mobility management entity of the remote device uses the second random number as an input parameter for generating the key. Optionally, the first random number is encapsulated into the communication request and sent by the remote device to the relay device. Then, the first random number is encapsulated by the relay device into a first request message and sent to a mobility management entity of the relay device. Finally, the mobility management entity of the relay device sends the first random number to the mobility management entity of the remote device by using the second request message.

Optionally, the mobility management entity of the remote device obtains a security context of a NAS message of the remote device based on the identifier of the remote device, and then generates, based on the security context of the NAS message, the key used to protect communication security between the remote device and the relay device. That is, a key generation parameter is a parameter in the security context of the NAS message of the remote device. Optionally, further, the security parameter required for generating the key may be a key Kasme in the security context of the NAS message of the remote device. Optionally, the security parameter required for generating the key may further include another parameter, for example, the second random number generated by the MME-WD and/or the first random number generated by the WD.

Step 503: The mobility management entity of the remote device sends the key and a security parameter required for generating the key to a mobility management entity of the relay device.

Specifically, because the mobility management entity of the remote device generally does not directly communicate with the relay device, after the mobility management entity of the remote device generates the key used to protect communication security between the remote device and the relay device, the mobility management entity of the remote device needs to send the key and the security parameter required for generating the key to the mobility management entity of the relay device, so that the mobility management entity of the relay device sends the key and the security parameter required for generating the key to the relay device. Optionally, because the first random number is generated by the remote device itself, the remote device may subsequently generate the key without needing to obtain the first random number. Therefore, the security parameter required for generating the key in this embodiment of this application mainly includes the second random number. In addition, the second random number is encapsulated into a non-access stratum message of the mobility management entity of the remote device.

Correspondingly, both the mobility management entity of the relay device and the relay device side further need to perform corresponding receiving operations. For details, refer to content shown in step 504.

Step 504: The mobility management entity of the relay device receives the key and the security parameter required for generating the key that are sent by the mobility management entity of the remote device.

Optionally, the key and the security parameter required for generating the key that are received by the mobility management entity of the relay device are equivalent to a representation form of content of a second response message. Optionally, the second response message may include a non-access stratum message generated by the mobility management entity of the remote device. Optionally, integrity protection is performed on the non-access stratum message in the second response message by using a NAS security context of the remote device, and the non-access stratum message is sent to the relay device by using the mobility management entity of the relay device and then sent to the remote device, so that the remote device performs authentication on the network by performing integrity verification on the non-access stratum message. Optionally, the key generation parameter may be included in the non-access stratum message.

Step 505: The mobility management entity of the relay device sends the key and the security parameter required for generating the key to the relay device.

If the remote device wants to access the network by using the relay device, the remote device and the relay device need to have a key for protecting communication between the remote device and the relay device. Therefore, the mobility management entity of the relay device further needs to send the received key and security parameter required for generating the key to the relay device, so that the relay device holds the key and the security parameter required for generating the key.

Step 506: The relay device receives the key used to protect communication security between the remote device and the relay device, and the security parameter required for generating the key.

Correspondingly, step 108 may be replaced with step 507.

Step 507: The relay device sends the security parameter to the remote device by using a communication response, so that the remote device generates, based on the security parameter, the key used to protect communication security between the remote device and the relay device.

After receiving the key and the security parameter required for generating the key, the relay device saves the key by itself, and sends, by using the communication response, the security parameter required for generating the key to the remote device. In this way, the remote device may generate by itself, based on the security parameter, the key used to protect communication security between the remote device and the relay device. If the key on the remote device side is consistent with the key on the relay device side, it indicates that authentication and authorization check between the remote device and the relay device succeeds, and the remote device can send data to the network by using the relay device.

According to the authorization and verification method provided in this embodiment of this application, the mobility management entity of the remote device generates, based on the identifier of the remote device in the second request message, the key used to protect communication security between the remote device and the relay device, and sends the key and the security parameter required for generating the key to the mobility management entity of the relay device. The mobility management entity of the relay device sends the received key and security parameter required for generating the key to the relay device, and then the relay device sends the security parameter to the remote device by using the communication response, so that the remote device generates, based on the security parameter, the key used to protect communication security between the remote device and the relay device. In this way, when the remote device accesses the network by using the relay device, security of short-range communication can be protected by using the key, and security is high.

Optionally, in the authorization and verification method provided in this embodiment of this application, when the mobility management entity of the relay device, the mobility management entity of the remote device, or a ProSe function successfully verifies an association relationship between the remote device and the relay device, but the mobility management entity of the remote device does not perform the operation of generating the key in step 502, that is, when the communication request sent by the remote device to the relay device does not carry the NAS message of the remote device, or the communication request sent by the remote device to the relay device carries the NAS message of the remote device but integrity check on the NAS message fails, or the NAS message of the remote device carried in the communication request sent by the remote device to the relay device does not have integrity protection, the mobility management entity of the remote device may further perform the following operation:
The mobility management entity of the remote device sends a key request message to a security function entity, so that the security function entity obtains, based on the key request message, the key used to protect communication security between the remote device and the relay device, and the security parameter required for generating the key; and feeds back, to the mobility management entity of the remote device, the key used to protect communication security between the remote device and the relay device, and the security parameter required for generating the key.

The key request message includes the identifier of the remote device.

This step is similar to the step in which the mobility management entity of the relay device sends the key request message to the security function entity, so as to obtain the key used to protect communication security between the remote device and the relay device and the security parameter required for generating the key in the embodiment shown in FIG. 3. Details are not described herein again.

With reference to the foregoing embodiments, the following embodiment describes a complete procedure of the authorization and verification method. In the following figure, a remote device being a wearable device (WD), a relay device (Relay), a mobility management entity of the remote device (MME-WD), a mobility management entity of the relay device (MME-relay), a base station (eNB), a home subscriber server (Home Subscriber Server, HSS for short), a ProSe function (ProSe Function, PF for short), and the like are used for description.

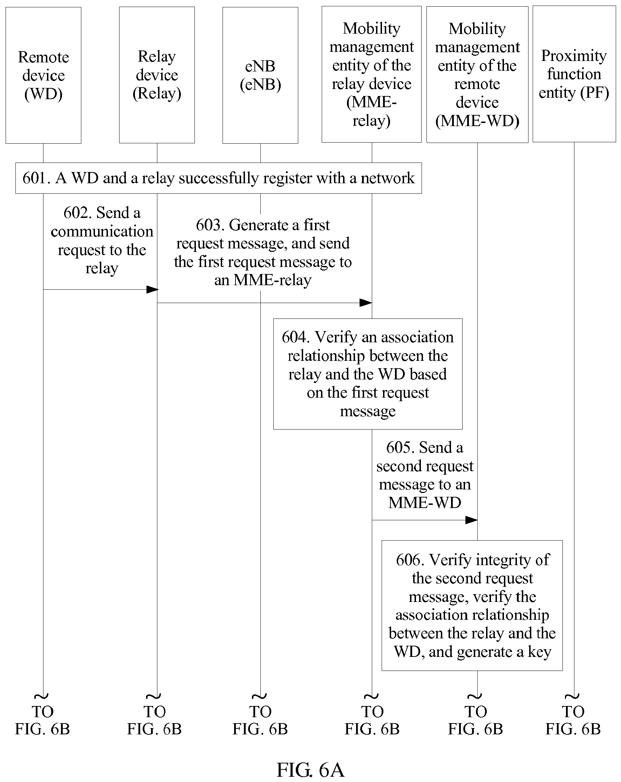

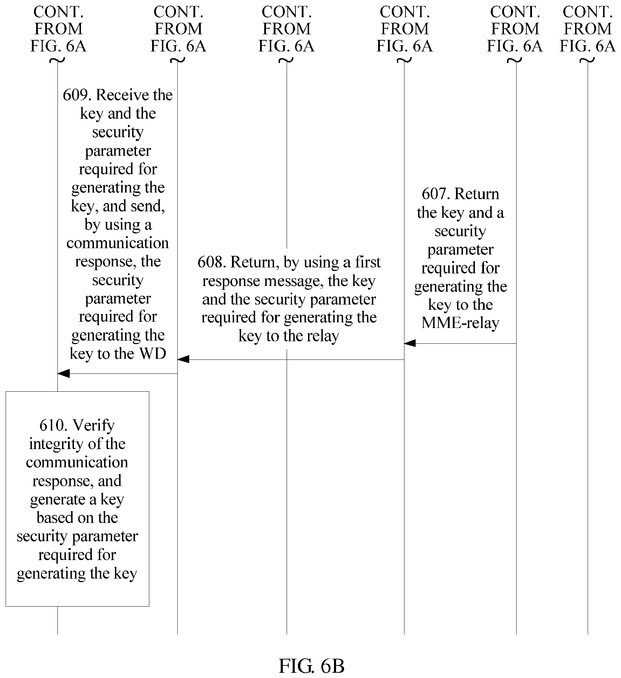

FIG. 6A and FIG. 6B are an interaction diagram of Embodiment 6 of an authorization and verification method according to an embodiment of this application. As shown in FIG. 6A and FIG. 6B, in the authorization and verification method provided in this embodiment of this application, the method includes the following steps.

Step 601: A WD and a relay successfully register with a network.

Step 602: The WD sends a communication request to the relay.

The communication request includes a NAS message of the remote device. For other content in the communication request, refer to record in step 101 in the embodiment shown in FIG. 1A and FIG. 1B. Details are not described herein again.

Step 603: The relay generates a first request message and sends the first request message to an MME-relay.

Specifically, the relay encapsulates the content in the communication request of the WD into a NAS message of the relay, that is, generates the first request message. Optionally, the first request message is a NAS message between the relay device (relay) and the mobility management entity (MME).

Step 604: The MME-relay verifies an association relationship between the relay and the WD based on the first request message.

Optionally, after receiving the first request message sent by the relay, the MME-relay may perform any one or more of the following plurality of operations. A first operation is as follows: The MME-relay triggers, based on content in the first request message, verification on the association relationship between the relay and the WD performed by the MME-relay itself. A second operation is as follows: The MME-relay sends content in the first request message to an MME-WD or a PF, so that the MME-WD or the PF performs further security processing. A third operation is performing content corresponding to the first operation and the second operation.

For a specific implementation of performing, by the MME-relay, verification on the association relationship between the relay and the WD based on the first request message, refer to record in step 105 in the embodiment shown in FIG. 1A and FIG. 1B. Details are not described herein again.

Step 605: The MME-relay sends a second request message to an MME-WD.

For content in the second request message, refer to record in step 105a in the embodiment shown in FIG. 1A and FIG. 1B. Details are not described herein again.

The MME-relay may find the corresponding MME-WD based on the WD ID carried in the first request message.

Step 606: The MME-WD verifies integrity of the second request message, verifies the association relationship between the relay and the WD, and generates a key.

Optionally, after receiving the second request message, the MME-WD may perform one or more of the following operations: verifying integrity of the second request message, verifying the association relationship between the relay and the WD, and generating the key. The key is a key used to protect communication security between the remote device and the relay device.

The key may be a PC5 interface communication key, and a security parameter required for generating the key includes a first random number (optional), a second random number (optional) generated by the MME-WD, a basic key (for example, Kasme), and a relay service code (Relay service code) (optional). Optionally, the second random number is encapsulated into a second NAS message and finally returned to the WD. For a specific key generation operation, refer to step 502 in the embodiment shown in FIG. 5. Details are not described herein again.

Step 607: The MME-WD returns the key and a security parameter required for generating the key to the MME-relay.

Optionally, when the MME-WD generates the key used to protect communication security between the remote device and the relay device, the MME-WD returns the key to the MME-relay. Alternatively, when the MME-WD verifies the association relationship between the relay and the WD, the MME-WD feeds back a verification result to the MME-relay.

Optionally, the security parameter required for generating the key mainly refers to the second random number generated by the mobility management entity of the remote device. In this case, optionally, the MME-WD encapsulates the second random number into a NAS message of the MME-WD, and sends the NAS message to the MME-relay.

Step 608: The MME-relay returns, by using a first response message, the key and the security parameter required for generating the key to the relay.

Step 609: The relay receives the key and the security parameter required for generating the key, and sends, by using a communication response, the security parameter required for generating the key to the WD.

When the relay receives the key (for example, a PC5 communication key) and the security parameter required for generating the key, it indicates that authentication and authorization on the WD and the relay succeed, and the WD can perform a service by using the relay.

Step 610: The WD verifies integrity of the communication response, and generates a key based on the security parameter required for generating the key.

Optionally, the communication response includes the second NAS message generated by the mobility management entity of the remote device, and specifically, the WD verifies integrity of the second NAS message in the communication response.

Optionally, in step 606, the (first) key generated by the MME-WD may be directly used as a PC5 interface communication key for communication protection of a PC5 interface, that is, the relay directly performs security protection (for example, integrity protection) on the communication response based on the received (first) key. Correspondingly, the WD also generates the (first) key, namely, the PC5 interface communication key, based on the received security parameter required for generating the key, and then performs security verification (for example, integrity verification) on the communication response message. Optionally, the PC5 interface communication key may alternatively be a (second) key that is further generated by the relay based on the (first) key generated by the MME-WD in step 606. That is, the relay generates the (second) key based on the received (first) key as the PC5 interface communication key to perform security protection (for example, integrity protection) on the communication response. Correspondingly, after the WD generates the (first) key based on the received security parameter required for generating the key, the WD further generates the (second) key based on the (first) key, where the (second) key is the PC5 interface communication key; and then performs security verification (for example, integrity verification) on the communication response message.

Optionally, the association relationship between the remote device and the relay device may be represented by using a buddy list or a service type.

Buddy list: for example, relay ID: WD1 ID, WD2 ID, ....

Service type: for example, WD ID: (relay service code1: service1-1, servicel-2, ...); (relay service code2: service2-1, service2-2, ...); ....

It should be noted that the association relationship may alternatively be permission of another type, which is not limited in this embodiment of this application.

In addition, for the authorization and verification method in this application, the following points should be further noted:
Optionally, first, only one or both of verification on the association relationship in step 604 and verification on the association relationship in step 606 may need to be performed.

Optionally, second, the key used to protect communication security between the remote device and the relay device is optional, that is, the key may not need to be generated in step 606. In this case, the first random number and the second random number do not need to be generated and transferred. However, the NAS message of the remote device and the NAS message of the MME-WD still need to be transferred. A function is to complete security authentication between the WD and the relay by checking integrity of the NAS message of the remote device.

Optionally, third, if the key used to protect communication security between the remote device and the relay device needs to be generated, optionally, interaction between the WD and the MME-WD may not need to be encapsulated into the NAS message. That is, the first random number and the WD ID do not need to be encapsulated into the NAS message of the remote device, and the second random number does not need to be encapsulated into the NAS message of the MME-WD, either.

Optionally, fourth, if the WD ID is not included in the NAS message of the remote device in the communication request, in step 604 and step 605, the NAS message of the remote device in the first request message and the NAS message of the remote device in the second request also do not include the WD ID. In this case, in step 605, the WD ID is used as an information element of the communication request.

For implementation principles of the steps in this embodiment, refer to related record in the embodiments shown in FIG. 1A and FIG. 1B to FIG. 5. Details are not described herein again.

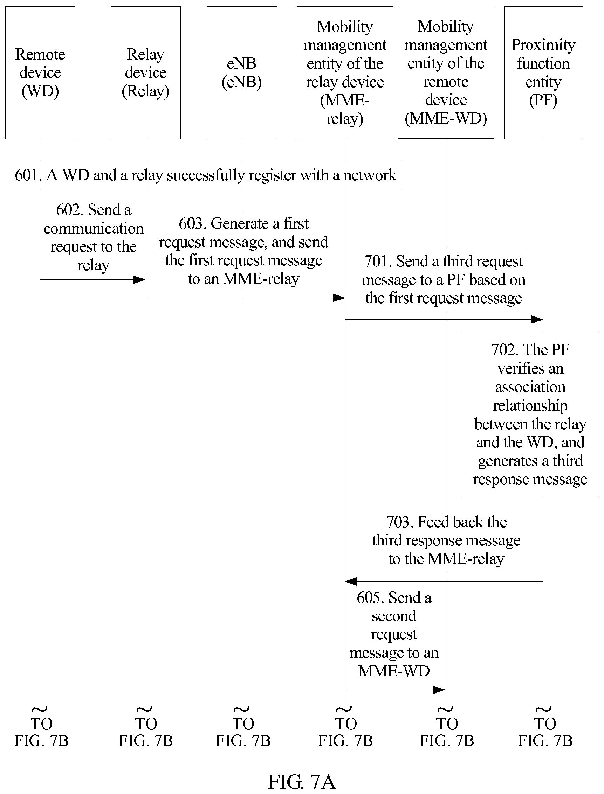

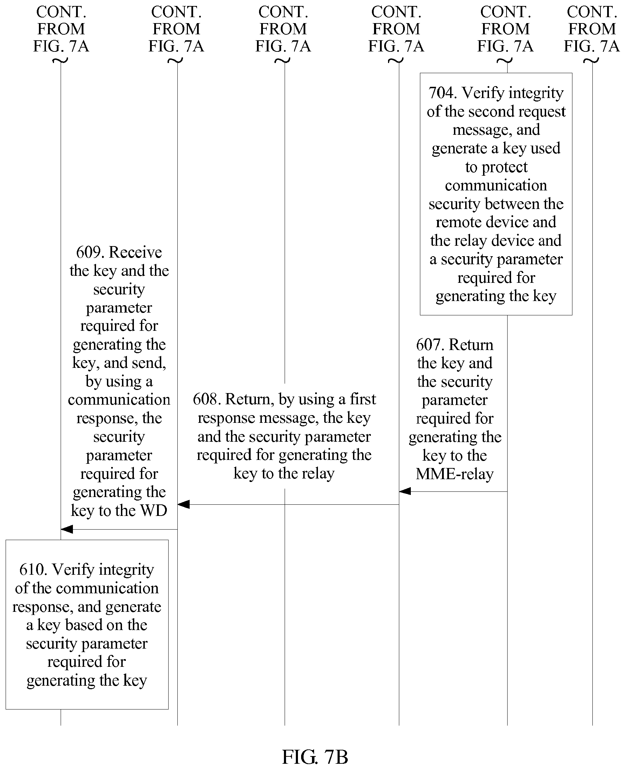

FIG. 7A and FIG. 7B are an interaction diagram of Embodiment 7 of an authorization and verification method according to an embodiment of this application. As shown in FIG. 7A and FIG. 7B, the authorization and verification method provided in this embodiment of this application is similar to that in the embodiment shown in FIG. 6A and FIG. 6B, and a difference only lies in that a PF may also perform authorization and verification. Optionally, as shown in FIG. 7A and FIG. 7B, step 604 in FIG. 6A may be replaced with steps 701 to 703, and step 606 may be replaced with step 704.

Step 701: An MME-relay sends a third request message to a PF based on a first request message.

The third request message includes an identifier of a remote device and an identifier of a relay device. Optionally, the third request message further includes a relay service code.

Step 702: The PF verifies an association relationship between a relay and a WD, and generates a third response message.

Specifically, the PF verifies the association relationship between the relay and the WD based on the third request message. Optionally, both a user data management entity and/or a ProSe function in a network store first authorization information of the relay device that is related to the remote device and second authorization information of the remote device that is related to the relay device. Therefore, after receiving the third request message, the PF verifies the association relationship between the relay device and the remote device based on the identifier of the remote device and the identifier of the relay device.

Step 703: The PF feeds back the third response message to the MME-relay.

The third response message is a result of verification performed by the PF.

Step 704: An MME-WD verifies integrity of a second request message, and generates a key used to protect communication security between the remote device and the relay device and a security parameter required for generating the key.

For verification on integrity of the second request message performed by the MME-WD and a method for generating the key, refer to record in step 501 and step 502 in the embodiment shown in FIG. 5. Details are not described herein again.

It should be noted that, for the authorization and verification method in this application, in addition to the points that should be noted in the embodiment shown in FIG. 6A and FIG. 6B, the following should be noted:
Relay app ID (identifier of a relay device client): WD1 app ID (identifier of a first remote device client), WD2 app ID, ....

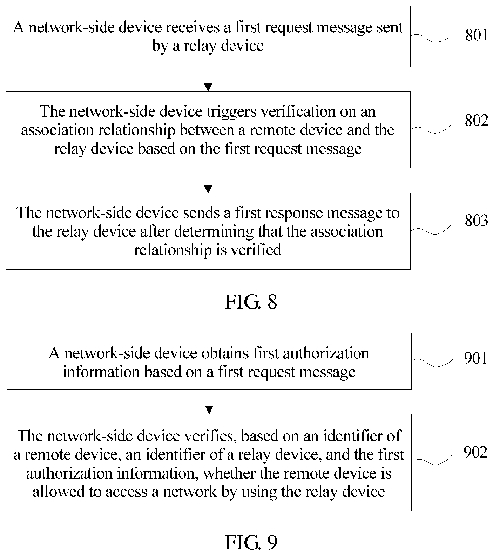

Optionally, FIG. 8 is a flowchart of Embodiment 8 of an authorization and verification method according to an embodiment of this application. As shown in FIG. 8, in the authorization and verification method provided in this embodiment of this application, the method includes the following steps:
Step 801: A network-side device receives a first request message sent by a relay device.

The first request message includes an identifier of a remote device.

Step 802: The network-side device triggers verification on an association relationship between a remote device and the relay device based on the first request message.

Step 803: The network-side device sends a first response message to the relay device after determining that the association relationship is verified.

It should be noted that, when the mobility management entity of the remote device and the mobility management entity of the relay device are integrated into one mobility management entity in the foregoing embodiment, the mobility management entity of the remote device and the mobility management entity of the relay device may be referred to as a network-side device. That is, the network-side device in this embodiment may be implemented by any one of the mobility management entity of the remote device and the mobility management entity of the relay device.

Optionally, in another embodiment of this application, the network-side device may alternatively be implemented by using a ProSe function.

In this embodiment of this application, the mobility management entity of the relay device triggers verification on the association relationship between the remote device and the relay device based on the received first request message sent by the relay device. For details, refer to record in steps 101 to 106 in the embodiment shown in FIG. 1A and FIG. IB. For details about verification on the association relationship between the remote device and the relay device performed by the mobility management entity of the remote device, refer to record in steps 105a to 105d in the embodiment shown in FIG. 1A and FIG. IB. Implementation principles and technical effects of the mobility management entity of the relay device are similar to those of the implementation solutions of the mobility management entity of the remote device and the mobility management entity of the relay device in the embodiment shown in FIG. 1A and FIG. 1B. Details are not described herein again. Verification on the association relationship between the remote device and the relay device performed by the ProSe function is similar to verification methods of the mobility management entity of the relay device and the remote device. Details are not described herein again.

Optionally, based on the embodiment shown in FIG. 8, FIG. 9 is a flowchart of Embodiment 9 of an authorization and verification method according to an embodiment of this application. As shown in FIG. 9, in the authorization and verification method provided in this embodiment of this application, step 802 (the network-side device triggers verification on an association relationship between a remote device and the relay device based on the first request message) includes the following steps:
Step 901: The network-side device obtains first authorization information based on the first request message.

Specifically, after the relay device and the remote device successfully register with a network, the network-side device obtains the first authorization information from a user data management entity and/or the ProSe function based on the first request message.

In an embodiment, when the network-side device is the mobility management entity of the relay device, after the relay device successfully registers with the network, the network-side device obtains the first authorization information from the user data management entity and/or the ProSe function based on the identifier of the relay device. In this case, the first authorization information refers to authorization information of the relay device. Optionally, for a specific method for obtaining the authorization information of the relay device, refer to record in step 201. Details are not described herein again.

In another embodiment, when the network-side device is the mobility management entity of the remote device, after the remote device successfully registers with the network, the network-side device obtains the first authorization information from the user data management entity and/or the ProSe function based on the identifier of the remote device. In this case, the first authorization information refers to authorization information of the remote device. Optionally, for a specific method for obtaining the authorization information of the remote device, refer to record in step 401. Details are not described herein again.

In still another embodiment, when the network-side device is the ProSe function, after the remote device and the relay device successfully register with the network, the network-side device separately obtains the first authorization information from the user data management entity and/or the ProSe function based on the identifier of the relay device and the identifier of the remote device. In this case, the first authorization information includes both authorization information of the remote device and authorization information of the relay device.

Step 902: The network-side device verifies, based on an identifier of the remote device, an identifier of the relay device, and the first authorization information, whether the remote device is allowed to access a network by using the relay device.

The technical solution in this embodiment is similar to the technical solution in which the relay device verifies whether the remote device is allowed to access the network by using the relay device in the embodiment shown in FIG. 2, or is similar to the technical solution in which the remote device verifies whether the remote device is allowed to access the network by using the relay device in the embodiment shown in FIG. 4. For details, refer to record in the embodiments shown in FIG. 2 and FIG. 4. Details are not described herein again.

Further, when the first request message further includes a relay service code, step 802 (the network-side device triggers verification on an association relationship between a remote device and the relay device based on the first request message) may be replaced with the following step:
The network-side device verifies, based on the identifier of the remote device, the identifier of the relay device, the relay service code, and the first authorization information, whether the remote device is allowed to access the network by using the relay device.

Optionally, when the network-side device is the mobility management entity of the relay device, for a specific implementation solution of this step, refer to record in step 202. When the network-side device is the mobility management entity of the remote device, for a specific implementation solution of this step, refer to record in step 402. A verification method of the ProSe function is similar. For details, refer to record in the embodiments shown in FIG. 2 and FIG. 4. Details are not described herein again.

In an example, in the embodiment shown in FIG. 8, step 802 (the network-side device triggers verification on an association relationship between a remote device and the relay device based on the first request message) may include the following step:
The network-side device sends a second request message to a first mobility management entity, so that the first mobility management entity verifies, based on the second request message, whether the remote device is allowed to access the network by using the relay device.

In this embodiment, when the network-side device is implemented in different manners, the first mobility management entity is also different, and various possible combination manners are specifically as follows:
Manner 1: When the network-side device is the mobility management entity of the relay device, the first mobility management entity is the ProSe function or the mobility management entity of the remote device; or
manner 2: When the network-side device is the mobility management entity of the remote device, the first mobility management entity is the ProSe function or the mobility management entity of the relay device; or
manner 2: When the network-side device is the ProSe function, the first mobility management entity is the mobility management entity of the remote device or the mobility management entity of the relay device.

This step is a solution in which verification on the association relationship between the remote device and the relay device is performed by any two of the mobility management entity of the relay device, the mobility management entity of the remote device, or the ProSe function. Verification operations are independent of each other. For a specific verification method, refer to record in the embodiment shown in FIG. 9. Details are not described herein again.

Optionally, in any embodiment of FIG. 8 or FIG. 9 of this application, when the first request message includes a non-access stratum message of the remote device and a check code of the non-access stratum message, the second request message also includes the non-access stratum message of the remote device and the check code of the non-access stratum message.

Correspondingly, step 802 (the network-side device triggers verification on an association relationship between a remote device and the relay device based on the first request message) includes the following:
The network-side device sends a second request message to the mobility management entity of the remote device, so that the mobility management entity of the remote device performs security processing on the remote device based on the second request message.

The network-side device is the mobility management entity of the relay device, or the network-side device is the ProSe function.

When the network-side device is any one of the mobility management entity of the relay device or the ProSe function, the mobility management entity of the relay device or the ProSe function further sends the second request message to the mobility management entity of the remote device, so that the mobility management entity of the remote device performs security processing on the remote device based on the second request message. For security processing on the remote device, refer to record in steps 105a to 105d in the embodiment shown in FIG. 1A and FIG. 1B. Details are not described herein again.

Optionally, in any embodiment of FIG. 8 or FIG. 9 of this application, for example, if the network-side device is the mobility management entity of the remote device, step 801 (a network-side device receives a first request message sent by a relay device) is implemented in the following possible implementation:
The network-side device receives the first request message forwarded from the relay device by using a base station, where the first request message further includes the identifier of the relay device.

In a feasible implementation, the relay device may further send the first request message to the base station, and the base station selects the corresponding mobility management entity of the remote device, and reports related content such as the identifier of the remote device and the identifier of the relay device by using initial remote device information.

When the network-side device is the mobility management entity of the remote device, and the first request message includes a non-access stratum message of the remote device and a check code of the non-access stratum message, a possible implementation of step 802 (the network-side device triggers verification on an association relationship between a remote device and the relay device based on the first request message) is as follows:
The network-side device obtains non-access stratum context information of the remote device based on the identifier of the remote device, and verifies the check code of the non-access stratum message based on the non-access stratum context information.

Specifically, an integrity protection key, a NAS algorithm, and a NAS message calculator (uplink and downlink) are agreed between the remote device and the mobility management entity of the remote device. The mobility management entity of the remote device uses the integrity protection key, a value of the NAS message calculator, the NAS message itself, and the like as input for the NAS algorithm, and generates a check value (mac- integrity) that is placed at the end of the NAS message. Likewise, the remote device also performs an operation of the NAS algorithm, and generates a check value. The remote device compares the two check values. If the two check values are consistent, it indicates that integrity check succeeds. Otherwise, it indicates that integrity check fails.

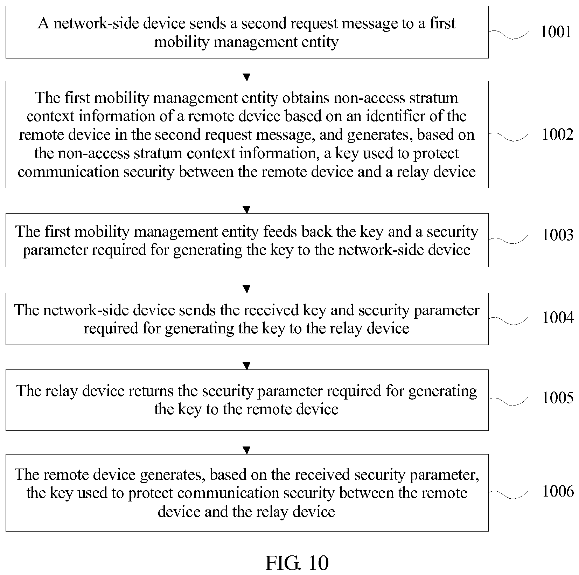

Optionally, because both the ProSe function and the mobility management entity of the remote device can generate, based on the identifier of the remote device, a key used to protect communication security between the remote device and the relay device, when the network-side device is the mobility management entity of the relay device, the ProSe function and the mobility management entity of the remote device are represented as the first mobility management entity for description. Therefore, the authorization and verification method provided in this embodiment of this application further includes the following steps. For details, refer to an embodiment shown in FIG. 10.

FIG. 10 is a flowchart of Embodiment 10 of an authorization and verification method according to an embodiment of this application. As shown in FIG. 10, the authorization and verification method provided in this embodiment of this application further includes the following steps:
Step 1001: A network-side device sends a second request message to a first mobility management entity.
Step 1002: The first mobility management entity obtains non-access stratum context information of a remote device based on an identifier of the remote device in the second request message, and generates, based on the non-access stratum context information, a key used to protect communication security between the remote device and a relay device.
Step 1003: The first mobility management entity feeds back the key and a security parameter required for generating the key to the network-side device.
Step 1004: The network-side device sends the received key and security parameter required for generating the key to the relay device.
Step 1005: The relay device returns the security parameter required for generating the key to the remote device.
Step 1006: The remote device generates, based on the received security parameter, the key used to protect communication security between the remote device and the relay device.

According to the authorization and verification method provided in this embodiment, the key used to protect communication security between the remote device and the relay device is generated by the first mobility management entity (a ProSe function or a mobility management entity of the remote device) for description. Implementation principles and beneficial effects of the method are similar to those in the technical solution in the embodiment shown in FIG. 5. For details, refer to the embodiment shown in FIG. 5. Details are not described herein again.

Optionally, when the network-side device is the mobility management entity of the remote device or the ProSe function, a specific operation of a manner in which the network-side device generates the key by itself is as follows:
The network-side device obtains the non-access stratum context information of the remote device based on the identifier of the remote device, generates, based on the non-access stratum context information, the key used to protect communication security between the remote device and the relay device, feeds back the key and the security parameter required for generating the key to a mobility management entity of the relay device, so that the mobility management entity of the relay device forwards the key and the security parameter required for generating the key to the relay device, the relay device returns the security parameter to the remote device, and the remote device generates, based on the security parameter, the key used to protect communication security between the remote device and the relay device.

The network-side device is the mobility management entity of the remote device or the ProSe function.

Optionally, the key is generated by the mobility management entity of the remote device based on a basic security key of the remote device.

In addition, the mobility management entity of the relay device stores context information of the relay device, the mobility management entity of the remote device stores context information of the remote device, and the ProSe function stores the context information of the relay device and the context information of the remote device.

Further, based on the foregoing embodiments, the authorization and verification method provided in this embodiment of this application further includes the following step:
The network-side device sends a key request message to a security function entity, so that the security function entity obtains, based on the key request message, the key used to protect communication security between the remote device and the relay device and the security parameter required for generating the key; and feeds back the key and the security parameter required for generating the key to the network-side device, where the key request message includes the identifier of the remote device.

In this step, when the network-side device determines that the association relationship between the remote device and the relay device is verified, but a response message finally obtained by the network-side device does not carry the key used to protect communication security between the remote device and the relay device and the security parameter required for generating the key, the network-side device directly sends the key request message to the security function entity, so that the security function entity obtains the key used to protect communication security between the remote device and the relay device and the security parameter required for generating the key, so as to ensure that the remote device can access the network by using the relay device.

The following specifically describes the authorization and verification method with reference to the foregoing embodiments by using a detailed example.

Similar to the embodiments shown in FIG. 6A and FIG. 6B and FIG. 7A and FIG. 7B, in the following figures, a remote device being a wearable device (WD), a relay device (Relay), a mobility management entity of the remote device (MME-WD), a mobility management entity of the relay device (MME-relay), a base station (eNB), a home subscriber server (Home Subscriber Server, HSS for short), a ProSe function (ProSe Function, PF for short), and the like are used for description.

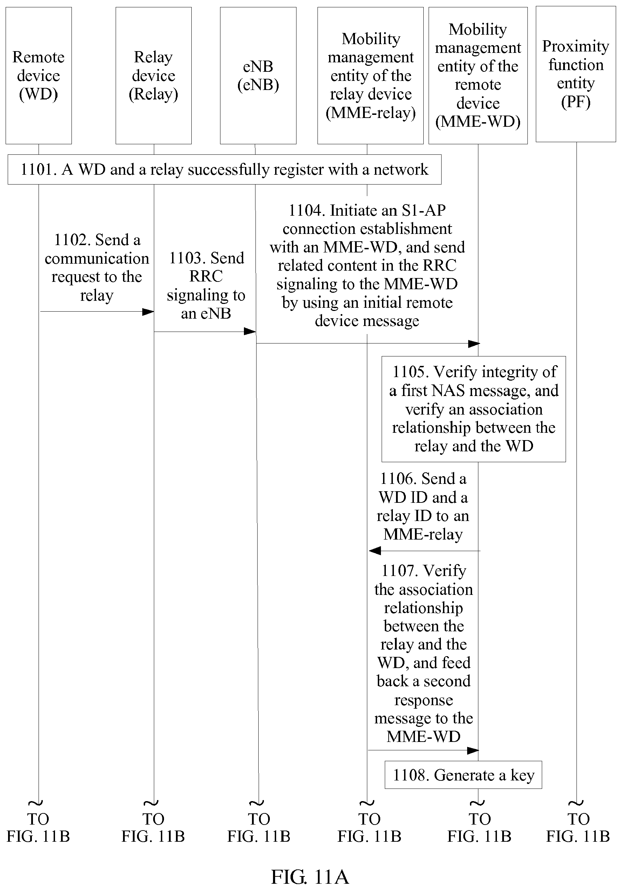

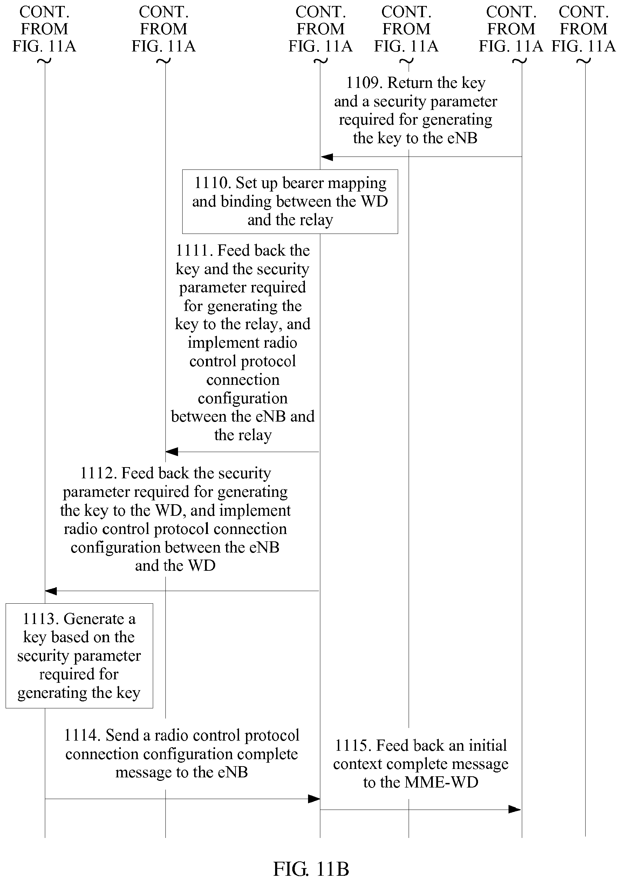

FIG. 11A and FIG. 11B are an interaction diagram of Embodiment 11 of an authorization and verification method according to an embodiment of this application. As shown in FIG. 11A and FIG. 11B, the authorization and verification method provided in this embodiment of this application is similar to that in the embodiment shown in FIG. 6A and FIG. 6B. Specific steps are as follows:
Step 1101: A WD and a relay successfully register with a network.
Step 1102: The WD sends a communication request to the relay.

The communication request carries an identifier of the remote device (WD ID). Optionally, the communication request further includes a first NAS message (a NAS message of the WD) and/or a relay service code (Relay service code). For specific content in the communication request, refer to record in step 101 in the embodiment shown in FIG. 1A and FIG. IB. Details are not described herein again.

Step 1103: The relay sends RRC signaling to a base station (eNB).

The RRC signaling includes related content in the communication request. Optionally, the RRC signaling further includes an identifier of the relay.

Step 1104: The eNB initiates an S1-AP connection establishment with an MME-WD, and sends related content in the RRC signaling to the MME-WD by using an initial remote device message.

Step 1105: The MME-WD verifies integrity of a first NAS message, and verifies an association relationship between the relay and the WD.

Optionally, for a specific operation after the MME-WD receives the first NAS message, refer to record in step 604 in the embodiment shown in FIG. 6A. Details are not described herein again. When the communication request includes the first NAS message, the MME-WD verifies integrity of the first NAS message. For a specific implementation of integrity check, refer to record in step 403. Details are not described herein again.

Step 1106: The MME-WD sends a WD ID and a relay ID to an MME-relay.

Optionally, the MME-WD may further send, to the MME-relay, another related parameter required for verifying the association relationship between the relay and the WD. In addition, the MME-WD may further send the relay service code and the like to the MME-relay.

Step 1107: The MME-relay verifies the association relationship between the relay and the WD, and feeds back a second response message to the MME-WD.

Step 1108: The MME-WD generates a key.

Specifically, the MME-WD obtains, based on the WD ID, a security parameter required for generating the key, and then generates a key used to protect communication security between the WD and the relay.

For a specific method for generating the key and the required security parameter, refer to record in step 502. Details are not described herein again.

Step 1109: The MME-WD returns the key and a security parameter required for generating the key to the eNB.

Optionally, the MME-WD returns the key and the security parameter required for generating the key to the eNB by using an initial context setup request.

Step 1110: The eNB sets up bearer mapping and binding between the WD and the relay.

Step 1111: The eNB feeds back the key and the security parameter required for generating the key to the relay, and implements radio control protocol connection configuration between the eNB and the relay.

Step 1112: The eNB feeds back the security parameter required for generating the key to the WD, and implements radio control protocol connection configuration between the eNB and the WD.

Step 1113: The WD generates a key based on the security parameter required for generating the key.

Step 1114: The WD sends a radio control protocol connection configuration complete message to the eNB.

Step 1115: The eNB feeds back an initial context complete message to the MME-WD.

For implementation principles of the steps in this embodiment, refer to related record in the foregoing embodiments. Details are not described herein again.

It should be noted that for the authorization and verification method in this application, the following points may need to be further noted:
Optionally, first, only one or both of verification on the association relationship in step 1105 and verification on the association relationship in step 1107 may need to be performed.

Optionally, second, the key used to protect communication security between the remote device and the relay device is optional, that is, the key may not need to be generated in step 1108. In this case, a first random number generated by the WD and a second random number generated by the MME-WD also do not need to be generated and transferred. However, the NAS message of the remote device and a NAS message of the MME-WD still need to be transferred. A function is to complete security authentication between the WD and the relay by checking integrity of the NAS message of the remote device.

Optionally, third, if the key used to protect communication security between the remote device and the relay device needs to be generated, optionally, interaction between the WD and the MME-WD may not need to be encapsulated into the NAS message. That is, the first random number and the WD ID do not need to be encapsulated into the NAS message of the remote device, and the second random number does not need to be encapsulated into the NAS message of the MME-WD, either.

Optionally, fourth, if the WD ID is not included in the NAS message of the remote device in the communication request, in step 604 and step 605, the NAS message of the remote device in the first request message and the NAS message of the remote device in the second request also do not include the WD ID.

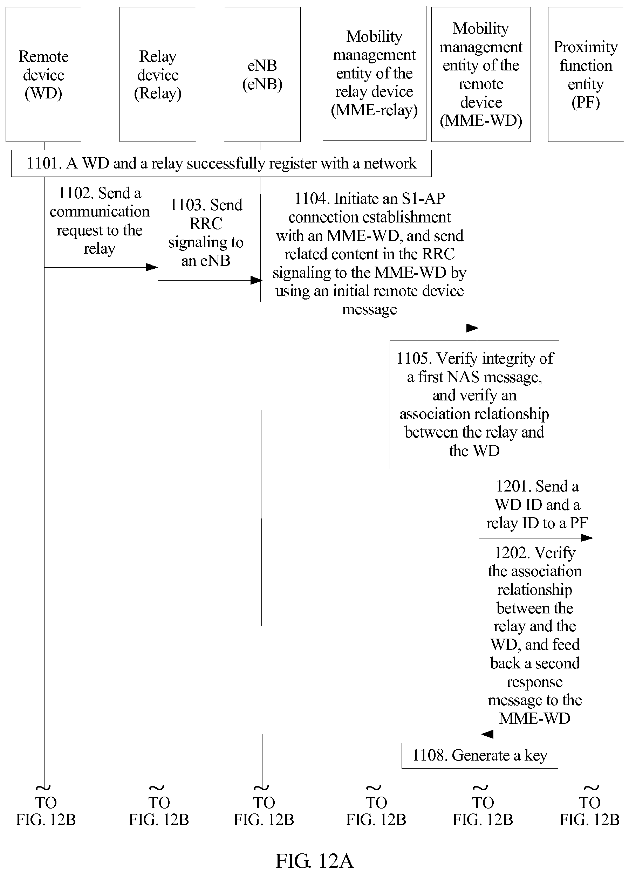

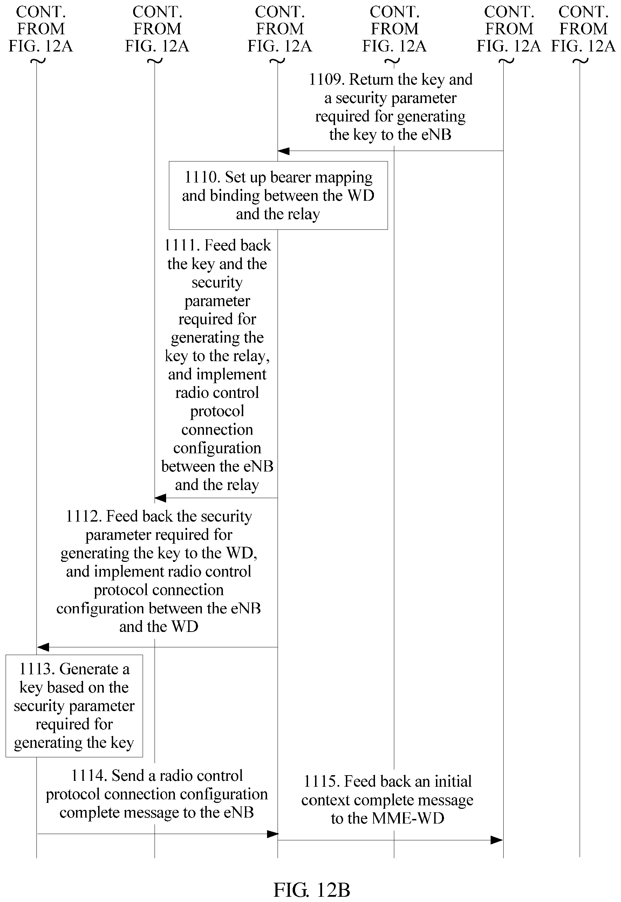

FIG. 12A and FIG. 12B are an interaction diagram of Embodiment 12 of an authorization and verification method according to an embodiment of this application. As shown in FIG. 12A and FIG. 12B, the authorization and verification method provided in this embodiment of this application is similar to that in the embodiment shown in FIG. 11A and FIG. 11B, and a difference only lies in that a PF may also perform authorization and verification. Specifically, as shown in FIG. 12A, step 1106 in FIG. 11A may be replaced with step 1201, and step 1107 may be replaced with step 1202.

Step 1201: An MME-WD sends a WD ID and a relay ID to a PF.

Optionally, similar to step 1106, the MME-WD may further send, to the PF, another related parameter required for verifying an association relationship between a relay and a WD. In addition, the MME-WD may further send a relay service code and the like to an MME-relay.

Step 1202: The PF verifies an association relationship between a relay and a WD, and feeds back a second response message to the MME-WD.

For a specific implementation solution in which the PF verifies the association relationship between the relay and the WD, refer to record in step 702. Details are not described herein again.

It should be noted that for the authorization and verification method provided in this embodiment of this application, the following points may need to be further noted:
Optionally, first, the key used to protect communication security between the remote device and the relay device is optional, that is, the key may not need to be generated in step 1108. In this case, a first random number generated by the WD and a second random number generated by the MME-WD do not need to be generated and transferred. However, a NAS message of the remote device and a NAS message of the MME-WD still need to be transferred. A function is to complete security authentication between the WD and the relay by checking integrity of the NAS message of the remote device.

Optionally, second, if the key used to protect communication security between the remote device and the relay device needs to be generated, optionally, interaction between the WD and the MME-WD may not need to be encapsulated into the NAS message. That is, the first random number and the WD ID do not need to be encapsulated into the NAS message of the remote device, and the second random number does not need to be encapsulated into the NAS message of the MME-WD, either.

Optionally, third, if the WD ID is not included in the NAS message of the remote device in the communication request, in step 604 and step 605, the NAS message of the remote device in the first request message and the NAS message of the remote device in the second request also do not include the WD ID.

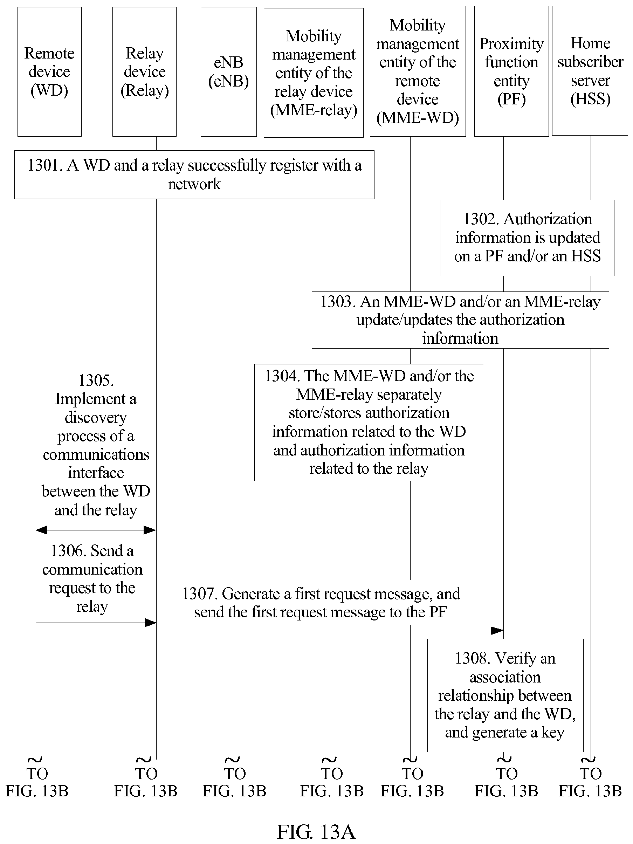

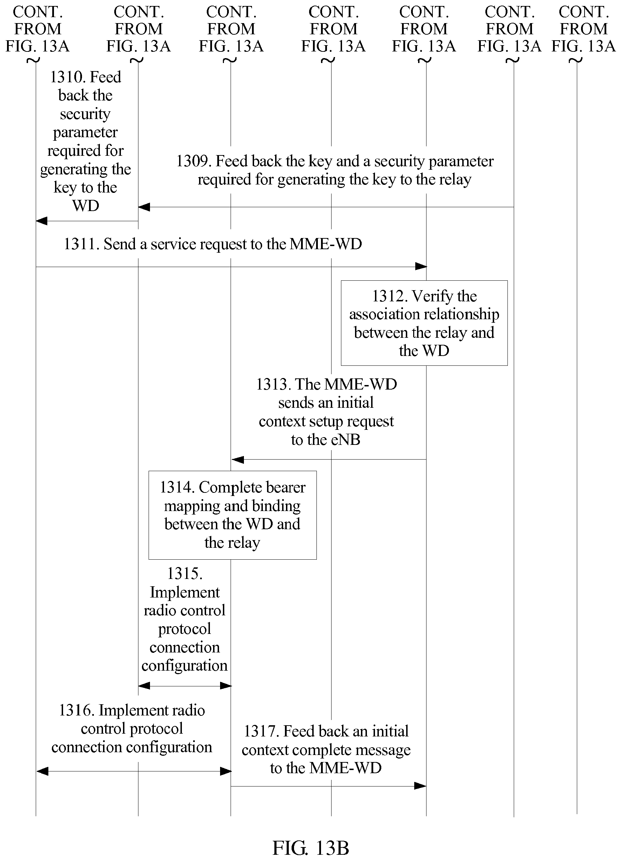

FIG. 13A and FIG. 13B are an interaction diagram of Embodiment 13 of an authorization and verification method according to an embodiment of this application. As shown in FIG. 13A and FIG. 13B, the authorization and verification method provided in this embodiment of this application includes the following specific steps.

Step 1301: A WD and a relay successfully register with a network.

Step 1302: Authorization information is updated on a PF or an HSS.

Optionally, first authorization information related to the relay, and/or second authorization information related to the WD may be updated on the PF and/or the HSS.

Step 1303: An MME-WD and/or an MME-relay update/updates the authorization information.

Optionally, the PF and/or the HSS configure/configures the updated first authorization information on the MME-relay.

Optionally, the PF and/or the HSS configure/configures the updated second authorization information on the MME-WD.

Step 1304: The MME-WD stores second authorization information related to the WD. The MME-relay stores first authorization information related to the relay.

Step 1305: Implement a discovery process of a communications interface between the WD and the relay.

Step 1306: The WD sends a communication request to the relay.

The communication request carries an identifier of the remote device (WD ID). Optionally, the communication request further includes a first NAS message (a NAS message of the WD) and/or a relay service code (Relay service code). For other content in the communication request, refer to record in step 101 in the embodiment shown in FIG. 1A and FIG. IB. Details are not described herein again.

Step 1307: The relay generates a first request message and sends the first request message to the PF.

Step 1308: The PF verifies an association relationship between the relay and the WD, and generates a key.

Optionally, after receiving the first request message, the PF may perform one or more of the following operations: First, the PF verifies the association relationship between the relay and the WD; second, the PF generates the key. Optionally, the key is a security key used to protect communication between the WD and the relay.

Step 1309: The PF feeds back the key and a security parameter required for generating the key to the relay.

Optionally, the PF feeds back the key and the security parameter required for generating the key to the relay by using a first response message.

Step 1310: The relay feeds back the security parameter required for generating the key to the WD.

In an embodiment, the relay feeds back the security parameter required for generating the key to the WD by using a communication response.

Step 1311: The WD sends a service request to the MME-WD.

Optionally, the service request carries the WD ID and a relay ID. Optionally, the service request further carries the relay service code.

Step 1312: The MME-WD verifies the association relationship between the relay and the WD.

Optionally, in this step, the MME-relay may verify the association relationship between the relay and the WD; or in this step, both the MME-WD and the MME-relay may verify the association relationship between the relay and the WD.

Optionally, if the key is not generated in step 1308, the MME-WD generates a security key used to protect communication between the WD and the relay.

Step 1313: The MME-WD sends an initial context setup request to an eNB, where the initial context request carries a WD ID and a relay ID.

Step 1314: The eNB completes bearer mapping and binding between the WD and the relay.

Step 1315: Implement radio control protocol connection configuration between the eNB and the relay.

Step 1316: Implement radio control protocol connection configuration between the eNB and the WD.

Step 1317: The eNB feeds back an initial context complete message to the MME-WD.

For implementation principles and technical effects of the steps in this embodiment, refer to related record in the foregoing embodiments. Details are not described herein again.

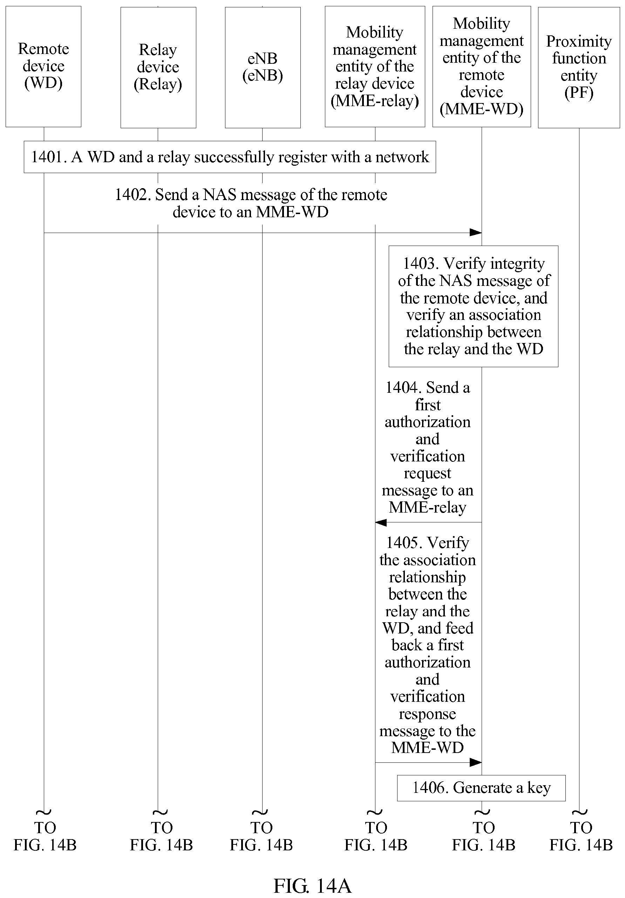

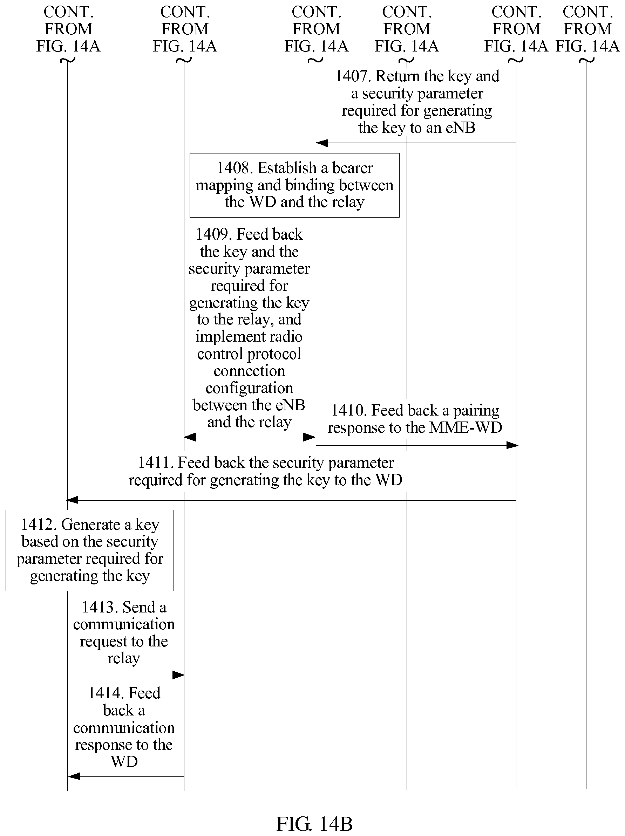

FIG. 14A and FIG. 14B are an interaction diagram of Embodiment 14 of an authorization and verification method according to an embodiment of this application. As shown in FIG. 14A and FIG. 14B, the authorization and verification method provided in this embodiment of this application is similar to that in the embodiment shown in FIG. 6A and FIG. 6B, and specifically includes the following steps:
Step 1401: A WD and a relay successfully register with a network.
Step 1402: The WD sends a NAS message of the remote device to an MME-WD.

The NAS message of the remote device carries an identifier of the remote device (WD ID) and an identifier of a relay device (Relay ID). Optionally, the NAS message of the remote device further includes a relay service code (Relay service code) and/or a first random number.

Step 1403: The MME-WD verifies integrity of the NAS message of the remote device, and verifies an association relationship between the relay and the WD.

Optionally, the MME-WD may perform one or more of the following operations: verifying integrity of the NAS message of the remote device, and verifying the association relationship between the relay and the WD.

Step 1404: The MME-WD sends a first authorization and verification request message to an MME-relay.

Step 1405: The MME-relay verifies the association relationship between the relay and the WD, and feeds back a first authorization and verification response message to the MME-WD.

For a specific implementation of verifying the association relationship between the relay and the WD by the MME-relay, refer to record in step 105 in the embodiment shown in FIG. 1A and FIG. IB. Details are not described herein again.

Step 1406: The MME-WD generates a key.

Specifically, the MME-WD generates, based on the WD ID, a key used to protect communication security between the WD and the relay, and a security parameter required for generating the key. For a specific key generation operation, refer to step 502 in the embodiment shown in FIG. 5. Details are not described herein again.

Step 1407: The MME-WD returns the key and a security parameter required for generating the key to an eNB.

Optionally, the MME-WD returns the key and the security parameter required for generating the key to the eNB by using a pairing request.

Step 1408: The eNB sets up bearer mapping and binding between the WD and the relay.

Step 1409: The eNB feeds back the key and the security parameter required for generating the key to the relay, and implements radio control protocol connection configuration between the eNB and the relay.

Step 1410: The eNB feeds back a pairing response to the MME-WD.

Step 1411: The MME-WD feeds back the security parameter required for generating the key to the WD.

Step 1412: The WD generates a key based on the security parameter required for generating the key.

Step 1413: The WD sends a communication request to the relay.

Step 1414: The relay feeds back a communication response to the WD.

It should be noted that for the authorization and verification method in this application, the following points may need to be further noted:
Optionally, first, only one or both of verification on the association relationship in step 1403 and verification on the association relationship in step 1405 may need to be performed.

Optionally, second, the key used to protect communication security between the remote device and the relay device is optional, that is, the key may not need to be generated in step 1406. In this case, a first random number generated by the WD and a second random number generated by the MME-WD that are required for generating the key do not need to be generated and transferred.

For implementation principles of the steps in this embodiment, refer to related record in the foregoing embodiments. Details are not described herein again.

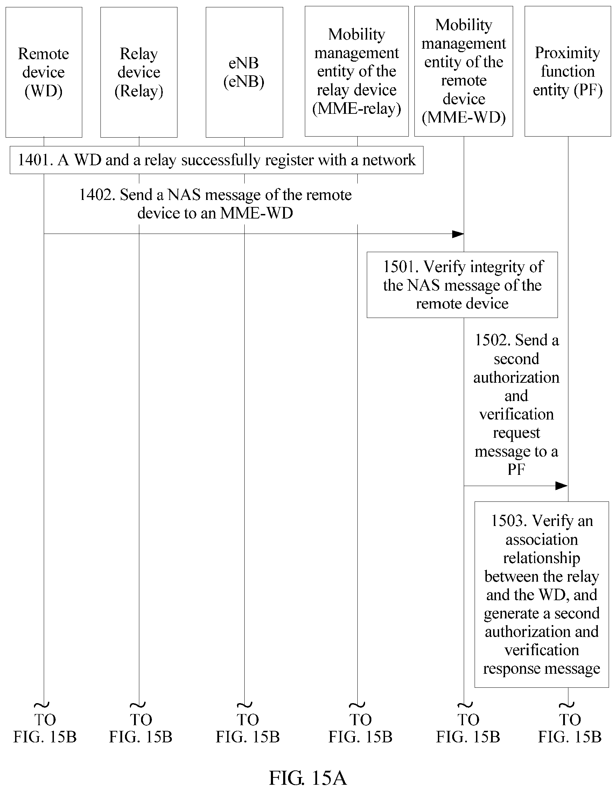

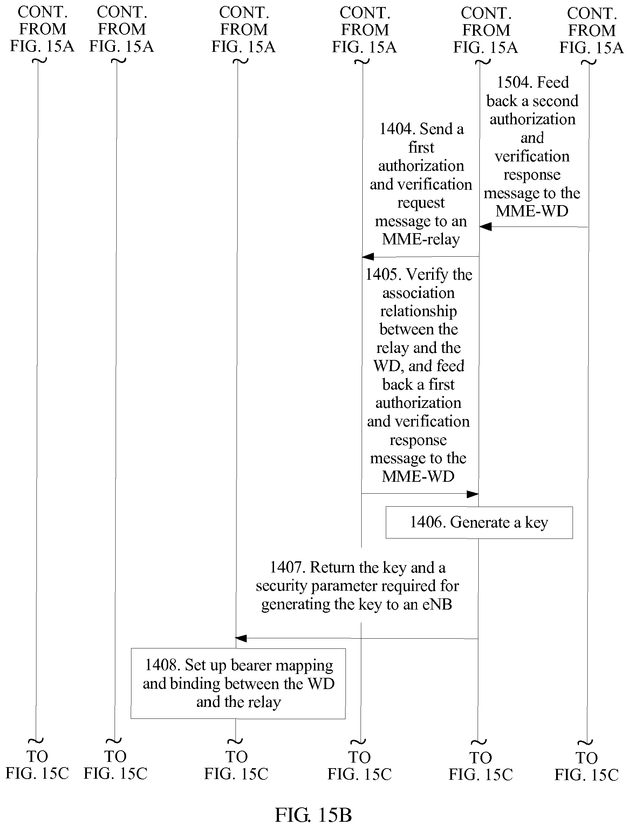

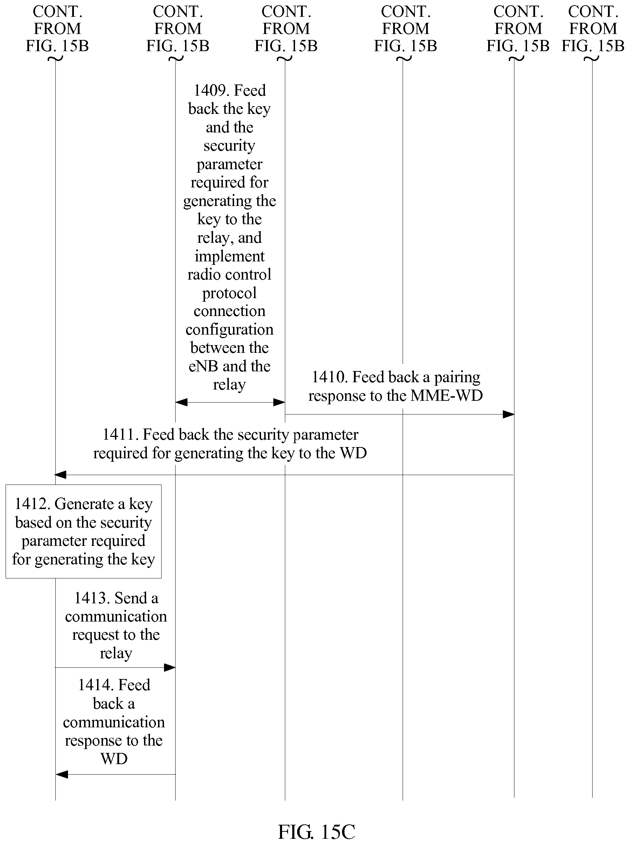

FIG. 15A, FIG. 15B, and FIG. 15C are an interaction diagram of Embodiment 15 of an authorization and verification method according to an embodiment of this application. As shown in FIG. 15A, FIG. 15B, and FIG. 15C, the authorization and verification method provided in this embodiment of this application is similar to that in the embodiment shown in FIG. 14A and FIG. 14B, and a difference only lies in that a PF may also perform authorization and verification. Specifically, as shown in FIG. 15A and FIG. 15B, step 1403 in FIG. 14A may be replaced with steps 1501 to 1504.

Step 1501: An MME-WD verifies integrity of a NAS message of a remote device.

For verification on integrity of the NAS message of the remote device performed by the MME-WD, refer to record in step 501 in the embodiment shown in FIG. 5. Details are not described herein again.

Step 1502: The MME-WD sends a second authorization and verification request message to a PF.

The MME-WD sends the second authorization and verification request message to the PF based on the NAS message of the remote device.

Step 1503: The PF verifies an association relationship between a relay and a WD, and generates a second authorization and verification response message.

Optionally, the PF verifies the association relationship between the relay and the WD based on the authorization and verification request message.

For a specific implementation solution in which the PF verifies the association relationship between the relay and the WD, refer to record in step 702. Details are not described herein again.

Step 1504: The PF feeds back the second authorization and verification response message to the MME-WD.

Content carried in a third request message is consistent with content in a first request message.

For implementation principles and technical effects of the steps in this embodiment, refer to related record in the embodiments shown in FIG. 1A and FIG. 1B to FIG. 5. Details are not described herein again.

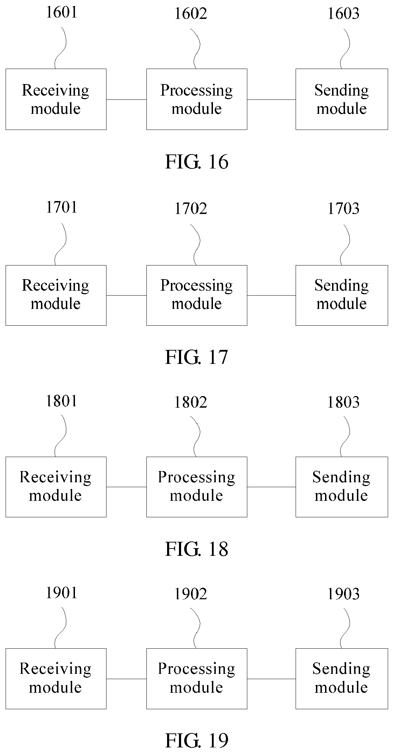

FIG. 16 is a schematic structural diagram of an authorization and verification apparatus according to an embodiment of this application. The apparatus may be located in a mobility management entity of a relay device. As shown in FIG. 16, the apparatus in this embodiment may include a receiving module 1601, a processing module 1602, and a sending module 1603.

The receiving module 1601 is configured to receive a first request message sent by the relay device, where the first request message includes an identifier of a remote device.

The processing module 1602 is configured to trigger verification on an association relationship between the remote device and the relay device based on the first request message.

The sending module 1603 is configured to: after the processing module 1602 determines that the association relationship is verified, generate a first response message and send the first response message to the relay device.

The sending module 1603 is further configured to send a second request message to a mobility management entity of the remote device, where the second request message includes the identifier of the remote device.

The receiving module 1601 is further configured to receive a second response message sent by the mobility management entity of the remote device after the mobility management entity of the remote device performs security processing on the remote device based on the second request message.

The apparatus in this embodiment may be configured to execute the technical solutions of the mobility management entity of the relay device in the method embodiment shown in FIG. 1A and FIG. IB. Implementation principles and technical effects of the apparatus are similar to those of the mobility management entity of the relay device, and details are not described herein again.

Optionally, the processing module 1602 is specifically configured to: obtain first authorization information based on the first request message, and verify, based on the identifier of the remote device, an identifier of the relay device, and the first authorization information, whether the remote device is allowed to access a network by using the relay device.

Optionally, the processing module 1602 is specifically configured to: after the relay device successfully registers with the network, obtain the first authorization information from any one or two of a user data management entity and a ProSe function based on the identifier of the relay device.

Further, when the first request message further includes a relay service code, the processing module 1602 is specifically configured to: obtain the first authorization information based on the first request message, and verify, based on the identifier of the remote device, the identifier of the relay device, the relay service code, and the first authorization information, whether the remote device is allowed to access the network by using the relay device.

In an example, the receiving module 1601 is further configured to receive a key and a security parameter required for generating the key that are sent by the mobility management entity of the remote device.

The sending module 1603 is further configured to send the key and the security parameter required for generating the key to the relay device.

Optionally, in an embodiment, the sending module 1603 is further configured to send a key request message to a security function entity, so that the security function entity obtains, based on the key request message, the key used to protect communication security between the remote device and the relay device, and the security parameter required for generating the key, and feeds back, to the mobility management entity of the relay device, the key and the security parameter required for generating the key, where the key request message includes the identifier of the remote device.

The sending module 1603 is further configured to send the key and the security parameter required for generating the key to the relay device.

Optionally, in another embodiment, the sending module 1603 is further configured to send a third request message to the ProSe function, so that the ProSe function verifies, based on the third request message, whether the remote device is allowed to access the network by using the relay device. The third request message includes the identifier of the remote device and the identifier of the relay device.

Further, in the foregoing embodiments, when the first request message further includes a non-access stratum message of the remote device and a check code of the non-access stratum message, the second request message further includes the non-access stratum message of the remote device and the check code of the non-access stratum message.

The apparatus may be configured to perform the method provided in the foregoing method embodiment. Specific implementations and technical effects of the apparatus and the method are similar, and details are not described herein again.

FIG. 17 is a schematic structural diagram of another authorization and verification apparatus according to an embodiment of this application. The apparatus may be located in a mobility management entity of a remote device. As shown in FIG. 17, the apparatus in this embodiment may include a receiving module 1701, a processing module 1702, and a sending module 1703.

The receiving module 1701 is configured to receive a second request message sent by a mobility management entity of a relay device, where the second request message includes an identifier of the remote device.

The processing module 1702 is configured to perform security processing on the remote device based on the second request message by the mobility management entity of the remote device.

The sending module 1703 is configured to: after the processing module 1702 performs security processing on the remote device, send a second response message to the mobility management entity of the relay device.

The apparatus in this embodiment may be configured to execute the technical solutions of the mobility management entity of the remote device in the method embodiment shown in FIG. 1A and FIG. IB. Implementation principles and technical effects of the apparatus are similar to those of the mobility management entity of the remote device, and details are not described herein again.

Optionally, in an embodiment, the processing module 1702 is specifically configured to: obtain second authorization information based on the second request message, and verify, based on the identifier of the remote device, an identifier of the relay device, and the second authorization information, whether the remote device is allowed to access a network by using the relay device.

In an example, the processing module 1702 is specifically configured to: after the remote device successfully registers with the network, obtain the second authorization information from a user data management entity and/or a ProSe function based on the identifier of the remote device.

Optionally, in another embodiment, when the second request message further includes a relay service code, the processing module 1702 is configured to: obtain the second authorization information based on the second request message, and verify, based on the identifier of the remote device, the identifier of the relay device, the relay service code, and the second authorization information, whether the remote device is allowed to access the network by using the relay device.

Optionally, in still another embodiment, the processing module 1702 is specifically configured to: obtain non-access stratum context information of the remote device based on the identifier of the remote device in the second request message, and verify a check code of a non-access stratum message of the remote device based on the non-access stratum context information. The second request message includes the non-access stratum message of the remote device, the check code of the non-access stratum message, and the identifier of the remote device.

Optionally, in still another embodiment, the processing module 1702 is further configured to: obtain the non-access stratum context information of the remote device based on the identifier of the remote device in the second request message, and generate, based on the non-access stratum context information, a key used to protect communication security between the remote device and the relay device.

The sending module 1703 is further configured to send the key and a security parameter required for generating the key to the mobility management entity of the relay device.

Optionally, in still another embodiment, the sending module 1703 is further configured to send a key request message to a security function entity, so that the security function entity obtains, based on the key request message, the key used to protect communication security between the remote device and the relay device, and the security parameter required for generating the key, and feeds back, to the mobility management entity of the remote device, the key and the security parameter required for generating the key, where the key request message includes the identifier of the remote device.

The apparatus may be configured to perform the method provided in the foregoing method embodiment. Specific implementations and technical effects of the apparatus and the method are similar, and details are not described herein again.

FIG. 18 is a schematic structural diagram of still another authorization and verification apparatus according to an embodiment of this application. The apparatus may be located in a relay device. As shown in FIG. 18, the apparatus in this embodiment may include a receiving module 1801, a processing module 1802, and a sending module 1803.

The receiving module 1801 is configured to receive a communication request sent by a remote device, where the communication request includes an identifier of the remote device.

The processing module 1802 is configured to generate a first request message based on the communication request, where the first request message includes the identifier of the remote device.

The sending module 1803 is configured to send the first request message to a mobility management entity of the relay device.

The receiving module 1801 is further configured to receive a first response message sent by the mobility management entity of the relay device after the mobility management entity of the relay device determines that an association relationship is verified.

The sending module 1803 is further configured to send a communication response to the remote device based on the first response message.

The apparatus in this embodiment may be configured to execute the technical solutions of the relay device in the method embodiment shown in FIG. 1A and FIG. IB. Implementation principles and technical effects of the apparatus are similar to those of the relay device, and details are not described herein again.

Optionally, in an embodiment of this application, the receiving module 1801 is further configured to receive a key used to protect communication security between the remote device and the relay device and a security parameter required for generating the key that are sent by the mobility management entity of the relay device.

The sending module 1803 is further configured to send the security parameter to the remote device by using the communication response, so that the remote device generates, based on the security parameter, the key used to protect communication security between the remote device and the relay device.

The apparatus may be configured to perform the method provided in the foregoing method embodiment. Specific implementations and technical effects of the apparatus and the method are similar, and details are not described herein again.

FIG. 19 is a schematic structural diagram of yet another authorization and verification apparatus according to an embodiment of this application. The apparatus may be located in a mobility management entity of a relay device, may be located in a mobility management entity of a remote device, or may be located in a ProSe function. As shown in FIG. 19, the apparatus in this embodiment may include a receiving module 1901, a processing module 1902, and a sending module 1903.

The receiving module 1901 is configured to receive a first request message sent by the relay device, where the first request message includes an identifier of the remote device.

The processing module 1902 is configured to trigger verification on an association relationship between the remote device and the relay device based on the first request message.

The sending module 1903 is configured to: after the processing module 1902 determines that the association relationship is verified, send a first response message to the relay device.

Optionally, in an embodiment of this application, the processing module 1902 is specifically configured to: obtain first authorization information based on the first request message, and verify, based on the identifier of the remote device, an identifier of the relay device, and the first authorization information, whether the remote device is allowed to access a network by using the relay device.

In an example, the processing module 1902 is specifically configured to: after the relay device and the remote device successfully register with the network, obtain the first authorization information from any one or two of a user data management entity and the ProSe function based on the first request message.

Optionally, in another embodiment of this application, when the first request message further includes a relay service code, the processing module 1902 is specifically configured to: obtain the first authorization information based on the first request message, and verify, based on the identifier of the remote device, the identifier of the relay device, the relay service code, and the first authorization information, whether the remote device is allowed to access the network by using the relay device.

Optionally, in still another embodiment of this application, the sending module 1903 is further configured to send a second request message to a first mobility management entity, so that the first mobility management entity verifies, based on the second request message, whether the remote device is allowed to access the network by using the relay device.

In this embodiment, when the authorization and verification apparatus is located in the mobility management entity of the relay device, the first mobility management entity is the ProSe function or the mobility management entity of the remote device; or when the authorization and verification apparatus is located in the mobility management entity of the remote device, the first mobility management entity is the ProSe function or the mobility management entity of the relay device; or when the authorization and verification apparatus is located in the ProSe function, the first mobility management entity is the mobility management entity of the remote device or the mobility management entity of the relay device.

Optionally, in still another embodiment of this application, when the first request message includes a non-access stratum message of the remote device and a check code of the non-access stratum message, the second request message includes the non-access stratum message of the remote device, the check code of the non-access stratum message, and the identifier of the remote device, and the processing module 1902 is configured to send the second request message to the mobility management entity of the remote device, so that the mobility management entity of the remote device performs security processing on the remote device based on the second request message.

In this embodiment, the authorization and verification apparatus may be located in the mobility management entity of the relay device, or the authorization and verification apparatus may be located in the ProSe function.

Optionally, in still another embodiment of this application, when the authorization and verification apparatus is located in the mobility management entity of the remote device, the receiving module 1901 is specifically configured to receive the processed first request message forwarded from the relay device by using a base station. The first request message further includes the identifier of the relay device.

Optionally, in the foregoing embodiment of this application, when the first request message includes the non-access stratum message of the remote device and the check code of the non-access stratum message, the processing module 1902 is specifically configured to: obtain non-access stratum context information of the remote device based on the identifier of the remote device, and verify the check code of the non-access stratum message based on the non-access stratum context information.

Optionally, in still another embodiment of this application, the sending module 1903 is further configured to send a second request message to the first mobility management entity, so that the first mobility management entity obtains the non-access stratum context information of the remote device based on the identifier of the remote device, generates, based on the non-access stratum context information, a key used to protect communication security between the remote device and the relay device, and feeds back the key and a security parameter required for generating the key to the authorization and verification apparatus.

The sending module 1903 is further configured to send the key and the security parameter required for generating the key to the relay device, so that the relay device returns the security parameter to the remote device, and the remote device generates, based on the security parameter, the key used to protect communication security between the remote device and the relay device.

In this embodiment, the authorization and verification apparatus may be located in the mobility management entity of the relay device, and the first mobility management entity is the ProSe function or the mobility management entity of the remote device.

Optionally, in still another embodiment of this application, the processing module 1902 is further configured to: obtain the non-access stratum context information of the remote device based on the identifier of the remote device, generate, based on the non-access stratum context information, the key used to protect communication security between the remote device and the relay device, and feed back the key and the security parameter required for generating the key to the mobility management entity of the relay device, so that the mobility management entity of the relay device forwards the key and the security parameter required for generating the key to the relay device, the relay device returns the security parameter to the remote device, and the remote device generates, based on the security parameter, the key used to protect communication security between the remote device and the relay device.

In this embodiment, the authorization and verification apparatus may be located in the mobility management entity of the remote device or the ProSe function.

Optionally, in the foregoing embodiment of this application, the key is generated by the mobility management entity of the remote device based on a basic security key of the remote device.

Optionally, in the foregoing embodiment of this application, the mobility management entity of the relay device stores context information of the relay device, the mobility management entity of the remote device stores context information of the remote device, and the ProSe function stores the context information of the relay device and the context information of the remote device.

Optionally, in still another embodiment of this application, the sending module 1903 is further configured to send a key request message to a security function entity, so that the security function entity obtains, based on the key request message, the key used to protect communication security between the remote device and the relay device, and the security parameter required for generating the key, and feeds back the key and the security parameter required for generating the key, to the network-side device, where the key request message includes the identifier of the remote device.

In addition, the authorization and verification apparatus provided in this embodiment of this application may further implement steps of the methods used for the authorization and verification apparatus in the foregoing optional embodiments. For specific implementation principles and beneficial effects, refer to the foregoing method embodiments. Details are not described herein again.

It should be noted that division of the modules in the foregoing apparatus is merely logical function division. In actual implementation, all or some of the modules may be integrated into one physical entity, or the modules may be physically separated. In addition, all of these modules may be implemented in a form of software invoked by using a processing element or may be implemented in a form of hardware, or some modules may be implemented in a form of software invoked by using a processing element and some modules may be implemented in a form of hardware. For example, a determining module may be a separately disposed processing element, or may be integrated into a chip of the foregoing apparatus for implementation. In addition, the determining module may be stored in a memory of the apparatus in a form of program code and invoked by a processing element of the apparatus to execute a function of the determining module. Implementation of other modules is similar to this. In addition, all or some of these modules may be integrated together or these modules may be implemented separately. The processing element may be an integrated circuit and has a signal processing capability. In an implementation process, steps in the foregoing methods or the foregoing modules can be implemented by using a hardware integrated logical circuit in the processing element, or by using instructions in a form of software.

For example, the foregoing modules may be configured as one or more integrated circuits for performing the foregoing methods, for example, one or more application-specific integrated circuits (Application-Specific Integrated Circuit, ASIC for short), one or more microprocessors (digital signal processor, DSP for short), or one or more field programmable gate arrays (Field Programmable Gate Array, FPGA for short). For another example, when one of the foregoing modules is implemented by using the processing element to schedule the program code, the processing element may be a general-purpose processor, for example, a central processing unit (Central Processing Unit, CPU for short), or another processor that can invoke the program code. For another example, these modules may be integrated together and implemented in a form of a system-on-a-chip (system-on-a-chip, SOC for short).

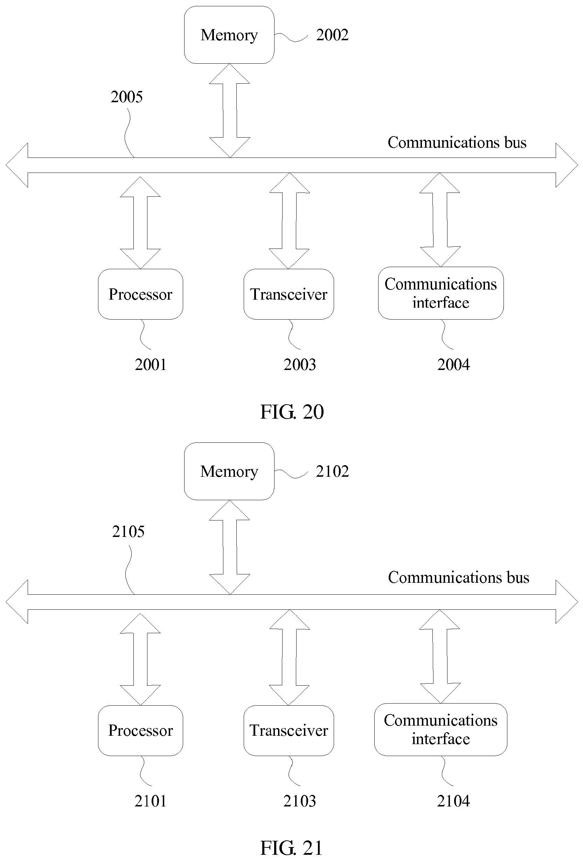

FIG. 20 is a schematic structural diagram of yet another authorization and verification apparatus according to an embodiment of this application. The authorization and verification apparatus provided in this embodiment includes a processor 2001, a memory 2002, a transceiver 2003, a communications interface 2004, and a system bus 2005. The memory 2002 and the communications interface 2004 are connected to the processor 2001 and the transceiver 2003 and complete mutual communication by using the system bus 2005. The memory 2002 is configured to store a computer executable instruction. The communications interface 2004 is configured to communicate with another device. The processor 2001 and the transceiver 2003 are configured to run the computer executable instruction, so that the authorization and verification apparatus performs the steps of the mobility management entity of the relay device applied to the authorization and verification method.

Specifically, in FIG. 16, the receiving module 1601 and the sending module 1603 are corresponding to the transceiver 2003, the processing module 1602 is corresponding to the processor 2001, and the like.

FIG. 21 is a schematic structural diagram of yet another authorization and verification apparatus according to an embodiment of this application. The authorization and verification apparatus provided in this embodiment includes a processor 2101, a memory 2102, a transceiver 2103, a communications interface 2104, and a system bus 2105. The memory 2102 and the communications interface 2104 are connected to the processor 2101 and the transceiver 2103 and complete mutual communication by using the system bus 2105. The memory 2102 is configured to store a computer executable instruction. The communications interface 2104 is configured to communicate with another device. The processor 2101 and the transceiver 2103 are configured to run the computer executable instruction, so that the authorization and verification apparatus performs the steps of the mobility management entity of the remote device applied to the authorization and verification method.

Specifically, in FIG. 17, the receiving module 1701 and the sending module 1703 are corresponding to the transceiver 2103, the processing module 1702 is corresponding to the processor 2101, and the like.

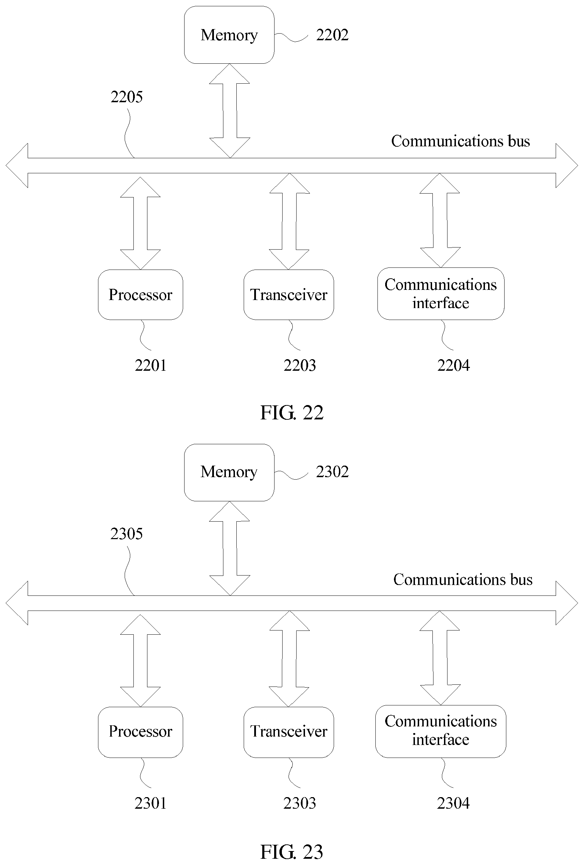

FIG. 22 is a schematic structural diagram of yet another authorization and verification apparatus according to an embodiment of this application. The authorization and verification apparatus provided in this embodiment includes a processor 2201, a memory 2202, a transceiver 2203, a communications interface 2204, and a system bus 2205. The memory 2202 and the communications interface 2204 are connected to the processor 2201 and the transceiver 2203 and complete mutual communication by using the system bus 2205. The memory 2202 is configured to store a computer executable instruction. The communications interface 2204 is configured to communicate with another device. The processor 2201 and the transceiver 2203 are configured to run the computer executable instruction, so that the authorization and verification apparatus performs the steps of the relay device applied to the authorization and verification method.

Specifically, in FIG. 18, the receiving module 1801 and the sending module 1803 are corresponding to the transceiver 2203, the processing module 1802 is corresponding to the processor 2201, and the like.

FIG. 23 is a schematic structural diagram of yet another authorization and verification apparatus according to an embodiment of this application. The authorization and verification apparatus provided in this embodiment includes a processor 2301, a memory 2302, a transceiver 2303, a communications interface 2304, and a system bus 2305. The memory 2302 and the communications interface 2304 are connected to the processor 2301 and the transceiver 2303 and complete mutual communication by using the system bus 2305. The memory 2302 is configured to store a computer executable instruction. The communications interface 2304 is configured to communicate with another device. The processor 2301 and the transceiver 2303 are configured to run the computer executable instruction, so that the authorization and verification apparatus performs the steps of the network-side device applied to the authorization and verification method.

Specifically, in FIG. 19, the receiving module 1901 and the sending module 1903 are corresponding to the transceiver 2303, the processing module 1902 is corresponding to the processor 2301, and the like.

The system bus mentioned from FIG. 20 to FIG. 23 may be a peripheral component interconnect (Peripheral Component Interconnect, PCI for short) bus, an extended industry standard architecture (Extended Industry Standard Architecture, EISA for short) bus, and or the like. The system bus may be classified into an address bus, a data bus, a control bus, and the like. For ease of representation, only one thick line is used to represent the bus in the figure, but this does not mean that there is only one bus or only one type of bus. The communications interface is configured to implement communication between a database access apparatus and another device (such as a client, a read/write database, or a read-only database). The memory may include a random access memory (Random Access Memory, RAM for short), or may be a non-volatile memory (non-volatile memory), for example, at least one magnetic disk memory.

The foregoing processor may be a general-purpose processor, including a central processing unit (Central Processing Unit, CPU for short), a network processor (Network Processor, NP for short), and the like; or may further be a digital signal processor (Digital Signal Processor, DSP for short), an application-specific integrated circuit (Application-Specific Integrated Circuit, ASIC for short), a field programmable gate array (Field Programmable Gate Array, FPGA for short), or another programmable logical device, a discrete gate or a transistor logical device, or a discrete hardware component.

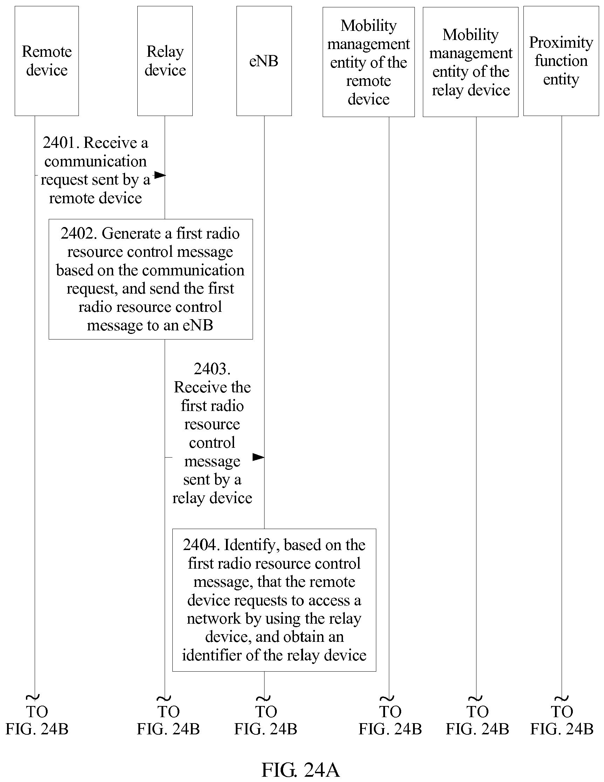

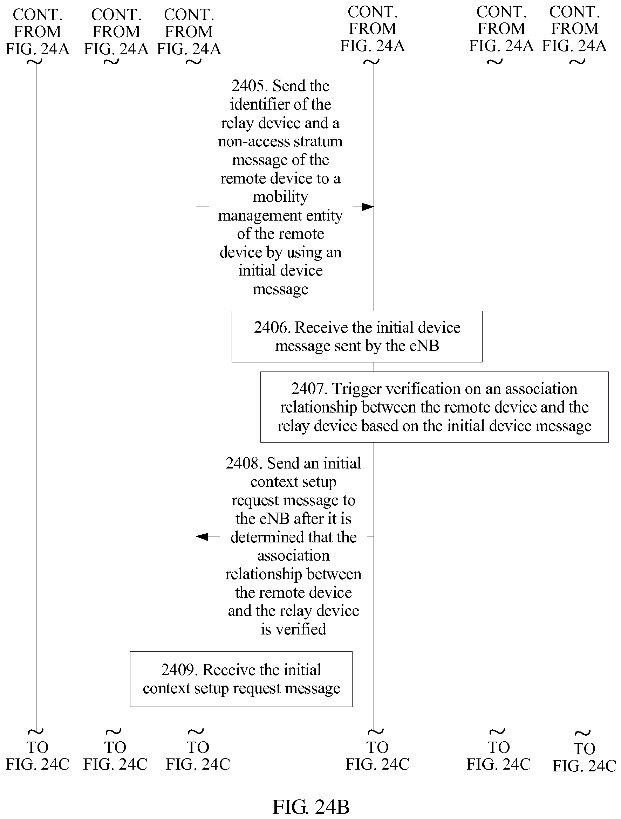

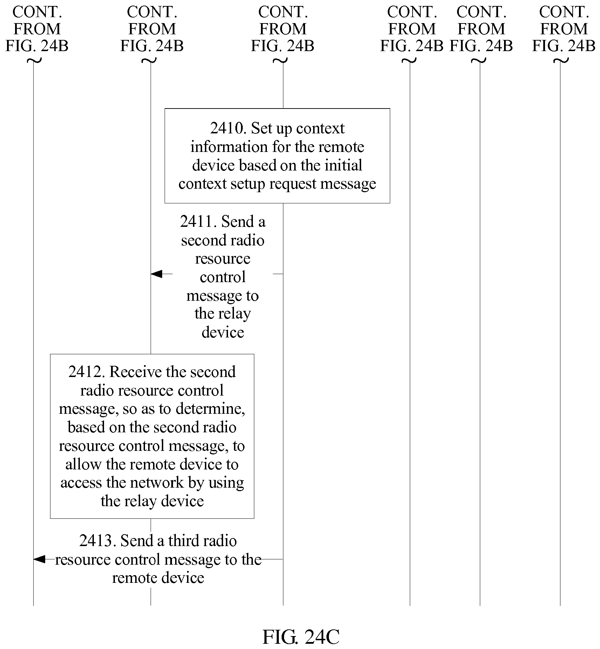

Optionally, FIG. 24A, FIG. 24B, and FIG. 24C are an interaction diagram of Embodiment 16 of an authorization and verification method according to an embodiment of this application. As shown in FIG. 24A, FIG. 24B, and FIG. 24C, in the authorization and verification method provided in this embodiment of this application, the method includes the following steps.

Step 2401: A relay device receives a communication request sent by a remote device.

In an example, the communication request includes a non-access stratum (NAS) message of the remote device. Optionally, the non-access stratum message includes an identifier of the remote device. Optionally, the identifier of the remote device is directly included in the communication request. Optionally, in a process of setting up a communications interface (for example, a PC5 interface) between the relay device and the remote device, the remote device sends the NAS message of the remote device to the relay device by using the communication request.

In another example, the communication request does not include the NAS message of the remote device, and the remote device sends the NAS message of the remote device to the relay device in the process of setting up the communications interface (for example, a PC5 interface) between the relay device and the remote device or after the process of setting up the communications interface (for example, a PC5 interface) ends.

Optionally, the communication request may further include one or more of the following content: a relay service code and a first random number. Optionally, the first random number is generated by the remote device, and may be directly carried in the communication request. Optionally, when the communication request includes the non-access stratum message of the remote device, the first random number may alternatively be included in the non-access stratum message of the remote device, instead of being directly carried in the communication request.

Step 2402: The relay device generates a first radio resource control message based on the communication request, and sends the first radio resource control message to a base station.

Optionally, the first radio resource control message is a radio resource control message of the remote device, or the first radio resource control message is a radio resource control message of the relay device. Optionally, the first radio resource control message is a radio resource control (RRC) connection setup complete message.

Optionally, in an embodiment, after receiving the communication request of the remote device, the relay device encapsulates the content in the communication request into the first radio resource control information and sends the first radio resource control information to the base station.

In another embodiment, in addition to encapsulating the content of the received communication request into the first radio resource control information, for example, the NAS message of the remote device, the relay device may integrate another related parameter required for verifying an association relationship between the remote device and the relay device into the first request message. For example, the first radio resource control information includes an identifier of the relay device.

That is, the relay device sends the identifier of the relay device to the base station by using the first radio resource control message, so that the base station identifies that the remote device requests to access a network by using the relay device. In this way, the base station may determine the identifier of the relay device and the identifier of the remote device based on the first radio resource control message, and when identifying that the remote device requests to access the network by using the relay device, send an initial device message to a mobility management entity of the remote device, so that the mobility management entity of the remote device triggers verification on the association relationship between the relay device and the remote device.

Step 2403: The base station receives the first radio resource control message sent by the relay device.

Optionally, the first radio resource control message includes the non-access stratum message of the remote device.

In this embodiment, when the communication request sent by the remote device to the relay device includes the non-access stratum message of the remote device, the non-access stratum message of the remote device is encapsulated into the first radio resource control information by the relay device, so that the first radio resource control message received by the base station also includes the non-access stratum message of the remote device.

Step 2404: The base station identifies, based on the first radio resource control message, that the remote device requests to access a network by using the relay device, and obtains an identifier of the relay device.

After receiving the first radio resource control message, the base station may identify, based on the first radio resource control message, that the remote device requests to access the network by using the relay device. For example, optionally, if the base station identifies that the received first radio resource control message is a radio resource control message of the remote device, the base station determines that the remote device requests to access the network by using the relay device. Optionally, if the base station identifies that the first radio resource control message is a radio resource control message of the relay device but includes the identifier of the remote device, the base station determines that the remote device requests to access the network by using the relay device.

Optionally, when the base station identifies that the remote device requests to access the network by using the relay device, the base station obtains the identifier of the relay device, and further sends both the identifier of the relay device and the non-access stratum message of the remote device to the mobility management entity of the remote device, so as to trigger the mobility management entity of the remote device to verify the association relationship between the remote device and the relay device.

In this embodiment of this application, the base station may obtain the identifier of the relay device in one of the following possible implementations:
In an example, after the relay device sets up a connection to the base station, the base station sets up and stores context information of the relay device, that is, the base station stores the context information of the relay device, including the identifier of the relay device. Therefore, when the base station identifies, based on the first radio resource control message, that the remote device requests to access the network by using the relay device, the base station is triggered to obtain the identifier of the relay device from the context information of the relay device that is stored in the base station.

In another example, when the relay device encapsulates the related content in the communication request into the first radio resource control message, the relay device also encapsulates the identifier of the relay device into the first radio resource control message. Therefore, the base station may also obtain the identifier of the relay device from the first radio resource control message.

Step 2405: The base station sends the identifier of the relay device and the non-access stratum message of the remote device to a mobility management entity of the remote device by using an initial device message.

In this embodiment, to verify the association relationship between the remote device and the relay device, the base station generates the initial device message of the remote device based on the obtained identifier of the relay device and non-access stratum message of the remote device, and further sends the identifier of the relay device and the non-access stratum message of the remote device to the mobility management entity of the remote device by using the initial device message, so that the mobility management entity of the remote device triggers verification on the association relationship between the remote device and the relay device. For a plurality of implementations of verifying the association relationship, refer to record in the following step 2407. Details are not described herein.

The identifier of the remote device may be included in the non-access stratum message of the remote device in the first radio resource control message, and/or directly included in the first radio resource control message. Therefore, optionally, the base station obtains the identifier of the remote device from the first radio resource control message, and adds the identifier of the remote device to the initial device message. Therefore, the identifier of the remote device may be included in the non-access stratum message of the remote device in the initial device message, and/or the identifier of the remote device is directly included in the initial device message.

Step 2406: The mobility management entity of the remote device receives the initial device message sent by the base station.

Optionally, the initial device message includes the non-access stratum message of the remote device and the identifier of the relay device.

Optionally, the initial device message further directly includes the identifier of the remote device.

Step 2407: The mobility management entity of the remote device triggers verification on an association relationship between the remote device and the relay device based on the initial device message.

Optionally, that the mobility management entity of the remote device triggers verification on the association relationship between the remote device and the relay device includes one or more of the following possible implementations: In a first manner, the mobility management entity of the remote device is triggered to verify the association relationship between the remote device and the relay device based on the initial device message. In a second manner, the mobility management entity of the remote device is triggered to send the identifier of the remote device and the identifier of the relay device to a mobility management entity of the relay device, so that the mobility management entity of the relay device verifies the association relationship. In a third manner, the mobility management entity of the remote device is triggered to send the identifier of the remote device and the identifier of the relay device to a ProSe function, so that the ProSe function verifies the association relationship.

It should be noted that when the second manner does not need to be performed, the mobility management entity of the remote device does not need to interact with the mobility management entity of the relay device. When the third manner does not need to be performed, the mobility management entity of the remote device does not need to interact with the ProSe function.

It should be noted that, when the mobility management entity of the remote device performs the plurality of possible implementations, this embodiment does not limit an execution sequence of the plurality of possible implementations, and an execution sequence of any combination falls within the protection scope of this application.

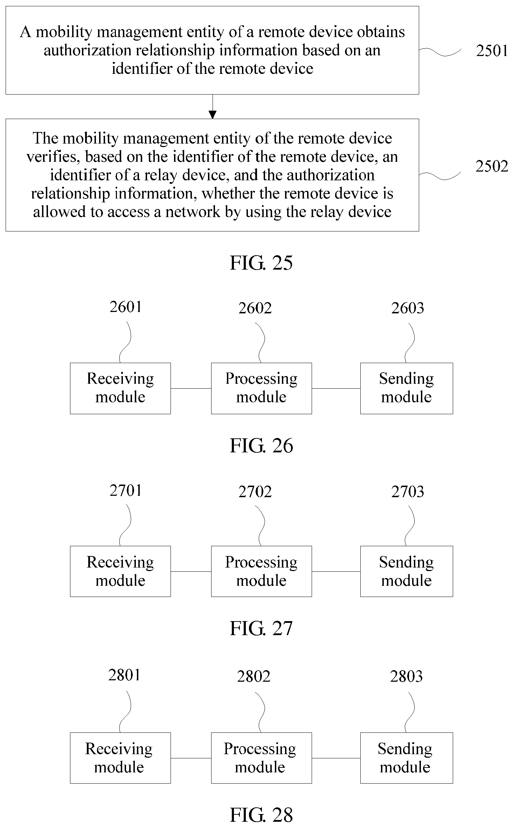

Optionally, in this embodiment, when the identifier of the remote device is included in the non-access stratum message of the remote device, the mobility management entity of the remote device may obtain authorization relationship information based on the identifier of the remote device that is carried in the non-access stratum message, and the authorization relationship information may indicate a list of relay devices that have an association relationship with the remote device. Therefore, the mobility management entity of the remote device may verify the association relationship between the remote device and the relay device based on the initial device message. For a specific verification method, refer to record in the following embodiment shown in FIG. 25. Details are not described herein.

Optionally, in another embodiment, verification on the association relationship between the remote device and the relay device may alternatively be performed by the mobility management entity of the relay device. Specifically, the mobility management entity of the remote device sends a first verification request message to the mobility management entity of the relay device, where the first verification request message includes the identifier of the remote device and the identifier of the relay device, so that the mobility management entity of the relay device can verify the association relationship between the remote device and the relay device based on the first verification request message. It should be noted that a list of remote devices that have an association relationship with the relay device is also stored on the mobility management entity of the relay device. Therefore, the mobility management entity of the relay device may verify the association relationship between the remote device and the relay device in combination with the identifier of the remote device and the identifier of the relay device.

Optionally, in still another embodiment, verification on the association relationship between the remote device and the relay device may alternatively be performed by the ProSe function. Specifically, the mobility management entity of the remote device sends a second verification request message to the ProSe function, where the second verification request message includes the identifier of the remote device and the identifier of the relay device. Because the ProSe function stores the list of remote devices that have an association relationship with the relay device and/or the list of relay devices that have an association relationship with the remote device, the ProSe function may also verify the association relationship between the remote device and the relay device.

Optionally, because the initial device message includes the non-access stratum message of the remote device, the mobility management entity of the remote device may further obtain non-access stratum context information of the remote device based on the identifier of the remote device, and perform integrity check on the non-access stratum message of the remote device. Specifically, the mobility management entity of the remote device verifies a check code of the non-access stratum message of the remote device based on the non-access stratum context information.

For example, an integrity protection key, a NAS algorithm, a NAS message calculator (uplink and downlink) are established between the remote device and the mobility management entity of the remote device. The remote device uses the integrity protection key, a value of the NAS message calculator, the NAS message itself, and the like as input for the NAS algorithm, and generates a check value (mac-integrity) that is placed at the end of the NAS message. Likewise, the mobility management entity of the remote device also performs an operation of the NAS algorithm, and generates a check value. The mobility management entity of the remote device compares the two check values. If the two check values are consistent, it indicates that integrity check succeeds. Otherwise, integrity check fails.

Optionally, the mobility management entity of the remote device may further obtain the non-access stratum context information of the remote device based on the identifier of the remote device in the initial device message, generate, based on the non-access stratum context information, a key used to protect communication security between the remote device and the relay device, and finally send the key and a security parameter required for generating the key to the base station by using an initial context setup request message. The identifier of the remote device is included in the NAS message or directly included in the initial device message.

Optionally, when it is determined that the association relationship between the remote device and the relay device is verified, but integrity check on the NAS message of the remote device fails, or the NAS message of the remote device does not have integrity protection, the mobility management entity of the remote device sends a key request message to a security function entity, so that the security function entity obtains, based on the key request message, the key used to protect communication security between the remote device and the relay device and the security parameter required for generating the key, and feeds back the key and the security parameter required for generating the key to the mobility management entity of the remote device, where the key request message includes the identifier of the remote device. Optionally, the security function entity may be a user data management entity, an authentication server function entity, a wearable function management entity, or the like.

Step 2408: The mobility management entity of the remote device sends an initial context setup request message to the base station after determining that the association relationship between the remote device and the relay device is verified.

Optionally, in this embodiment, after the association relationship between the remote device and the relay device is verified, the mobility management entity of the remote device sends the initial context setup request message to the base station, where the initial context setup request message includes the identifier of the relay device.

Step 2409: The base station receives the initial context setup request message.

In this embodiment, it may be learned from step 2408 that the initial context setup request message is sent by the mobility management entity of the remote device after the mobility management entity of the remote device determines that the association relationship between the remote device and the relay device is verified.

Optionally, when the mobility management entity of the remote device generates the key used to protect communication security between the remote device and the relay device, the mobility management entity of the remote device further sends the key used to protect communication security between the remote device and the relay device and the security parameter required for generating the key to the base station. Correspondingly, the base station further receives the key used to protect communication security between the remote device and the relay device and the security parameter required for generating the key that are sent by the mobility management entity of the relay device.

Step 2410: The base station sets up context information for the remote device based on the initial context setup request message.

Optionally, when the base station receives the initial context setup request message sent by the mobility management entity of the remote device after the mobility management entity of the remote device determines that the association relationship between the remote device and the relay device is verified, the base station sets up the context information for the remote device based on the received initial context setup request message, and stores the context information of the remote device.

Optionally, the base station may further establish a mapping relationship between the remote device and the relay device based on the initial context setup request message, so as to route data and signaling for the remote device. Optionally, further, the mapping relationship between the remote device and the relay device includes: a mapping relationship of a data radio bearer (Data Radio Bearer, DRB) between the remote device and the relay device, and/or a mapping relationship of a signaling radio bearer (Signaling Radio Bearer, SRB) between the remote device and the relay device.

Step 2411: The base station sends a second radio resource control message to the relay device.

Optionally, the base station feeds back, to the relay device by using the second radio resource control message, that the association relationship between the remote device and the relay device is verified. In an example, when the mobility management entity of the remote device generates the key used to protect communication security between the remote device and the relay device, the initial context setup request message received by the base station includes the key and the security parameter for generating the key, and the second radio resource control message sent by the base station to the relay device may also include the key, so that the relay device compares the key with the key generated by the remote device, to protect communication security between the remote device and the relay device.

Step 2412: The relay device receives the second radio resource control message, so as to determine, based on the second radio resource control message, to allow the remote device to access the network by using the relay device.

Optionally, the relay device sets up the mapping relationship between the remote device and the relay device based on the second radio resource control message sent by the base station, so as to route data and signaling for the remote device. Optionally, further, the mapping relationship between the remote device and the relay device includes the mapping relationship of the DRB between the remote device and the relay device, and/or the mapping relationship of the SRB between the remote device and the relay device.

Optionally, the second radio resource control message includes the key used to protect communication security between the remote device and the relay device. In this way, the relay device may use the key to verify whether the key of the remote device is correct, so as to ensure communication security between the remote device and the relay device.

Optionally, in this embodiment, the authorization and verification method further includes the following step 2413.

Step 2413: The base station sends a third radio resource control message to the remote device.

After the remote device receives the third radio resource control message sent by the base station, the remote device may generate, based on the third radio resource control message, the key used to protect communication security between the remote device and the relay device, where the third radio resource control message includes the security parameter required for generating the key.

Optionally, when the remote device receives the security parameter required for generating the key, the remote device may generate the key based on the received security parameter required for generating the key. The remote device performs security protection on subsequent signaling and data between the remote device and the relay device by using the key, and the relay device performs security verification, including decryption and/or integrity protection, on signaling and data between the remote device and the relay device by using the key received from the base station. After the relay device successfully verifies integrity check on the first piece of signaling of the remote device, the relay device confirms that the remote device is successfully authenticated, and allows the remote device to access the network by using the relay device. The first piece of signaling of the remote device is the first piece of signaling that is sent to the relay device after the remote device generates the key.

According to the authorization and verification method provided in this embodiment of this application, the relay device generates the first radio resource control message based on the communication request received from the remote device, and sends the first radio resource control message to the base station. The base station receives the first radio resource control message including the non-access stratum message of the remote device, identifies that the remote device requests to access the network by using the relay device, obtains the identifier of the relay device, sends the identifier of the relay device and the non-access stratum message of the remote device to the mobility management entity of the remote device by using the initial device message, triggers the mobility management entity of the remote device to verify the association relationship between the remote device and the relay device based on the initial device message, and sends the initial context setup request message to the base station after verification succeeds. The base station sets up the context information for the remote device based on the initial context setup request message and sends the second radio resource control message to the relay device, so that the relay device determines, based on the second radio resource control message, to allow the remote device to access the network by using the relay device. This technical solution reduces network configuration requirements, reduces network overheads, and improves authorization and verification efficiency.

Based on the foregoing embodiment, FIG. 25 is a schematic flowchart of Embodiment 17 of an authorization and verification method according to an embodiment of this application. This embodiment is a detailed description of a status of verification on the association relationship performed by the mobility management entity of the remote device in step 2407 (the mobility management entity of the remote device triggers verification on an association relationship between the remote device and the relay device based on the initial device message). As shown in FIG. 25, in the authorization and verification method provided in this embodiment of this application, step 2407 includes the following steps.

Step 2501: The mobility management entity of the remote device obtains authorization relationship information based on the identifier of the remote device.

When the mobility management entity of the remote device verifies the association relationship between the remote device and the relay device, the mobility management entity of the remote device first needs to obtain context information of the remote device, and further obtains, from the context information of the remote device, a list of relay devices that have an authorization relationship with the remote device, that is, the authorization relationship information.

Optionally, before the mobility management entity of the remote device receives the initial device message sent by the base station, the mobility management entity of the remote device obtains the authorization relationship information from the user data management entity and/or the ProSe function based on the identifier of the remote device, and stores the authorization relationship information on the mobility management entity of the remote device. In this way, the mobility management entity of the remote device can directly obtain the authorization relationship information based on the identifier of the remote device.

Optionally, both the user data management entity and/or the ProSe function in the network store authorization relationship information of the remote device that is related to the relay device. For the authorization relationship information of the remote device that is related to the relay device and in the user data management entity, the mobility management entity of the remote device directly obtains the authorization relationship information from the user data management entity (for example, a home subscriber server (Home Subscriber Server, HSS for short)), or from a user data management entity (User data management, UDM for short) in a 5G system. For the authorization relationship information stored in the ProSe function, when the mobility management entity of the remote device may directly communicate with the ProSe function, that is, there is a direct interface between the two, the mobility management entity of the remote device may directly obtain the authorization relationship information from the ProSe function. When the mobility management entity of the remote device cannot directly communicate with the ProSe function, that is, there is no direct interface between the two, the mobility management entity of the remote device obtains the authorization relationship information from the ProSe function by using the HSS.

Step 2502: The mobility management entity of the remote device verifies, based on the identifier of the remote device, the identifier of the relay device, and the authorization relationship information, whether the remote device is allowed to access the network by using the relay device.

The identifier of the remote device is included in the non-access stratum message of the remote device, and/or the identifier of the remote device is included in the initial device message.

Optionally, after the mobility management entity of the remote device obtains the identifier of the remote device, the identifier of the relay device, and the authorization relationship information, the mobility management entity of the remote device may verify the association relationship between the remote device and the relay device. That is, when the authorization relationship information includes the association relationship between the remote device and the relay device, it indicates that the remote device is allowed to access the network by using the relay device; otherwise, the remote device is not allowed to access the network by using the relay device.

Optionally, in this embodiment, when the communication request sent by the remote device to the relay device includes the relay service code, and the mobility management entity of the remote device obtains the authorization relationship information, the mobility management entity of the remote device verifies, based on the identifier of the remote device, the identifier of the relay device, the relay service code, and the authorization relationship information, whether the remote device is allowed to access the network by using the relay device. In this case, the authorization relationship information is a relationship list between a relay device that has an authorization relationship with the remote device and a corresponding relay service code.

Optionally, the relay service code is used to represent a service type to be requested by the remote device, and different relay service codes are corresponding to different service types. Therefore, in this embodiment, when the mobility management entity of the remote device verifies the association relationship between the remote device and the relay device, the relay service code is further used.

It should be noted that implementation steps of verifying the association relationship by the mobility management entity of the relay device or the ProSe function in step 2407 are similar, and details are not described herein.

According to the authorization and verification method provided in this embodiment of this application, the mobility management entity of the remote device first obtains the authorization relationship information based on the identifier of the remote device, and further verifies, based on the identifier of the remote device, the identifier of the relay device, and the authorization relationship information, whether the remote device is allowed to access the network by using the relay device. The association relationship verification method of this technical solution is simple and easy to implement.

FIG. 26 is a schematic structural diagram of yet another authorization and verification apparatus according to an embodiment of this application. The apparatus may be located in a mobility management entity of a remote device. As shown in FIG. 26, the apparatus in this embodiment may include a receiving module 2601, a processing module 2602, and a sending module 2603.

The receiving module 2601 is configured to receive an initial device message sent by a base station, where the initial device message includes a non-access stratum message of the remote device and an identifier of a relay device;
the processing module 2602 is configured to trigger verification on an association relationship between the remote device and the relay device based on the initial device message; and
the sending module 2603 is configured to: after it is determined that the association relationship is verified, send an initial context setup request message to the base station.

Optionally, the processing module 2602 is specifically configured to obtain authorization relationship information based on an identifier of the remote device, and verify, based on the identifier of the remote device, the identifier of the relay device, and the authorization relationship information, whether the remote device is allowed to access a network by using the relay device; where
the identifier of the remote device is included in the non-access stratum message of the remote device, and/or the identifier of the remote device is included in the initial device message.

Optionally, the processing module 2602 is further configured to: before the receiving module 2601 receives the initial device message sent by the base station, obtain the authorization relationship information from a user data management entity and/or a ProSe function based on the identifier of the remote device; and store the authorization relationship information on the mobility management entity of the remote device.

Optionally, the processing module 2602 is specifically configured to obtain non-access stratum context information of the remote device based on the identifier of the remote device; and perform integrity check on the non-access stratum message of the remote device.

Optionally, the processing module 2602 is further configured to obtain the non-access stratum context information of the remote device based on the identifier of the remote device, and generate, based on the non-access stratum context information, a key used to protect communication security between the remote device and the relay device; and
the sending module 2603 is further configured to send, to the base station by using the initial context setup request message, the key and a security parameter required for generating the key.

Optionally, the sending module 2603 is further configured to send a first verification request message to a mobility management entity of the relay device, so that the mobility management entity of the relay device verifies the association relationship between the remote device and the relay device based on the first verification request message, where the first verification request message includes the identifier of the remote device and the identifier of the relay device.

Optionally, the sending module 2603 is further configured to send a key request message to a security function entity, so that the security function entity obtains, based on the key request message, the key used to protect communication security between the remote device and the relay device and the security parameter required for generating the key, and feeds back, to the mobility management entity of the remote device, the key and the security parameter required for generating the key, where the key request message includes the identifier of the remote device.

The authorization and verification apparatus provided in this embodiment may be configured to execute the technical solutions of the mobility management entity of the remote device in the method embodiments shown in FIG. 24A, FIG. 24B, and FIG. 24C and FIG. 25. Specific implementations and technical effects of the apparatus are similar to those of the mobility management entity of the remote device, and are not described herein again.

FIG. 27 is a schematic structural diagram of yet another authorization and verification apparatus according to an embodiment of this application. The apparatus may be located in a base station. As shown in FIG. 27, the apparatus in this embodiment may include a receiving module 2701, a processing module 2702, and a sending module 2703.

The receiving module 2701 is configured to receive a first radio resource control message sent by a relay device, where the first radio resource control message includes a non-access stratum message of a remote device;
the processing module 2702 is configured to identify, based on the first radio resource control message, that the remote device requests to access a network by using the relay device, and obtain an identifier of the relay device; and
the sending module 2703 is configured to send the identifier of the relay device and the non-access stratum message of the remote device to a mobility management entity of the remote device by using an initial device message, where
the receiving module 2701 is further configured to receive an initial context setup request message sent by the mobility management entity of the remote device after the mobility management entity of the remote device determines that an association relationship between the remote device and the relay device is verified;
the processing module 2702 is further configured to set up context information for the remote device based on the initial context setup request message; and
the sending module 2703 is further configured to send a second radio resource control message to the relay device.

Optionally, the processing module 2702 is specifically configured to obtain the identifier of the relay device from context information of the relay device that is stored in the base station, or obtain the identifier of the relay device from the first radio resource control message.

Optionally, the receiving module 2701 is further configured to: when the mobility management entity of the remote device generates a key used to protect communication security between the remote device and the relay device, receive a key used to protect communication security between the remote device and the relay device and a security parameter required for generating the key that are sent by a mobility management entity of the relay device.

Optionally, the sending module 2703 is further configured to send a third radio resource control message to the remote device, so that the remote device generates, based on the third radio resource control message, the key used to protect communication security between the remote device and the relay device, where the third radio resource control message includes the security parameter required for generating the key.

The authorization and verification apparatus provided in this embodiment may be configured to execute the technical solutions of the base station in the method embodiment shown in FIG. 24A, FIG. 24B, and FIG. 24C. Specific implementations and technical effects of the apparatus are similar to those of the base station, and are not described herein again.

FIG. 28 is a schematic structural diagram of yet another authorization and verification apparatus according to an embodiment of this application. The apparatus may be located in a relay device. As shown in FIG. 28, the apparatus in this embodiment may include a receiving module 2801, a processing module 2802, and a sending module 2803.

The receiving module 2801 is configured to receive a communication request sent by a remote device;
the processing module 2802 is configured to generate a first radio resource control message based on the communication request; and
the sending module 2803 is configured to send the first radio resource control message to a base station, where
the receiving module 2801 is further configured to receive a second radio resource control message sent by the base station after the base station sets up context information for the remote device; and
the processing module 2802 is further configured to determine, based on the second radio resource control message, to allow the remote device to access a network by using the relay device.

Optionally, the sending module 2803 is further configured to send an identifier of the relay device to the base station by using the first radio resource control message, so that the base station identifies that the remote device requests to access the network by using the relay device.

The authorization and verification apparatus provided in this embodiment may be configured to execute the technical solutions of the relay device in the method embodiment shown in FIG. 24A, FIG. 24B, and FIG. 24C. Specific implementations and technical effects of the apparatus are similar to those of the relay device, and are not described herein again.

## Claims

1. An authorization and verification method, comprising:
receiving (2401), by a relay device, a communication request sent by a remote device;
generating (2402), by the relay device, a first radio resource control message based on the communication request, and sending the first radio resource control message to a base station;
receiving (2403), by the base station, the first radio resource control message sent by the relay device, wherein the first radio resource control message comprises a non-access stratum message of the remote device;
identifying (2404), by the base station, based on the first radio resource control message, that the remote device requests to access a network by using the relay device, obtaining an identifier of the relay device, and sending (2405) the identifier of the relay device and the non-access stratum message of the remote device to a mobility management entity of the remote device by using an initial device message;
receiving (2406), by the mobility management entity of the remote device, the initial device message sent by the base station, wherein the initial device message comprises the non-access stratum message of the remote device and the identifier of the relay device;
triggering (2407), by the mobility management entity of the remote device based on the initial device message, verification on an association relationship between the remote device and the relay device, whether the remote device is allowed to access the network by using the relay device; and
after determining that the association relationship is verified, sending (2408), by the mobility management entity of the remote device, an initial context setup request message to the base station,
receiving (2409), by the base station, the initial context setup request message sent by the mobility management entity of the remote device; and
setting up (2410), by the base station, context information for the remote device based on the initial context setup request message, and sending (2411) a second radio resource control message to the relay device; and
receiving (2412), by the relay device, the second radio resource control message sent by the base station, so as to determine, based on the second radio resource control message, to allow the remote device to access the network by using the relay device.

2. The method according to claim 1, wherein the triggering, by the mobility management entity of the remote device based on the initial device message, verification on an association relationship between the remote device and the relay device comprises:
obtaining, by the mobility management entity of the remote device, authorization relationship information based on the identifier of the remote device; and
verifying, by the mobility management entity of the remote device based on the identifier of the remote device, the identifier of the relay device, and the authorization relationship information, whether the remote device is allowed to access the network by using the relay device; wherein
the identifier of the remote device is comprised in the non-access stratum message of the remote device, and/or the identifier of the remote device is comprised in the initial device message.

3. The method according to claim 2, wherein before the receiving, by a mobility management entity of the remote device, the initial device message sent by the base station, the mobility management entity of the remote device obtains the authorization relationship information from a user data management entity and/or a ProSe function based on the identifier of the remote device; and stores the authorization relationship information on the mobility management entity of the remote device.

4. The method according to any one of claims 1 to 3, wherein the triggering, by the mobility management entity of the remote device based on the initial device message, verification on an association relationship between the remote device and the relay device comprises:
obtaining, by the mobility management entity of the remote device, non-access stratum context information of the remote device based on the identifier of the remote device, and performing integrity check on the non-access stratum message of the remote device.

5. The method according to any one of claims 1 to 4, wherein the method further comprises:
obtaining, by the mobility management entity of the remote device, the non-access stratum context information of the remote device based on the identifier of the remote device;
generating, by the mobility management entity of the remote device based on the non-access stratum context information, a key used to protect communication security between the remote device and the relay device; and
sending, by the mobility management entity of the remote device to the base station by using the initial context setup request message, the key and a security parameter required for generating the key.

6. The method according to any one of claims 1 to 5, wherein the method further comprises:
sending, by the mobility management entity of the remote device, a first verification request message to a mobility management entity of the relay device, so that the mobility management entity of the relay device verifies the association relationship between the remote device and the relay device based on the first verification request message, wherein the first verification request message comprises the identifier of the remote device and the identifier of the relay device.

7. The method according to any one of claims 1 to 6, wherein the method further comprises:
sending, by the mobility management entity of the remote device, a key request message to a security function entity, so that the security function entity obtains, based on the key request message, the key used to protect communication security between the remote device and the relay device, and the security parameter required for generating the key; and feeds back, to the mobility management entity of the remote device, the key and the security parameter required for generating the key, wherein the key request message comprises the identifier of the remote device.

8. The method according to any one of claims 1-7, wherein the obtaining, by the base station, an identifier of the relay device comprises:
obtaining, by the base station, the identifier of the relay device from context information of the relay device that is stored by the base station, or obtaining, by the base station, the identifier of the relay device from the first radio resource control message.

9. The method according to any one of claims 1-8, wherein
the identifier of the remote device is comprised in the non-access stratum message of the remote device, and/or the identifier of the remote device is comprised in the initial device message.

10. The method according to any one of claims 1-9, wherein the method further comprises:
setting up, by the base station, a mapping relationship between the remote device and the relay device based on the initial context setup request message.

11. The method according to any one of claims 1-10, wherein when the mobility management entity of the remote device generates a key used to protect communication security between the remote device and the relay device, the method further comprises:
receiving, by the base station, the key used to protect communication security between the remote device and the relay device and a security parameter required for generating the key that are sent by a mobility management entity of the relay device.

12. A computer system comprising at least four processors coupled with a non-transitory storage medium storing executable instructions; wherein the executable instructions, when executed by the processors, cause the processors to carry out the method of any one of claims 1 to 11.

13. A computer-readable storage medium comprising instructions which, when executed by a computer system, cause the computer system to carry out the method of any one of claims 1 to 11.

## Patentansprüche

1. Autorisierungs- und Verifizierungsverfahren, umfassend:
Empfangen (2401), durch eine Relaisvorrichtung, einer Kommunikationsanforderung, die von einer entfernten Vorrichtung gesendet wird;
Generieren (2402), durch die Relaisvorrichtung, einer ersten Funkressourcen-Steuerungsnachricht basierend auf der Kommunikationsanforderung und Senden der ersten Funkressourcen-Steuerungsnachricht an eine Basisstation;
Empfangen (2403), durch die Basisstation, der ersten Funkressourcen-Steuerungsnachricht, die von der Relaisvorrichtung gesendet wird, wobei die erste Funkressourcen-Steuerungsnachricht eine Nichtzugangsschicht-Nachricht der entfernten Vorrichtung umfasst;
Identifizieren (2404), durch die Basisstation, basierend auf der ersten Funkressourcen-Steuerungsnachricht, dass die entfernte Vorrichtung Zugriff auf ein Netz unter Verwendung der Relaisvorrichtung anfordert, Erhalten einer Kennung der Relaisvorrichtung und Senden (2405) der Kennung der Relaisvorrichtung und der Nichtzugangsschicht-Nachricht der entfernten Vorrichtung an eine Mobilitätsverwaltungsentität der entfernten Vorrichtung unter Verwendung einer anfänglichen Vorrichtungsnachricht;
Empfangen (2406), durch die Mobilitätsverwaltungsentität der entfernten Vorrichtung, der anfänglichen Vorrichtungsnachricht, die von der Basisstation gesendet wird, wobei die anfängliche Vorrichtungsnachricht die Nichtzugangsschicht-Nachricht der entfernten Vorrichtung und die Kennung der Relaisvorrichtung umfasst;
Auslösen (2407), durch die Mobilitätsverwaltungsentität der entfernten Vorrichtung, basierend auf der anfänglichen Vorrichtungsnachricht, einer Verifizierung für eine Verknüpfungsbeziehung zwischen der entfernten Vorrichtung und der Relaisvorrichtung, ob die entfernte Vorrichtung unter Verwendung der Relaisvorrichtung auf das Netz zugreifen darf; und
nach dem Bestimmen, dass die Verknüpfungsbeziehung verifiziert ist, Senden (2408), durch die Mobilitätsverwaltungsentität der entfernten Vorrichtung, einer anfänglichen Kontextaufbau-Anforderungsnachricht an die Basisstation,
Empfangen (2409), durch die Basisstation, der anfänglichen Kontextaufbau-Anforderungsnachricht, die von der Mobilitätsverwaltungsentität der entfernten Vorrichtung gesendet wird; und
Einrichten (2410), durch die Basisstation, von Kontextinformationen für die entfernte Vorrichtung basierend auf der anfänglichen Kontextaufbau-Anforderungsnachricht und Senden (2411) einer zweiten Funkressourcen-Steuerungsnachricht an die Relaisvorrichtung; und
Empfangen (2412), durch die Relaisvorrichtung, der zweiten Funkressourcen-Steuerungsnachricht, die von der Basisstation gesendet wird, um basierend auf der zweiten Funkressourcen-Steuerungsnachricht zu bestimmen, dass die entfernte Vorrichtung unter Verwendung der Relaisvorrichtung auf das Netz zugreifen darf.

2. Verfahren gemäß Anspruch 1, wobei das Auslösen, durch die Mobilitätsverwaltungsentität der entfernten Vorrichtung, basierend auf der anfänglichen Vorrichtungsnachricht, einer Verifizierung für eine Verknüpfungsbeziehung zwischen der entfernten Vorrichtung und der Relaisvorrichtung umfasst:
Erhalten, durch die Mobilitätsverwaltungsentität der entfernten Vorrichtung, von Autorisierungsbeziehungsinformationen basierend auf der Kennung der entfernten Vorrichtung; und
Verifizieren, durch die Mobilitätsverwaltungsentität der entfernten Vorrichtung, basierend auf der Kennung der entfernten Vorrichtung, der Kennung der Relaisvorrichtung und den Autorisierungsbeziehungsinformationen, ob die entfernte Vorrichtung unter Verwendung der Relaisvorrichtung auf das Netz zugreifen darf;
wobei
die Kennung der entfernten Vorrichtung in der Nichtzugangsschicht-Nachricht der entfernten Vorrichtung enthalten ist und/oder die Kennung der entfernten Vorrichtung in der anfänglichen Vorrichtungsnachricht enthalten ist.

3. Verfahren gemäß Anspruch 2, wobei vor dem Empfangen, durch eine Mobilitätsverwaltungsentität der entfernten Vorrichtung, der anfänglichen Vorrichtungsnachricht, die von der Basisstation gesendet wird, die Mobilitätsverwaltungsentität der entfernten Vorrichtung die Autorisierungsbeziehungsinformationen von einer Benutzerdaten-Verwaltungsentität und/oder eine ProSe-Funktion basierend auf der Kennung der entfernten Vorrichtung empfängt und die Autorisierungsbeziehungsinformationen auf der Mobilitätsverwaltungsentität der entfernten Vorrichtung speichert.

4. Verfahren gemäß einem der Ansprüche 1 bis 3, wobei das Auslösen, durch die Mobilitätsverwaltungsentität der entfernten Vorrichtung, basierend auf der anfänglichen Vorrichtungsnachricht, einer Verifizierung für eine Verknüpfungsbeziehung zwischen der entfernten Vorrichtung und der Relaisvorrichtung umfasst:
Erhalten, durch die Mobilitätsverwaltungsentität der entfernten Vorrichtung, von Nichtzugangsschicht-Kontextinformationen der entfernten Vorrichtung basierend auf der Kennung der entfernten Vorrichtung und Durchführen einer Integritätsprüfung für die Nichtzugangsschicht-Nachricht der entfernten Vorrichtung.

5. Verfahren gemäß einem der Ansprüche 1 bis 4, wobei das Verfahren ferner umfasst:
Erhalten, durch die Mobilitätsverwaltungsentität der entfernten Vorrichtung, der Nichtzugangsschicht-Kontextinformationen der entfernten Vorrichtung basierend auf der Kennung der entfernten Vorrichtung;
Generieren, durch die Mobilitätsverwaltungsentität der entfernten Vorrichtung, basierend auf den Nichtzugangsschicht-Kontextinformationen, eines Schlüssels, der verwendet wird, um die Kommunikationssicherheit zwischen der entfernten Vorrichtung und der Relaisvorrichtung zu schützen; und
Senden, durch die Mobilitätsverwaltungsentität der entfernten Vorrichtung, an die Basisstation unter Verwendung der anfänglichen Kontextaufbau-Anforderungsnachricht, des Schlüssels und eines Sicherheitsparameters, der für das Generieren des Schlüssels erforderlich ist.

6. Verfahren gemäß einem der Ansprüche 1 bis 5, wobei das Verfahren ferner umfasst:
Senden, durch die Mobilitätsverwaltungsentität der entfernten Vorrichtung, einer ersten Verifizierungsanforderungsnachricht an eine Mobilitätsverwaltungsentität der Relaisvorrichtung, so dass die Mobilitätsverwaltungsentität der Relaisvorrichtung die Verknüpfungsbeziehung zwischen der entfernten Vorrichtung und der Relaisvorrichtung basierend auf der ersten Verifizierungsanforderungsnachricht verifiziert, wobei die erste Verifizierungsanforderungsnachricht die Kennung der entfernten Vorrichtung und die Kennung der Relaisvorrichtung umfasst.

7. Verfahren gemäß einem der Ansprüche 1 bis 6, wobei das Verfahren ferner umfasst:
Senden, durch die Mobilitätsverwaltungsentität der entfernten Vorrichtung, einer Schlüsselanforderungsnachricht an eine Sicherheitsfunktionsentität, so dass die Sicherheitsfunktionsentität, basierend auf der Schlüsselanforderungsnachricht, den Schlüssel, der verwendet wird, um die Kommunikationssicherheit zwischen der entfernten Vorrichtung und der Relaisvorrichtung zu schützen, und den Sicherheitsparameter, der zum Generieren des Schlüssels erforderlich ist, erhält und an die Mobilitätsverwaltungsentität der entfernten Vorrichtung den Schlüssel und den Sicherheitsparameter, der für das Generieren des Schlüssels erforderlich ist, zurückgibt, wobei die Schlüsselanforderungsnachricht die Kennung der entfernten Vorrichtung umfasst.

8. Verfahren gemäß einem der Ansprüche 1-7, wobei das Erhalten, durch die Basisstation, einer Kennung der Relaisvorrichtung umfasst:
Erhalten, durch die Basisstation, der Kennung der Relaisvorrichtung aus Kontextinformationen der Relaisvorrichtung, die durch die Basisstation gespeichert werden, oder Erhalten, durch die Basisstation, der Kennung der Relaisvorrichtung aus der ersten Funkressourcen-Steuerungsnachricht.

9. Verfahren gemäß einem der Ansprüche 1-8, wobei die Kennung der entfernten Vorrichtung in der Nichtzugangsschicht-Nachricht der entfernten Vorrichtung enthalten ist und/oder die Kennung der entfernten Vorrichtung in der anfänglichen Vorrichtungsnachricht enthalten ist.

10. Verfahren gemäß einem der Ansprüche 1 bis 9, wobei das Verfahren ferner umfasst:
Einrichten, durch die Basisstation, einer Abbildungsbeziehung zwischen der entfernten Vorrichtung und der Relaisvorrichtung basierend auf der anfänglichen Kontextaufbau-Anforderungsnachricht.

11. Verfahren gemäß einem der Ansprüche 1-10, wobei, wenn die Mobilitätsverwaltungsentität der entfernten Vorrichtung einen Schlüssel generiert, der verwendet wird, um die Kommunikationssicherheit zwischen der entfernten Vorrichtung und der Relaisvorrichtung zu schützen, das Verfahren ferner umfasst:
Empfangen, durch die Basisstation, des Schlüssels, der verwendet wird, um die Kommunikationssicherheit zwischen der entfernten Vorrichtung und der Relaisvorrichtung zu schützen, und eines Sicherheitsparameters, der für das Generieren des Schlüssels erforderlich ist, welche von einer Mobilitätsverwaltungsentität der Relaisvorrichtung gesendet werden.

12. Computersystem, umfassend wenigstens vier Prozessoren, die mit einem nicht transitorischen Datenspeichermedium gekoppelt sind, welches ausführbare Anweisungen speichert; wobei die ausführbaren Anweisungen, wenn sie von den Prozessoren ausgeführt werden, die Prozessoren veranlassen, das Verfahren nach einem der Ansprüche 1 bis 11 auszuführen.

13. Computerlesbares Datenspeichermedium, umfassend Anweisungen, die, wenn sie von einem Computersystem ausgeführt werden, das Computersystem veranlassen, das Verfahren nach einem der Ansprüche 1 bis 11 auszuführen.

## Revendications

1. Procédé d'autorisation et de vérification, comprenant :
recevoir (2401), par un dispositif de relais, une demande de communication envoyée par un dispositif distant ;
générer (2402), par le dispositif de relais, un premier message de gestion des ressources radio sur la base de la demande de communication, et envoyer le premier message de gestion des ressources radio à une station de base ;
recevoir (2403), par la station de base, le premier message de gestion des ressources radio envoyé par le dispositif de relais, dans lequel le premier message de gestion des ressources radio comprend un message de strate sans accès du dispositif distant ;
identifier (2404), par la station de base, sur la base du premier message de gestion des ressources radio, que le dispositif distant demande à accéder à un réseau en utilisant le dispositif de relais, obtenir un identificateur du dispositif de relais, et envoyer (2405) l'identificateur du dispositif de relais et le message de strate sans accès du dispositif distant à une entité de gestion de la mobilité du dispositif distant en utilisant un message de dispositif initial ;
recevoir (2406), par l'entité de gestion de la mobilité du dispositif distant, le message de dispositif initial envoyé par la station de base, dans lequel le message de dispositif initial comprend le message de strate sans accès du dispositif distant et l'identificateur du dispositif de relais ;
déclencher (2407), par l'entité de gestion de la mobilité du dispositif distant sur la base du message de dispositif initial, la vérification d'une relation d'association entre le dispositif distant et le dispositif de relais, si le dispositif distant est autorisé à accéder au réseau en utilisant le dispositif de relais ; et
après avoir déterminé que la relation d'association est vérifiée, envoyer (2408), par l'entité de gestion de la mobilité du dispositif distant, un message de demande d'établissement de contexte initial à la station de base,
recevoir (2409), par la station de base, le message de demande d'établissement de contexte initial envoyé par l'entité de gestion de la mobilité du dispositif distant ; et
établir (2410), par la station de base, des informations de contexte pour le dispositif distant sur la base du message de demande d'établissement de contexte initial, et envoyer (2411) un second message de gestion des ressources radio au dispositif de relais ; et
recevoir (2412), par le dispositif de relais, le second message de gestion des ressources radio envoyé par la station de base, de manière à déterminer, sur la base du second message de gestion des ressources radio, d'autoriser le dispositif distant à accéder au réseau en utilisant le dispositif de relais.

2. Procédé selon la revendication 1, dans lequel le déclenchement, par l'entité de gestion de la mobilité du dispositif distant sur la base du message de dispositif initial, de la vérification d'une relation d'association entre le dispositif distant et le dispositif de relais comprend :
obtenir, par l'entité de gestion de la mobilité du dispositif distant, des informations de relation d'autorisation sur la base de l'identificateur du dispositif distant ; et
vérifier, par l'entité de gestion de la mobilité du dispositif distant sur la base de l'identificateur du dispositif distant, de l'identificateur du dispositif de relais, et des informations de relation d'autorisation, si le dispositif distant est autorisé à accéder au réseau en utilisant le dispositif de relais ;
dans lequel
l'identificateur du dispositif distant est compris dans le message de strate sans accès du dispositif distant, et/ou l'identificateur du dispositif distant est compris dans le message de dispositif initial.

3. Procédé selon la revendication 2, dans lequel, avant la réception, par une entité de gestion de la mobilité du dispositif distant, du message de dispositif initial envoyé par la station de base, l'entité de gestion de la mobilité du dispositif distant obtient les informations de relation d'autorisation à partir d'une entité de gestion de données d'utilisateurs et/ou d'une fonction proSe sur la base de l'identificateur du dispositif distant, et stocke les informations de relation d'autorisation sur l'entité de gestion de la mobilité du dispositif distant.

4. Procédé selon l'une quelconque des revendications 1 à 3, dans lequel le déclenchement, par l'entité de gestion de la mobilité du dispositif distant sur la base du message de dispositif initial, de la vérification d'une relation d'association entre le dispositif distant et le dispositif de relais comprend :
obtenir, par l'entité de gestion de la mobilité du dispositif distant, des informations de contexte de strate sans accès du dispositif distant sur la base de l'identificateur du dispositif distant, et effectuer une vérification d'intégrité sur le message de strate sans accès du dispositif distant.

5. Procédé selon l'une quelconque des revendications 1 à 4, le procédé comprenant en outre :
obtenir, par l'entité de gestion de la mobilité du dispositif distant, les informations de contexte de strate sans accès du dispositif distant sur la base de l'identificateur du dispositif distant ;
générer, par l'entité de gestion de la mobilité du dispositif distant sur la base des informations de contexte de strate sans accès, une clé utilisée pour protéger la sécurité des communications entre le dispositif distant et le dispositif de relais ; et
envoyer, par l'entité de gestion de la mobilité du dispositif distant à la station de base en utilisant le message de demande d'établissement de contexte initial, la clé et un paramètre de sécurité requis pour générer la clé.

6. Procédé selon l'une quelconque des revendications 1 à 5, le procédé comprenant en outre :
envoyer, par l'entité de gestion de la mobilité du dispositif distant, un premier message de demande de vérification à une entité de gestion de la mobilité du dispositif de relais, de sorte que l'entité de gestion de la mobilité du dispositif de relais vérifie la relation d'association entre le dispositif distant et le dispositif de relais sur la base du premier message de demande de vérification, dans lequel le premier message de demande de vérification comprend l'identificateur du dispositif distant et l'identificateur du dispositif de relais.

7. Procédé selon l'une quelconque des revendications 1 à 6, le procédé comprenant en outre :
envoyer, par l'entité de gestion de la mobilité du dispositif distant, un message de demande de clé à une entité de fonction de sécurité, de sorte que l'entité de fonction de sécurité obtient, sur la base du message de demande de clé, la clé utilisée pour protéger la sécurité des communications entre le dispositif distant et le dispositif de relais, et le paramètre de sécurité requis pour générer la clé, et renvoie, à l'entité de gestion de la mobilité du dispositif distant, la clé et le paramètre de sécurité requis pour générer la clé, dans lequel le message de demande de clé comprend l'identificateur du dispositif distant.

8. Procédé selon l'une quelconque des revendications 1 à 7, dans lequel l'obtention, par la station de base, d'un identificateur du dispositif de relais comprend :
obtenir, par la station de base, l'identificateur du dispositif de relais à partir d'informations de contexte du dispositif de relais qui sont stockées par la station de base, ou obtenir, par la station de base, l'identificateur du dispositif de relais à partir du premier message de gestion des ressources radio.

9. Procédé selon l'une quelconque des revendications 1 à 8, dans lequel :
l'identificateur du dispositif distant est compris dans le message de strate sans accès du dispositif distant, et/ou l'identificateur du dispositif distant est compris dans le message de dispositif initial.

10. Procédé selon l'une quelconque des revendications 1 à 9, le procédé comprenant en outre :
établir, par la station de base, une relation de correspondance entre le dispositif distant et le dispositif de relais sur la base du message de demande d'établissement de contexte initial.

11. Procédé selon l'une quelconque des revendications 1 à 10, lorsque l'entité de gestion de la mobilité du dispositif distant génère une clé utilisée pour protéger la sécurité des communications entre le dispositif distant et le dispositif de relais, le procédé comprenant en outre :
recevoir, par la station de base, la clé utilisée pour protéger la sécurité des communications entre le dispositif distant et le dispositif de relais et un paramètre de sécurité requis pour générer la clé qui sont envoyés par une entité de gestion de la mobilité du dispositif de relais.

12. Système d'ordinateur comprenant au moins quatre processeurs couplés à un support de stockage non transitoire stockant des instructions exécutables, dans lequel les instructions exécutables, lorsqu'elles sont exécutées par les processeurs, amènent les processeurs à exécuter le procédé selon l'une quelconque des revendications 1 à 11.

13. Support de stockage lisible par ordinateur comprenant des instructions qui, lorsqu'elles sont exécutées par un système d'ordinateur, amènent le système d'ordinateur à exécuter le procédé selon l'une quelconque des revendications 1 à 11.
